(19) Europäisches Patentamt
European Patent Office
Office européen des brevets

(11) **EP 3 384 210 B1**

(12) **EUROPEAN PATENT SPECIFICATION**

(45) Date of publication and mention
of the grant of the patent:
**15.07.2020 Bulletin 2020/29**

(21) Application number: **16828802.5**

(22) Date of filing: **28.11.2016**

(51) Int Cl.:
**F24S 23/77** *(2018.01)*    **F24S 30/40** *(2018.01)*

(86) International application number:
**PCT/TR2016/050462**

(87) International publication number:
**WO 2017/095349 (08.06.2017 Gazette 2017/23)**

(54) **SYSTEM FOR HEATING AND ILLUMINATING SPACES IN A BUILDING**

SYSTEM ZUR ERWÄRMUNG UND BELEUCHTUNG VON RÄUMEN IN EINEM GEBÄUDE

SYSTÈME DE CHAUFFAGE ET D'ÉCLAIRAGE D'ESPACES DANS UN BÂTIMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2015 TR 201515122**

(43) Date of publication of application:
**10.10.2018 Bulletin 2018/41**

(73) Proprietor: **Bazoglu, Sungu
Ankara (TR)**

(72) Inventor: **Bazoglu, Sungu
Ankara (TR)**

(74) Representative: **Kayahan, Senem et al
Yalciner Patent and Consulting Ltd.
Tunus Cad. No: 85/3-4
Kavaklidere Cankaya
06680 Ankara (TR)**

(56) References cited:
**EP-A2- 0 251 162          WO-A1-2013/168944
WO-A2-2009/028868     JP-A- 2000 113 703
KR-A- 20040 019 444     KR-A- 20090 003 965
US-A- 1 632 254             US-A- 3 656 844
US-A1- 2004 165 290**

**Description**

## 1. TECHNICAL FIELD OF THE INVENTION:

The technical field of the invention is "solar energy=sun beams", and more specifically it is the additional heating, illuminating and domestic water heating via reflecting the sun beams to indoor spaces and devices through the facades of the buildings via "reflection" panels, providing the energy required by panels that catch and reflect sun beams from solar panels, without energy input to the buildings.

In the market, extension tubes which are made of reflective materials and placed on roofs, also known as "solar tube" or "sun tunnels" are used for reflecting the sun beams to indoor spaces.

Document EP251162 describes a natural lighting apparatus comprising a light introducing unit for introducing sun rays vertically and a light reflecting unit located below the light introducing unit.

Document US1632254 describes a window-lighting system to direct the sunlight into windows between narrow walls of large houses by using a first system of mirrors adapted to deflect the sun rays vertically down the shaft between building walls and a second system or mirrors adapted to distribute and to deflect the vertical beam of light into windows facing the shaft.

## 2. OBJECTS OF THE INVENTION:

The object of the invention is to contribute to the economy of the society and the country by saving approximately 10% additional costs spent for heating and illuminating spaces which receive no or little sun light, through indirectly reflecting sun beams inside the buildings via the doors and windows in all facades of buildings and thus heating and illuminating them.

Another object is the place the solar collector = solar water heater on the floor to prevent visual pollution by reflecting sun beams from the root and to avoid flooding in the storeys stemming from the failure of the devices on the roof.

## 3. DESCRIPTION OF THE DRAWINGS:

Figure 1.1      : Section showing the angles of the parts (p) of the panels (pn) constituting the conic stationary eaves solar reflector (ksesr) which reflects the sun beams (s) arriving at various elevation angles (alpha) during the day.

Figure 1.2      : Section showing the vertical reflection (sv) of the arriving sun beams (s) through the "stationary eaves solar reflector - conic stationary eaves reflector - active eaves solar reflector" (sesr-ksesr-asesr) and the reflection (sh) of these beams to indoor spaces through the windows via the "storey reflectors" in multi-storey buildings.

Figure 1.3      : Section showing how the reflection process in Figure 1.2 occurs in a single storey building.

Figure 2.1;2.2;2.3;2.4:  Section showing the different horizontal angles of the parts (p) for the vertical reflection of the sun beams arriving at four different elevation angles (alpha 1-2-3-4) in Figure 1.1.

Figure 2.5      : Section showing the passage of the sun beam (s) arriving vertically inside the transparent part (p).

Figure 3       : Alternative plans (3 in number) of the "conic stationary eaves solar reflectors" (ksesr) arranged on the building eaves

Figure 4.1      : Section showing a panel (pn) consisting of four parts (p1, p2, p3, p4).

Figure 4.2      : Section showing the arrangement of two panels (pn1, pn2) on top of each other with certain distances and with the refraction points (k1, k2, k3) displaced.

Figure 4.3      : Section showing the vertical reflection of sun beams (s) arriving at three different (alpha) angles with the refraction points (k1, k2) by a panel (pn) consisting of three parts (p1, p2, p3).

Figure 4.4 : Frontal view and plan of a panel (pn) consisting of three parts (p1, p2, p3), and the frontal-side view and plan of the "stationary eaves solar reflector" (sesr) formed by combining the panels (pn).

Figure 5 : Plan and section of a "conic stationary eaves solar reflector" (ksesr), the panels (pn) of which are arranged separately with each one higher than the other.

Figure 6.1 : Plan of the conic stationary eaves solar reflector (ksesr-BC) obtained by placing the stationary solar eaves collector (ksesr-C) of Figure 6.2 over the conic stationary solar eaves collector (ksesr-B) of Figure 6.3 in a certain distance (ar)

Figure 6.2 : Plan of the stationary eaves solar reflector (ksesr-C) obtained by combining the 9 rectangular and trapezoid panels (pn) (pn1, pn2, pn3....pn9) side by side so as to direct them radially towards the center point.

Figure 6.3 : Plan of the stationary eaves solar reflector (ksesr-B) obtained by combining the 9 trapezoid panels (pn) (pn1, pn2, pn3....pn9) side by side so as to direct them radially towards the center point.

Figure 6.4 : Section and view of the stationary eaves solar reflector (ksesr-BC) consisting of ksesr-B and ksesr-C shown in Figure 6.1

Figure 6.5 : View showing the panels (pn) arranged in a partially overlapping manner to be placed side by side in order to obtain a larger area, so that the stationary eaves solar reflectors can reflect more light

Figure 6.6 : Plan and section of the single-axis rotation alternative of the "active panel eaves solar reflector" (apesr), consisting of panels (pn) at the central point (m).

Figure 7.1 : Section of the conic stationary eaves solar collector (ksesr-E), consisting of 11 trapezoids and the axes of which converge at the center (m), arranged on the eaves of a building.

Figure 7.2 : Detailed plan of the conic stationary eaves solar collector (ksesr-E), consisting of 11 trapezoids and the axes of which converge at the center (m).

Figure 7.3 : Plan of the conic shaped solar reflector (ksesr-B), arranged on the eaves, consisting of 9 trapezoid panels and the panel axes of which converge at the center point (m) as can be seen in Figure 6.3

Figure 7.4 : Plan of the conic shaped solar reflector (ksesr-F), arranged on the eaves, consisting of 7 trapezoid panels and the panel axes of which converge at the center point (m) as can be seen in Figure 6.3

Figure 7.5 : Top view of the conic stationary eaves solar reflector (ksesr-E) obtained by arranging 11 trapezoid panels so that their axes converge at the center point (m)

Figure 7.6 : Top view of the conic shaped solar reflector (ksesr-B), arranged on the eaves, consisting of 9 trapezoid panels and the panel axes of which converge at the center point (m) as can be seen in Figure 6.3

Figure 7.7 : Top view of the conic stationary eaves solar reflector (ksesr-B) obtained by arranging 7 trapezoid panels so that their axes converge at the center point (m)

Figure 8.1 : Section showing the reflection of the sun beams (s) vertically and at various angles via the "active eaves solar reflector" (aesr) in multi-storey buildings and the solution when no reflection is desired.

Figure 8.2 : Section showing the increase in the size (surface areas) of the storey reflectors (sr) from the top storeys to the lower ones

Figure 8.3 : View showing the reflection of the sun beams (s) to indoor spaces in two separate batches via (aesr) and (aesrd) in 10-12 storey buildings.

Figure 8.4 : Section showing how sun beams (s) are reflected to indoor spaces in case there is eaves protrusion in the building.

Figure 9.1 : Section showing the vertical transfer of the sun beams (s) arriving at three active eaves solar reflectors (arsr1, arsr2, arsr3) arranged at the front of the building eaves to srsr1, srsr2 and srsr3, horizontal transfer of the sun beams from these reflectors to sesr1, sesr2 and sesr3, vertical reflection of the sun beams via these stationary eaves reflectors and the reflection of the vertically traveling sun beams to indoor spaces of the building via the storey reflectors (sr) arranged on each storey.

Figure 9.2 : Section showing the horizontal transfer of the sun beams reflected to the stationary root reflectors on the roof via two active roof solar reflectors arranged on the building roof to the stationary eaves solar reflectors (sesr1, sesr2) by the srsr1 and srsr2; the reflection of the sun beams vertically reflected by sesr1 and sesr2 to the indoor spaces via the storey reflectors (sr) in front of the windows of the top storeys in a multi storey building; and the reflection of the sun beams vertically reflected by sesr1 to the middle and lower storeys in the multi-storey building

Figure 10 : Section showing the reflection of the sun beams (s) to indoor spaces in the middle and lower storeys of a multi-storey building via two moving solar reflectors (uasr1, uasr2) which are placed away from the building.

Figure 11.1 : Plan and projection showing the reflection of the sun beams (sd) arriving at an elevation angle (alpha) from the east in the morning to the reflector (aesrs)

Figure 11.2 : Plan view showing the reflection of the sun beams (sg) arriving from the south in the afternoon to the reflector (aesro)

Figure 11.3 : Plan and projection showing the reflection of the sun beams (sb) arriving at an elevation angle (alpha) from the west in the evening to the reflector (aesra); and the projection of the reflector in case of the sun beams (sg) arriving at said reflector from the south

Figure 11.4 : Plan view showing the positions of the moving eaves solar reflector in cases where the sun beams come from the east (sd), the south (sg) and the west (sb) at the center point (m)

Figure 11.5 : Section view showing the moving eaves solar reflector (aesrs) in case the sun beams (s4=sd) arrive from the east in the morning at an angle of 52°.

Figure 12 : Plan, view, section and projection of the reflector (arsrs) arranged at the building eaves in case the sun beams (sd) arriving from the east in the morning at an elevation angle of alpha1 = 15° are reflected.

Figure 13 : Plan and section showing the reflection of sun beams (sh) to indoor spaces via the "storey reflectors" (sr) arranged in front of the windows.

Figure 14.1-2-3 : Roof plan showing the relation between the active solar reflector (aesrs-aesro-aesra) positions and the building facade line in the event that the northern facade of the building is not perpendicular to the straight line perpendicular to the north pole and that the sun beams (s) arrive in the morning-afternoon-evening.

Figure 14.4 : Sections showing the various positioning alternatives of the photovoltaic battery on (aesr)

Figure 15.1 : Section showing the photovoltaic battery placed at the back of a solar reflector consisting of two connected materials such as glass, etc.

Figure 15.2-3-5 : Section showing the alternatives illustrating that the (aesr, sesr, arsr, srsr) consist of a various number of transparent layers (kt).

Figure 15.4 : View of the glass where the sun beams are reflected in the hotspot.

15.6-7 : Plan and section showing the alternatives illustrating that a (aesr, sesr, arsr, srsr) consists of multiple transparent materials such as glass, etc., which are connected side by side or on top of each other.

Figure 16.1 : Section showing the decline in light density as light passes through a large number of translucent materials,

Figure 16.2 : Plan, section and view of the "three" (aesro-3) arranged on the eaves in the "afternoon" position,

Figure 16.3 : Roof plan and 0.00 level section of the set for reflecting the sun beams (s4) to indoor spaces via the (aesro) arranged on the roof in case the sun beams arrive from the south; reflective panel (srsr) arranged under the inclined roof plane and the reflective panel (sesr) arranged on the eaves

Figure 16.4 : Section showing the (aesrs), (srsr), "double" (sesr) and (sr) arranged on the roof in the "morning" position,

Figure 17:1 : Arrangement of the stationary roof solar reflector (srsr) on the inclined roof.

Figure 17.2 : Plan and section showing the reflection of the sun beams to indoor spaces via the (aesrs)s arranged on the eaves of the northern facade of the building, in case the sun beams (sd) arrive from the east in the morning,

Figure 18.1 : Plan showing the locations and positions of the (srsr)s and (arsr)s positioned to face the east-north-west facades on the building roof and the (sesr)s and (sr)s arranged on the building facades, in case the sun beams (sd) arrive from the east,

Figure 18.2 : Plan showing the locations and positions of the (aesro)s arranged on the eaves of the east-north-west facades of the building, in case the sun beams (sg) arrive from the south in the afternoon,

Figure 19.1 : Plan showing the locations and positions of the (aesra)s arranged on the eaves of all facades of the building except for the south, in case the sun beams (sb) arrive from the west in the evening,

Figure 19.2 : Plan showing the locations and positions of the (aesrs)s arranged on the eaves of north facade of the building, in case the sun beams (sd) arrive from the east in the morning,

Figure 20.1 : Plan showing the locations and positions of the (aesro)s arranged on the eaves of the north and west facades of the building, in case the sun beams (sg) arrive from the south in the afternoon,

Figure 20.2 : Plan showing the locations and positions of the (aesra)s arranged on the eaves of the north and east facades of the building, in case the sun beams (sb) arrive from the west in the evening,

Figure 21.1 : Perspective view showing in three dimensions how the sun beams (s) are reflected to indoor spaces during the day from the windows of the storeys in the upper and lower sections of 12-15 storey buildings.

Figure 21.2 : Perspective view showing in three dimensions how the sun beams (s) are reflected to indoor spaces during the day in three batches from the windows of the storeys in the upper, middle and lower sections of 15-18 storey buildings.

Figure 22.1      : Perspective view showing how the sun beams (sd) arriving from the east are caught with the reflector (arsr1) arranged on the roof and reflected to indoor spaces through the windows in the facades of a multi-storey building facing north, south, east and west.

Figure 22.2      : Perspective view showing how the sun beams (sb) arriving from the west are caught with the reflector (aesra) arranged on the eaves and reflected to indoor spaces through the windows in the facades of a multi-storey building facing north, south, east and west.

Figure 22.3      : Perspective view showing the vertical projection and three dimensional actual situation of the "solar reflection path" (syy) between the start of the reflection action by the sun beam (sd) arriving from the east and the end of the reflection action by the sun beam (sb) arriving from the west.

Figure 23      : Section showing that the remote reflection via (ur1) and (ur2) is angled, not vertical, as opposed to the method where the sun beams are partially and remotely reflected to the building as shown in Figure 10.

## 4. DESCRIPTION OF THE REFERENCES IN THE FIGURES:

(pna, pnb,...) : Panels radially arranged towards a certain center (m) in order to form the conic stationary eaves solar reflector (ksesr)

(pna1, pnb1,...) : Panels symmetrical, in the A-A axis, to the panels (pna, pnb,...) radially arranged towards a center (m) in order to form the conic stationary eaves solar reflector (ksesr)

(p1, p2, ....) : parts which form the reflector panel (pn) and each of which have different vertical angles

(p) : Each of the multitude of planes which form a "panel" (pn) by being combined on top of each other at various angels are called "parts."

(pn) : Each of the units forming the "conic stationary eaves solar reflector" (ksesr) in the shape of a reflective panel, geodesic dome, space frame

(pn1, pn2, ...) : Reflective panels positioned at various angles

(pn-top) : top layer of the dual layer conic stationary eaves reflector (ksesr)

(pn-bottom) : bottom layer of the dual layer conic stationary eaves reflector (ksesr)

(alpha) : Perspective view of the elevation angle of the sun beam arriving at Earth.

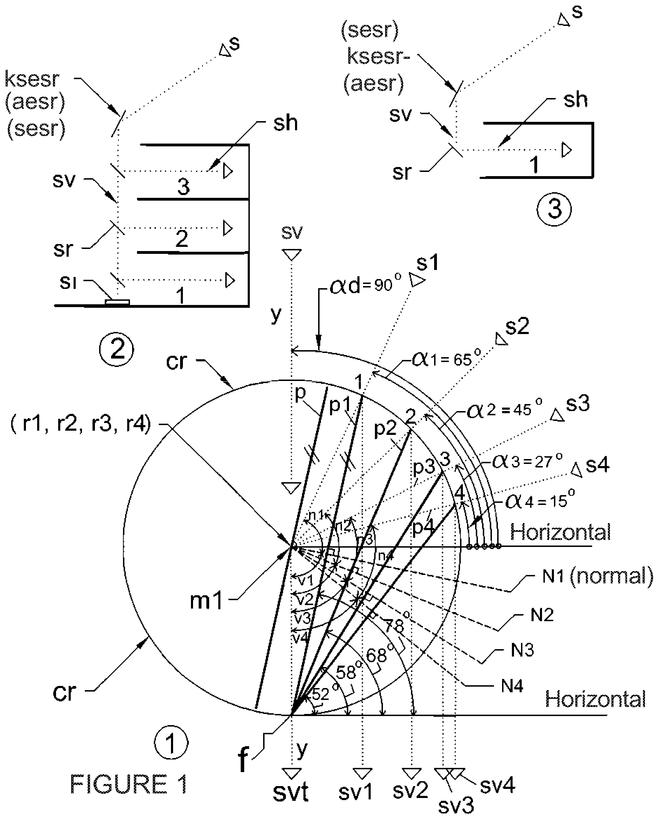

(alpha1, 2, 3, 4): Sun beam elevation angles arriving at 65, 45, 27, 15 degrees to the reflective stationary panel parts (p) with reference numbers p1 ....pn or the moving solar reflectors (Figure 1-4, 7, 11, 12, 16, 17)

(alpha d) : Sun beam elevation angle arriving horizontally at 90 degrees

(beta) : Solar azimuth angle

(delta y) : The angles of the parts (p1, p2 .....pn) to the horizon

(a) : reflection of the arriving sun beam to the panel

(ad) : arrow showing the top point where the sun beam arriving from the east is reflected on the panel

(ab) : arrow showing the top point where the sun beam arriving from the west is reflected on the panel

(ag) : arrow showing the top point where the sun beam arriving from the south is reflected on the panel

(s) : Sun beam arriving at the Earth at a small oblique elevation angle (alpha) in the morning-evening with changes according to the season, and the same beam arriving at the Earth at 90 degrees or similar elevation angle (alpha) in the afternoon with changes according to the season,

(si) : water heater

(s1) : Sun beam arriving to the horizon with a alpha=65 degree angle

(s2) : Sun beam arriving to the horizon with a alpha=45 degree angle

(s3) : Sun beam arriving to the horizon with a alpha=27 degree angle

(s4) : Sun beam arriving to the horizon with a alpha=15 degree angle

(sd) : Sun beam arriving from the east in the morning

(sb) : Sun beam arriving from the west in the evening

(sg) : Sun beam arriving from the south in the afternoon

(ss) : Sun beam arriving in the morning

(so) : Sun beam arriving in the afternoon

(sa) : Sun beam arriving in the evening

(k) : Refraction edge (k1, k2, k3.... kn) defined by the refraction point

(c) : Angle of the path followed by the sun beam since it starts reflecting to the panels from the east until it stops reflecting to the panels in the west

(c1) : Half of the (c) angle

(cE) : Angle between the beginning and the end of the sun beam reflection in the reflector (ksesr-E)

(cB) : Angle between the beginning and the end of the sun beam reflection in the reflector (ksesr-B)

(cF) : Angle between the beginning and the end of the sun beam reflection in the reflector (ksesr-F)

(a-a) : Axis going over the panel perpendicularly to the axis (x1-x1) in the center (m) of the panel (aesrs)

(z-z) : Vertical axis going through the center point (m)

(m) : Vertical z-z axis over which the panel reflecting the sun beams (s) rotates; center point towards which the axes of panels (pn) forming the conic stationary eaves solar reflectors (ksesr) are radially directed

(m1) : center point of the circle (cr)

(x1 axis) : Position of the rotation axis which goes through the point (m) of the reflective panel when the sun beam reflects on the panel from the "east" for the first time, and which is horizontal to the panel

(x2 axis) : Position of the rotation axis which goes through the point (m) of the panel when the sun beam reflects on the panel from the "south", and which is horizontal to the panel

(x3 axis) : Position of the rotation axis which goes through the point (m) of the panel when the sun beam reflects on the panel from the "west" for the last time, and which is horizontal to the panel

(syy) : Beam reflection path followed by the sun from the east to the west

(syb) : Beginning of the reflection in the morning

(ays) : End of the reflection in the evening

(sesr) : stationary eaves solar reflector (planar)

(ksesr) : conic stationary eaves solar reflector

(aesr) : "active (moving) eaves solar reflector" which is positioned on the upper line of the windows in the eaves and which reflects the sun beams to the south

(aesr-3; aesro-3): three layered active eaves solar reflector which has three layers and which is in the afternoon position

(aesrd) : "active eaves solar reflector" which is positioned on the upper line of the "filled" wall between the windows in the eaves and which reflects the sun beams to the south

(aesrs) : "morning" position of the "active (moving) solar reflector" which is positioned on the upper line of the windows in the eaves and which reflects the sun beams to the south

(aesro) : "afternoon" position of the "active (moving) solar reflector" which is positioned on the upper line of the windows in the eaves and which reflects the sun beams to the south

(aesra) : "evening" position of the "active (moving) solar reflector" which is positioned on the upper line of the windows in the eaves and which reflects the sun beams to the south

(apesr) : panel with a rectangular, etc. shape, which follows the sun by horizontally rotating around the single vertical axis in the center point (m) and which is refracted in certain points (k)

(arsr1) : active roof solar reflector which is utilized for reflecting the sun beams to the indoor spaces through the windows in the middle and/or lower storeys of the building, and which is located on the roof, at the position closest to the eaves

(arsr2) : active (moving) solar reflector which is utilized for reflecting the sun beams to the indoor spaces through the windows in the upper and/or middle storeys of the building, and which is located on the roof, behind (ascrr1)

(arsr3) : active (moving) solar reflector which is utilized for reflecting the sun beams to the indoor spaces through the windows in the upper storeys of the building, and which is located on the roof, behind (arsr2)

(srsr) : stationary roof solar reflector

(srsr1) : stationary roof solar reflector which horizontally reflects the sun beam (s) vertically reflected from (arsr1)

(srsr2) : stationary roof solar reflector which horizontally reflects the sun beam (s) vertically reflected from (arsr2)

(srsr3) : stationary roof solar reflector which horizontally reflects the sun beam (s) vertically reflected from (arsr3)

(sesr) : stationary eaves solar reflector

(sesr1) : stationary eaves solar reflector vertically reflecting the sun beams coming from the reflector (rsr1) which is arranged on the roof

(sesr2) : stationary eaves solar reflector vertically reflecting the sun beams coming from the reflector (rsr2) which is arranged on the roof

(sesr3) : stationary eaves solar reflector vertically reflecting the sun beams coming from the reflector (rsr3) which is arranged on the roof

(prla, pr2a) : "parapet reflectors" which are arranged on the facade at the line of the parapet and which direct the vertically arriving sun beam (sv) to the horizontal direction

(pr1, pr2) : "parapet reflectors" which reflect the sun beams (sh) arriving from horizontally from the parapet reflectors (prla, pr2a) to a vertical direction

(ksesr) : conic-shaped stationary eaves solar reflector

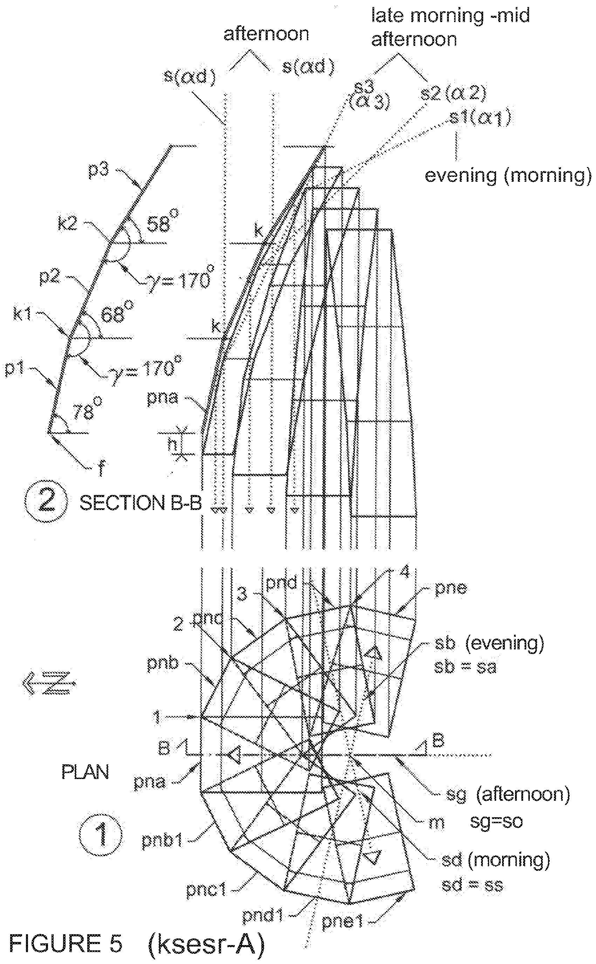

(ksesr-A) : conic shaped stationary solar reflector which is arranged on the eaves and which consists of 9 rectangular panels with a difference of height (h) among them, and the panels of which have a symmetrical height (y) among them, as shown in the section and plan in Figure 5.2

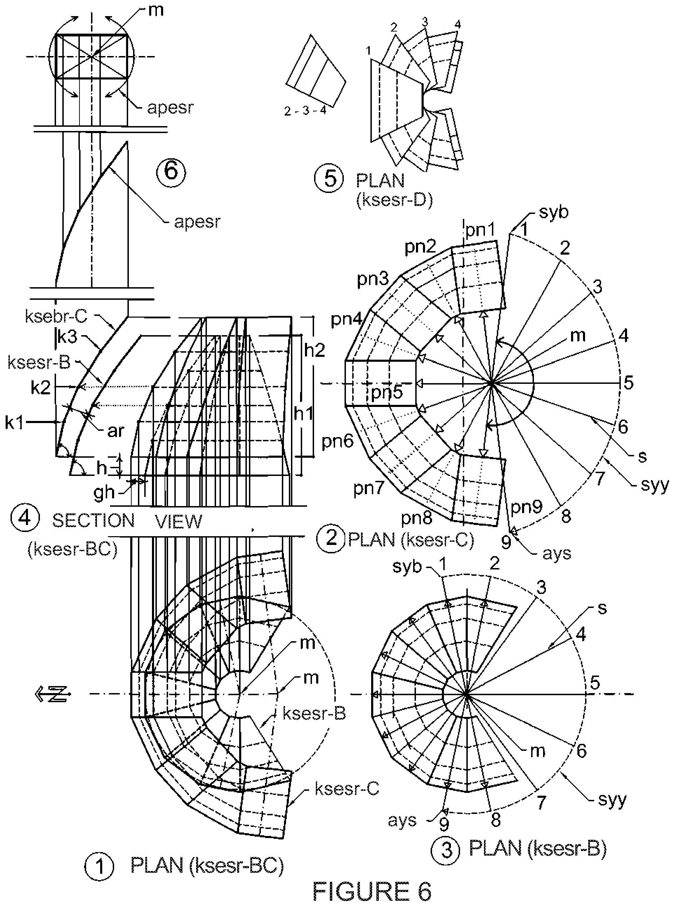

(ksesr-B) : conic shaped stationary solar reflector, arranged on the eaves, consisting of 9 trapezoid panels and the panel axes of which converge at the center point (m) as can be seen in the plan in Figure 6.3

(ksesr-C) : conic shaped conic stationary solar reflector arranged on the eaves, which is obtained by placing one trapezoid panel between each of the 5 rectangular panels and arranging all panels in a manner that their axes converge at the center point (m) as can be seen in the plan in Figure 6.2

(ksesr-D) : conic shaped conic stationary solar reflector arranged on the eaves, which is obtained by placing the 9 trapezoid panels in a way that they partially overlap with each other and that each of their aces are radially arranged so as to converge at the center point (m) as can be seen in the plan in Figure 6.5

(ksesr-BC) : dual layered conic stationary eaves solar reflector obtained by placing the stationary solar reflector (ksser-C) over the conic solar reflector (ksser-B) in the distance (a) as can be seen in the plan in Figure 6.1.

(ksesr-E) : conic stationary eaves solar reflector obtained by arranging 11 trapezoid panels so that their axes converge at the center point (m)

(ksesr-F) : conic stationary eaves solar reflector obtained by arranging 7 trapezoid panels so that their axes converge at the center point (m)

(A) : upper storeys of the multi-storey building

(M) : middle storeys of the multi-storey building

(B) : lower storeys of the multi-storey building

(sv) : vertically reflected sun beams

(sv1, sv2, sv3, sv4) : vertical reflections of the sun beams arriving at the horizon at (alpha1=65, alpha2=45, alpha3=26, alpha4=15) degrees

(svt) :convergence of the sun beams arriving with (s1, s2, s3, s4) at the point (m) and vertical reflection thereof as a single beam

(sr) : translucent (transparent) storey reflector which reflects the beams to indoor spaces

(srt) : reflector arranged to reflect the beams to the ceiling of the indoor space

(srz) : reflector arranged to reflect the beams to the floor of the indoor space

(srv) : reflector configuration when light reflection to indoor space is not desired

(er) : reflectors under the protruded eaves

(st) : sun beams directed to the ceiling by changing the 45 degree angle of the storey reflectors (sr),

(sz) : sun beams directed to the floor by changing the 45 degree angle of the storey reflectors (sr),

(lsr) : last storey reflector

(sh) : horizontally reflected sun beam

(asr) : active (moving) solar reflector

(uasr1, uasr2) : "remote active (moving) solar reflectors" positioned away from the building, which enable the sun beams to be reflected to indoor spaces through the windows of the middle and lower storeys of the multi-storey building

(ur1, ur2) : remote stationary solar reflectors horizontally rotating the sun beams (sv) arriving vertically from the remote active solar reflectors (uar1, uasr2) and reflecting said beams to the facade of the building vertically or at an angle

(fgp) : photovoltaic solar battery

(kt1) : first or single transparent (translucent) layer of the panel forming the solar reflector (kt2) : second transparent (translucent) layer of the panel forming the solar reflector

(kt3) : second transparent or mirror-like layer of the panel forming the solar reflector (sv-1k) : sun beam reflected vertically from the first layer (kt1) of the reflective panel

(sv-2k) : sun beam reflected vertically from the second layer (kt2) of the reflective panel

(sv-3k) : sun beam reflected vertically from the third layer (kt3) of the reflective panel

(hs) : the area in the middle of the reflective panel where the sun beam is the most intense (hotspot)

(hs-top) : the area in the top glass of the combined dual glassed reflector panel where the sun beam is the most intense (hotspot)

(hs-bottom) : the area in the bottom glass of the combined dual glassed reflector panel where the sun beam is the most intense (hotspot)

(n) : vertical distances between the refraction points (k1, k2,.....kn)

(h): : elevation difference between two panels (pn)

(gh) : horizontal distance between two panels

(ar) : vertical distance between panels in a dual panel (pn) system

(N1, N2, N3, N4): bisectors, normals of the angles between the sun beam lines (s1, s2, s3, s4) coming to the point (m1 = r1, r2, r3, r4), and the line of the "sum of sun beams vertically reflected" (svt) from the point (m1)

(v1, v2.v3.v4) : angles between the vertically reflected beam (sv) and the normals (N1, N2, N3, N4) of the sun beams (s1, s2, s3, s4) arriving to the horizon at solar elevation angles (alpha 1, 2, 3, 4) when said beams are vertically reflected from the points (r1, r2, r3, r4)

(r1, r3, r3, r4) : the points where the sun beams (s1, s2, s3, s4) arriving to the horizon at solar elevation angles (alpha1=65; alpha2=45; alpha3=27; alpha4= 15 degrees) are reflected by their "parts" (p1, p2, p3, p4) in the vertical direction

(delta y1) = (g1+alpha1) : angle of the reflective part (p1) to the horizon

(delta y2) = (g2+alpha2) : angle of the reflective part (p2) to the horizon

(delta y3) = (g3+alpha3) : angle of the reflective part (p3) to the horizon

(delta y4) = (g4+alpha4) : angle of the reflective part (p4) to the horizon

(g1, g2, g3, g4) : Angles between the sun beams hitting the reflective parts (p1, p2, p3, p4) from the points (r1, r2, r3, r4) and the reflective parts (p1, p2, p3, p4)

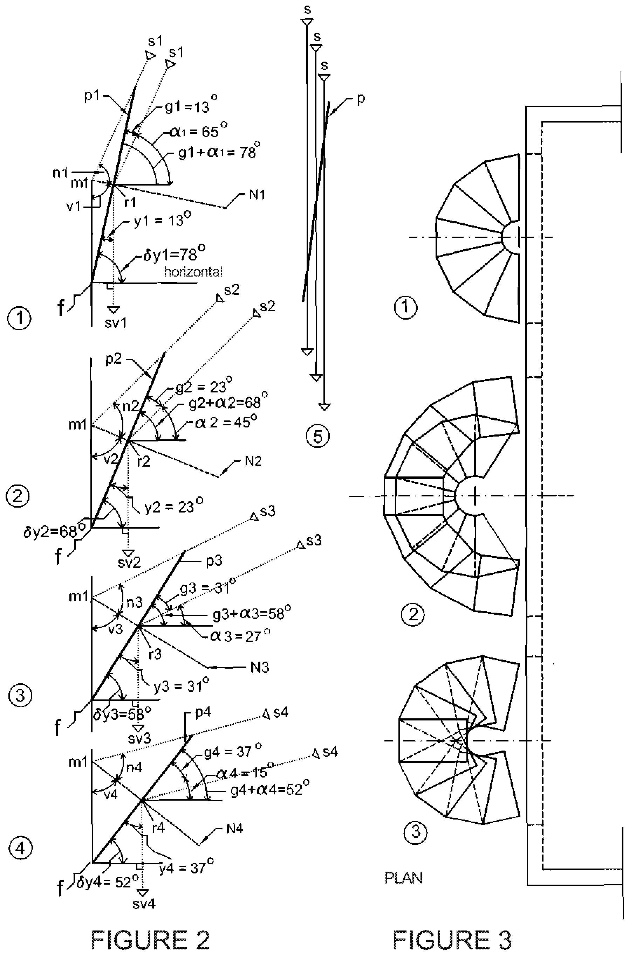

(m1 = r1, r2, r3, r4) : point shown in Figure 1.1 by superimposing the "reflection" points (r1, r2, r3, r4) shown separately in Figure 2.

(n1, n2, n3, n4) : incidence angle between the sun beams (s1, s2, s3, s4) arriving to the horizon at solar elevation angles (alpha1=65; alpha2=45; alpha3=27; alpha4= 15 degrees) and the normals (N1, N2, N3, N4) of said sun beams

(f) : point where the sun beam (sv) horizontally descending with an angle of alpha= 90 degrees from the center point (m) of the circle (cr) intersects the circle (cr)

(three) : intensity of the sun beam horizontally reflected by the three layered "active eaves solar reflector" in the afternoon (aesro)

(one) : sun beam horizontally reflected by the single layered "active eaves solar reflector" in the afternoon (aesro)

(di) : direct

(t) : carrier

## 5. DESCRIPTION OF THE INVENTION:

5.1. HEATING AND ILLUMINATING THE SPACES AND WATER HEATING BY INDIRECTLY REFLECTING THE SUN BEAMS ARRIVING TO VARIOUS SOLAR REFLECTORS (sesr, ksesr, aesr),DIRECTLY OR BY REFLECTION, TO THE INDOOR AREAS OF THE BUILDING THROUGH THE DOORS AND WINDOWS IN ALL FACADES OF THE BUILDING VIA THE REFLECTORS ARRANGED IN FRONT OF THE STOREY WINDOWS

The main feature of the system is that the sun beams (s) which arrive at the buildings with a certain alpha solar elevation angle in the morning and a certain solar elevation angle in the evening between said period, are reflected vertically along the building facade via stationary (sesr) or moving (aesr) solar reflectors arranged on the eaves with an angle of 45 degrees on all facades of the building (specifically north; east and west, if so desired), and following that, said beams reflected through the doors and windows into the indoor spaces via the storey reflectors (sr) which allows light to pass through or reflect it and which are positioned in front of the windows in all storeys at 45 degrees or variable angles. Therefore, energy saving is enabled by heating and illuminating the spaces which do not receive direct sun light, by way of reflecting the sun beams (sh) to indoor spaces through each window. Another feature is that the hot water is obtained thanks to the sun beams reflected on the heater placed on the floor. Furthermore, in addition to the spaces in the facades facing south or other directions directly receiving sunlight, additional savings become possible thanks to the reflection of sun beams throughout the day.
There are two methods in the system:

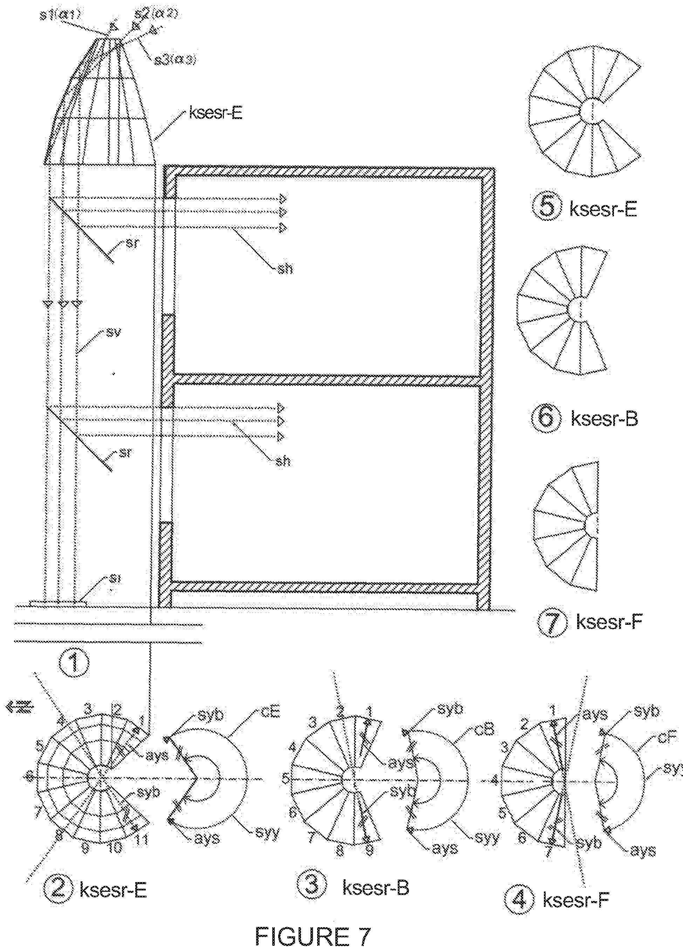

- IN THE FIRST METHOD, THE CONIC SOLAR REFLECTOR (ksesr) IS STATIONARY (illustrated in Figures 1-7): According to the first method, which is illustrated in detail in Figure 7, the solar reflector (ksesr) placed on the eaves of the building is completely stationary and it does not follow the sun. The sun beams (s) arriving at the solar reflector called "conic stationary eaves solar reflector" at various angles throughout the day, arrive at the parts (p) of the "conic stationary eaves solar reflector" which is arranged at various angles and said beam is reflected in the vertical direction via a part (p). Vertical reflection of the beam is discontinuous, not constant. The sun beam (sv) which is vertically reflected via the conic stationary eaves solar reflector is reflected to indoor spaces via the storey reflectors (sr) arranged in front of the windows.

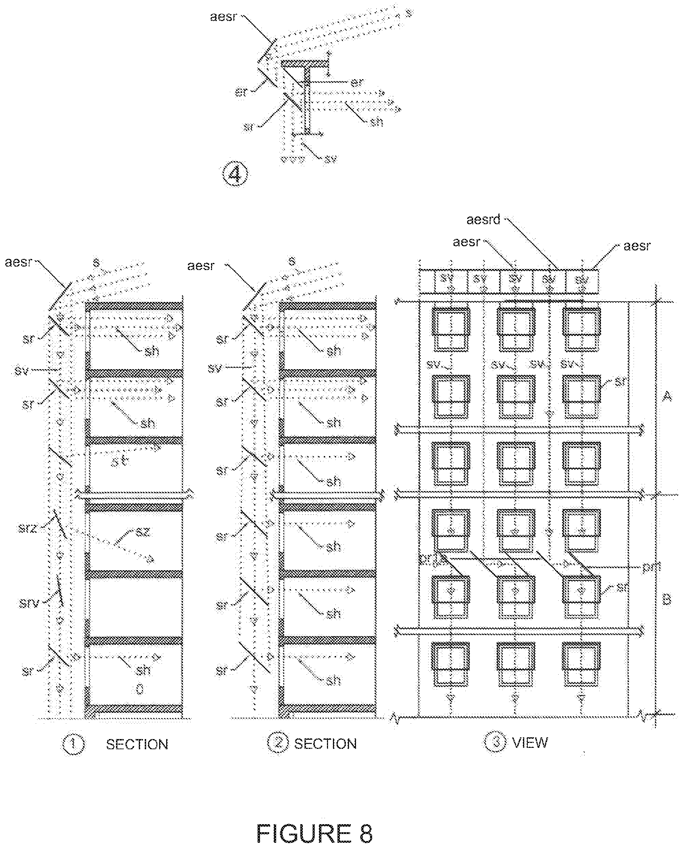

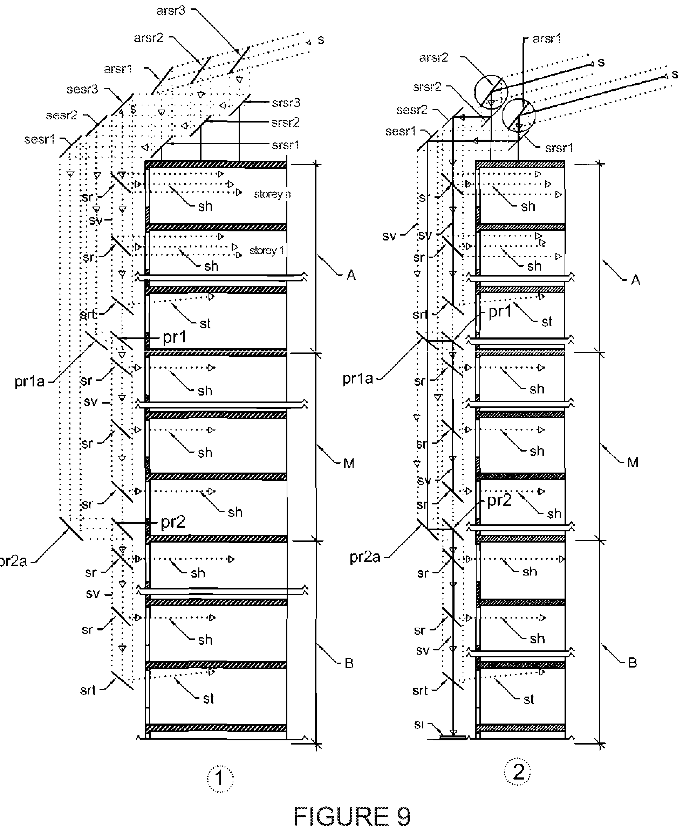

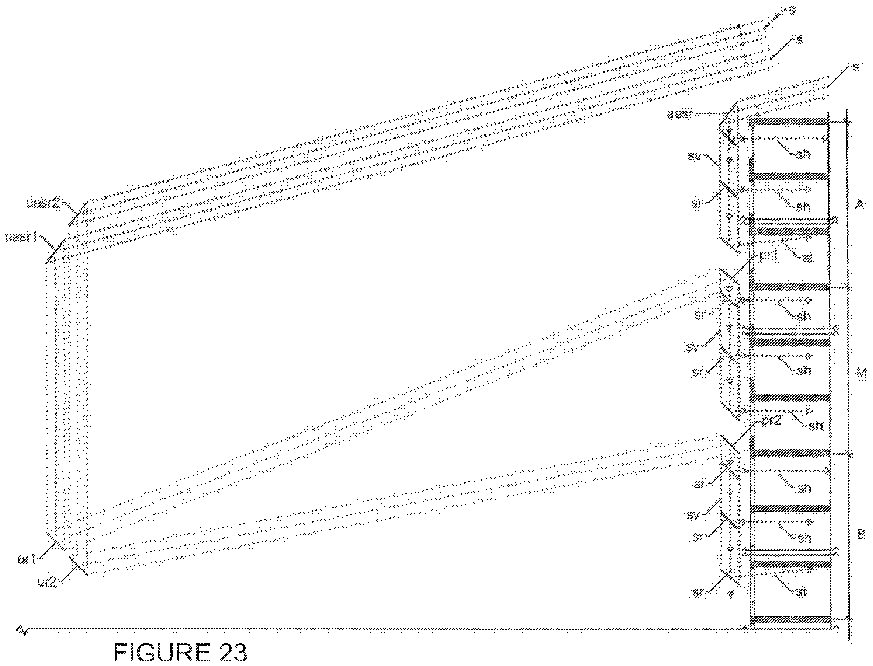

- IN THE SECOND METHOD, THE SOLAR REFLECTORS (aesr and arsr) PLACED ON THE BUILDING EAVES OR THE ROOF ARE MOVING; THEY FOLLOW THE SUN ON TWO AXES (HORIZONTAL AND VERTICAL AXES) (Illustrated in Figure 8 and Figure 23):
According to the second method, which is illustrated in detail in Figures 8, 9 and 10, the solar reflectors (aesr, aesrd) placed on the building eaves are moving and they follow the sun on two axes (horizontal and vertical). In case the solar reflectors (aesr) which follow the sun beam on two axes are arranged as "active roof solar reflectors" (arsr) on the roof and behind the eaves (Figures 9.1, 9.2), the reflectors (srsr) on the roof where the beams are reflected upon them are stationary.

There are two types of solar reflectors in the system:

A. HEATING AND ILLUMINATING THE SPACES VIA INDIRECTLY REFLECTING SUN BEAMS THROUGH THE DOORS AND WINDOWS IN ALL FACADES OF THE BUILDING VIA "CONIC STATIONARY EAVES SOLAR REFLECTORS" (ksesr)

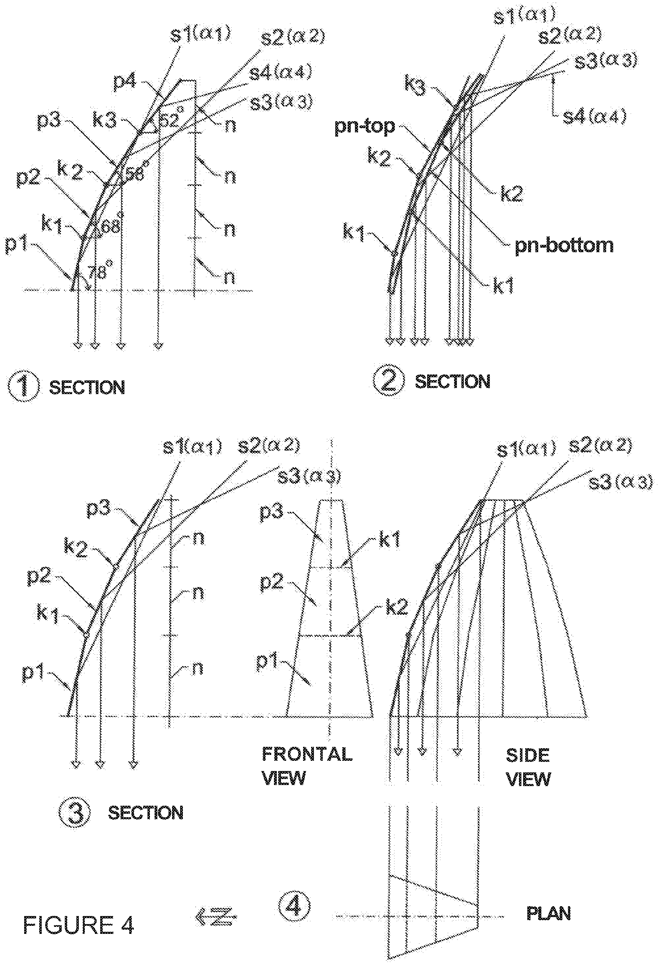

"Conic stationary eaves solar reflector" (ksesr) is obtained by arranging a multitude of panels (pn), which are bent (refracted) at certain points to look like a slice of orange peel, which are placed side by side on an arc of circle (Figure 4, Figure 6, Figure 7). In the "conic stationary eaves solar reflector" (ksesr) system, reflection of the sun beam perpendicular to the floor is discontinuous, not constant. Since the conic surface consists of planes called parts (p) at various angles, when the sun beam is moving from one plane to another, reflection cannot occur during this passage and therefore an interruption is experienced.
The conic stationary eaves reflector (ksesr) is obtained by placing a multitude of panels (pn) shaped approximately like half orange peel slices radially on a virtual ring similar to an arc of circle in a way that the axes thereof converge at the center point (m), and combining said panels (Figures 3-4-5-6-7).
The panels (pn) forming the "conic stationary eaves solar reflector (ksesr) are obtained by bending said panels at certain refraction areas (k) (Figures 4-5-6). The planes between two refraction (k) lines (edges) are called parts (p) (Figures 4-5-6). In the present invention, three and four parts (p) are used alternatively in a panel (pn). The number of parts can be increased; however, the more the number of parts increases, the less will be the vertical reflection period and the beam intensity.
The panels (pn) and the shapes and angled positions of the parts (p) carry out the main task of vertically directing the sun beams coming at various angles via (ksesr) to the floor.
Due to a panel (pn) containing parts (p) at different angles, sun beams (s) arriving at the Earth at different solar elevation angles (alpha) can be transferred in the vertical direction. Thanks to the arrangement of the numerous panels (pn) of the "conic stationary eaves solar reflector" (ksesr) in a way that they are radially directed towards a center, sun beams arriving at the Earth can arrive at the panels (pn), within the limits of certain beginning - end horizontal angle (c) and therefore arrive at to the horizontal edges of the panel parts (p) at steep angles and said beams can be vertically reflected via these parts (p) (Figures 3-4-5-6-7).
Conic stationary eaves solar reflectors (ksesr) comprise,

- n parts (p1, p2, p3, p4..... pn) arranged at various horizontal angles depending on the incidence elevation angles (alpha) of the sun beams, in order to reflect the sun beams (s1, s2, s3, s4...... sn) arriving at various elevation angles (alpha1, alpha2, alpha3, alpha4..... alpha n) towards vertical directions;
- panels (pn) shaped like half orange peel slices, formed by combining the parts (p1, p2, p3, p4.... pn) at their horizontal edges in a stacked manner at various angles;
  and
- may be formed as a quarter-sphere (quarter-dome) so as to allow the sun beams (s1 ......... sn) with various horizontal azimuth angles to arrive perpendicularly to the panels (pn1 ...... pn) and therefore to the horizontal upper-lower edges of n parts (p1 ........pn) forming the panels (pn).

In the example where a panel (pn), including four parts (p) or comprising various number of parts, of the "conic stationary eaves solar reflector" (ksesr), which is arranged to transfer the sun beams which are constantly moving throughout the day to indoor spaces for as long as possible while remaining stationary, consists of 4 parts;

- 78 degrees of horizontal angle for the part (p1),
- 68 degrees of horizontal angle for the part (p2),
- 58 degrees of horizontal angle for the part (p3),
- 52 degrees of horizontal angle for the part (p4),

are the preferred values. However, it is possible that the angles are close the values mentioned above. Furthermore, the number of parts may be more than four. In this case, the horizontal angle of each part is determined accordingly.

Working method:

a. The arriving sun beam (s) first hits the conic stationary eaves solar reflector (ksesr) arranged on the building eaves (Figure 7):
b. Afterwards, the sun beam (sv) which is vertically reflected by the "conic stationary eaves solar reflector" (ksesr) is transferred to indoor spaces at a horizontal angle via the "storey reflectors" (sr) which are arranged in front of the doors and windows at the floors at an angle of 45 degrees or at variable angles (Figure 1.2, Figure 1.3; Figure 7-8-9-10). The sun beam (sv) which is vertically reflected by the "conic stationary eaves solar reflector" (ksesr) can be directed to the interior of the building at different horizontal angles, depending on whether the "storey reflectors" (sr) in front of the doors and windows at the floors can be configured in different manner.

Conic stationary eaves solar reflectors (ksesr) may be in the form of,

- single panels or dual panels (pn) which can be arranged on top of each other at certain spaces, or
- "conic stationary eaves solar reflector A" (ksesr-A) which is obtained by arranging the inclined rectangular panels (pna, pnb, pnc, pnd, pne, pnb1, pnc1, pnd1, pne1), the axes of which converge at the center point (m), with an elevation difference (h) among them and with certain distances among them in a shape similar to a quarter dome, or
- "conic stationary eaves solar reflector B" (ksesr-B) which is obtained by arranging nine inclined trapezoid panels, the axes of which converge at the center point (m), side by side in a fashion similar to a quarter dome, or
- "conic stationary eaves solar reflector C" (ksesr-C) which is obtained by placing an inclined trapezoid panel, the axes of which converge at the center point (m), between two inclined rectangular panels, the axes of which also converge at the center point (m); which comprises panels (pn1, pn2, pn3, pn4, pn5, pn6, pn7, pn8, pn9) and which is similar to a quarter dome, or
- "conic stationary eaves solar reflector B-C" (ksesr B-C) which is obtained by placing the "conic stationary eaves solar reflector C" (ksesr-C), the axes of which converge at the center point (m), over the "conic stationary eaves solar reflector B" (ksesr-B), the axes of which converge at the center point (m), with a certain elevation difference (h) and with a certain space (ar) between them, or
- "conic stationary eaves solar reflector D" (ksesr-D) which is obtained enlarging the rectangular panels to turn them into trapezoids and arranging the upper panel partially over the lower panel

Conic stationary eaves solar reflector (ksesr)

- may be in the form of an "active panel eaves solar reflector" (apesr) comprising a panel unit, which is refracted at certain points to become inclined in order to follow the sun beam (s) in a single direction by rotation on a single vertical axis.

B. HEATING AND ILLUMINATING THE SPACES VIA INDIRECTLY REFLECTING SUN BEAMS THROUGH THE DOORS AND WINDOWS IN ALL FACADES OF THE BUILDING VIA ACTIVE (MOVING) AND STATIONARY EAVES SOLAR REFLECTOR (aesr and sesr) and/or ACTIVE (MOVING) AND STATIONARY ROOF SOLAR REFLECTOR (arsr and srsr)

Regardless of the convergence area of which latitude and longitude the building, the indoor spaces of which are to be additionally heated and illuminated via active (moving) solar reflectors, if present, the building in said location receives sun beams at variable alpha elevation and horizontal azimuth angles specific to that point during 365 days of the year. Therefore, the sun beams (sd) which start the reflection action by arriving to the building in said location from the east at a certain applicable lowest alpha=15 degree elevation angle and the related certain horizontal azimuth angles, which maintain the reflection action by arriving from the south in the afternoon (sg) and reaching the maximum acceptable alpha elevation angle, and stopping the reflection action by arriving from the west in the evening (sb) at a certain applicable lowest alpha=15 degree elevation angle, are always reflected in the vertical direction via the "active (moving) solar reflectors." In order to do this, the "active (moving) solar reflectors" (aesr; arsr) follow the sun on two axes within the limits depending on the calculations specific to the location of the building.
The active roof solar reflector (arsr) arranged on the roof follows the incoming sun beam (s) on a single or dual axis, regardless of where the beam comes from, and vertically reflects said beam to the "stationary roof solar reflector" (srsr). The sun beam (s) vertically arriving at the "stationary roof solar reflector" (srsr) is transferred horizontally to the "stationary eaves solar reflector" (sesr) and the "stationary eaves solar reflector" (sesr) reflects the sun beam (sv) vertically in a way that is perpendicular to the ground (Figures 9.1 and 9.2, Figures 16.2, 16.3, 16.4, Figure 17.1, Figure 21.2 and Figure 22.1).

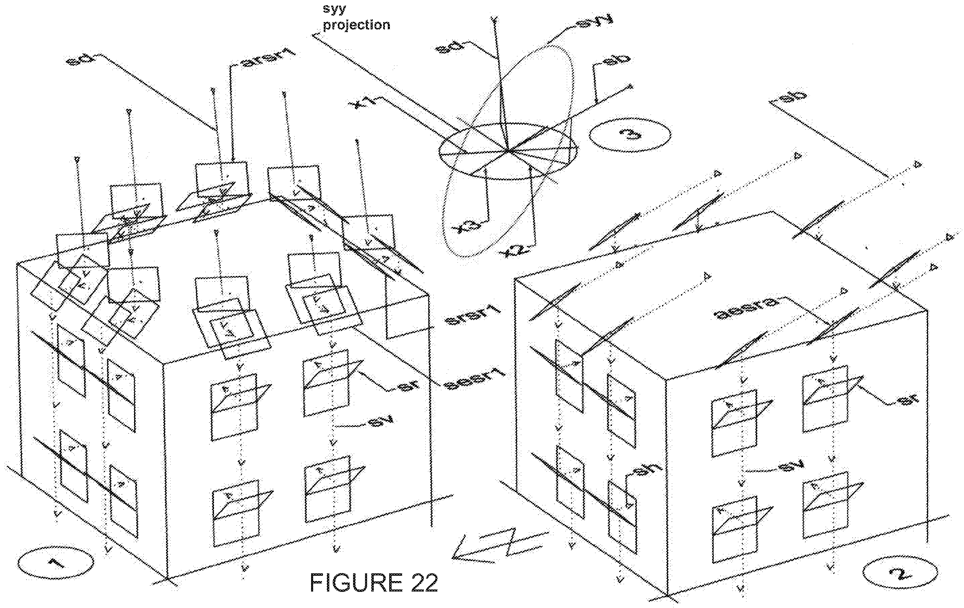

The active eaves solar reflector (aesr) arranged on the eaves follows the incoming sun beam (s) on a single or dual axis, regardless of where the beam comes from, and directly reflects said beam (sv) vertically in a way that is perpendicular to the ground (Figure 8.1, Figure 8.2 and Figure 22.2).

In the dual axis sun following system, the reflection of the sun beam perpendicularly to the ground is continuous from when it starts at a certain time in the morning until it the action stops at a certain time in the evening.

In the single axis moving sun following system shown in Figure 6.6, the reflection of the sun beam perpendicularly to the ground is discontinuous, not constant.

In order for the active eaves solar reflector (aesr) panel to be able to reflect the sun beam (s) always vertically during the day, two angles, which change throughout the day and at which the sun beam (s) arrives at the Earth, are taken into consideration:

1) Horizontal "elevation angle" (alpha) of the sun beam, and the
2) Horizontal "solar azimuth angle" (beta) of the sun beam to the north pole.

For example, the sun beam (s4) arriving at (alpha) = 15 degrees "solar elevation angle" in the morning and (beta) = 106 degrees "solar azimuth angle" moves and reaches, for example, highest (alpha) = 65 degrees "elevation angle" in the afternoon or surpasses said angle and reaches 180 degrees "solar azimuth angle", and declines until it reaches (alpha) = 15 degrees "solar elevation angle and 254 degrees "solar azimuth angle" in the evening; the "solar reflection path" (syy), which is explained above, followed by the beam changes throughout the day and depending on the horizontal (beta) and vertical (alpha) incidence angle values of these sun beams, the changing horizontal and vertical angles followed by the panel (aesr) by following the sun on two axes, in order to reflect the sun beams (sv) always vertically, are obtained from a software (Figure 1.1; Figure 2.1).

In order for the system which is used for heating and illuminating the spaces via indirectly reflecting sun beams through the doors and windows in all facades of the building and for heating domestic water via reflecting the sun beams to the floor, to be applied; to enable the solar reflector to move on a dual axis, according to the "area" where the latitude and longitude converge, for reflecting the sun beam (s) always vertically regardless of when or from which direction and at which it arrives, a software shall be prepared by providing the various horizontal and vertical angles and durations of the sun beam arriving throughout the day as data and the system shall work according to said software. The sun beam (s) arrives at the Earth at different "elevation angles" (alpha) and "solar azimuth angles" (beta) at the same time in different regions of the Earth. Therefore, in order to determine the various positions to be taken by the "active eaves solar reflector" (aesr) to always vertically reflect the incoming sun beam (s), the latitude and longitude data of the location of the active eaves solar reflector need to be put into the software.

The angles provided within the scope of the description of the present invention are of exemplary nature and are subject to changes.

DIFFERENCES BETWEEN THE SUN BEAM (s) REFLECTION SYSTEM OF THE CONIC STATIONARY EAVES SOLAR REFLECTORS (WITH FLAT OR REFRACTED PLANES) AND ACTIVE EAVES SOLAR REFLECTORS:

a. Differences between the reflective material type and working method of the "conic stationary eaves solar reflectors" (ksesr) and "active eaves solar reflectors" (aesr) developed for reflecting **the sun beams (s) to the spaces which do not receive direct sunlight or to the spaces on all facades of the building, if so desired:**

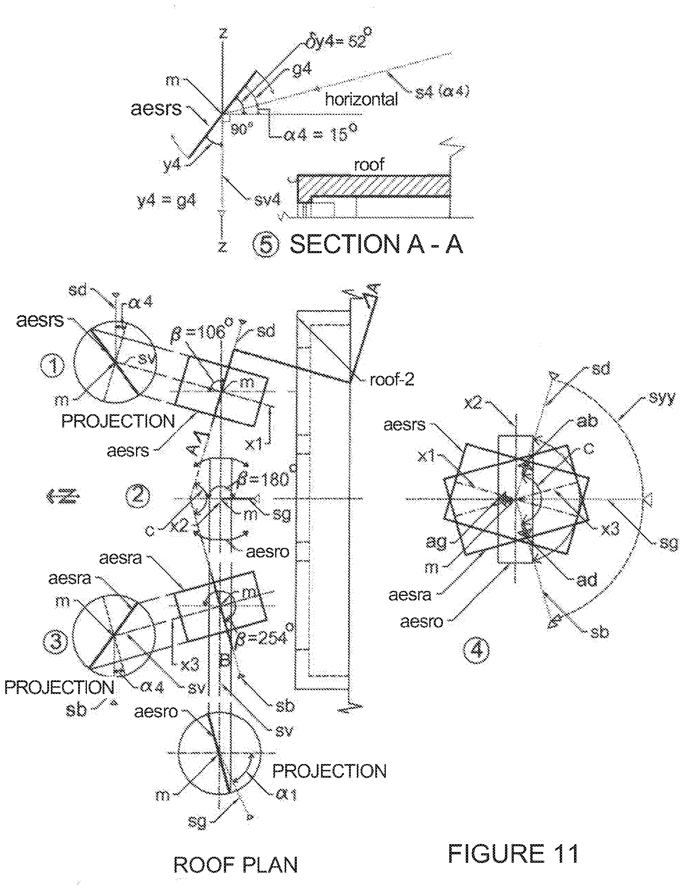

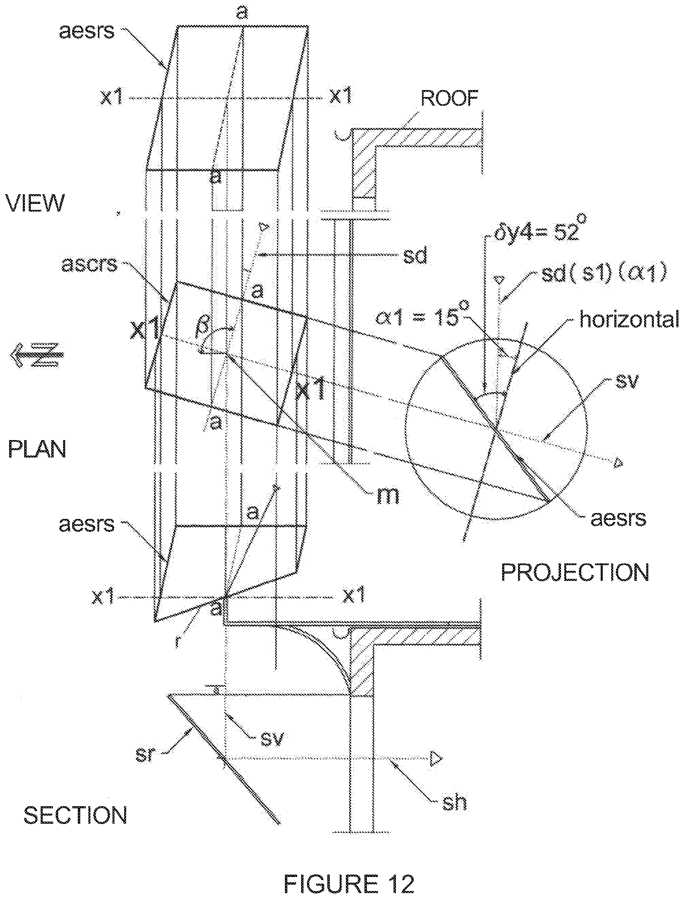

- conic stationary eaves solar reflector (ksesr) is stationary, it does not follow the sun, it catches, via the panels (pn) and parts (p) arranged at various angles, the sun beams (s) arriving at various angles throughout the day and reflects said beams vertically. Active eaves solar reflector (aesr), on the other hand, follows the sun by moving on a single or dual axis at certain angles over a strut.
- the panels (pn) forming the "conic stationary eaves solar reflector" (ksesr) consist of parts (p) which are refracted (inclined) at certain locations (k) and which are combined together at certain angles, whereas the "active eaves solar reflectors" (aesr) comprise flat panel(s) (Figure 11, Figure 12).

In the moving eaves solar reflector (aesr) which follows the sun on a single axis, the panel is refracted at certain points like the panels (pn) of the "conic stationary solar reflectors" (ksesr) and its shape is generally rectangular (Figure 6.6).

**b. Differences in terms of reflecting the sun beam into the indoor space:**

- The reflection of the sun beam to indoor spaces via "stationary eaves solar reflector" (ksesr) is discontinuous. In this system, the sun beams are reflected to indoor spaces, for example, for a 20 minute period or with a similar duration and interval.
- The reflection of the sun beams to indoor spaces via the "active eaves solar reflector" (aesr) is continuous. Starting at a certain time in the morning and until a certain time in the evening, the sun beams are "constantly" reflected to indoor spaces.
- As is apparent, in terms of transferring solar energy to indoor spaces, the "active eaves solar reflector" (aesr) system is more efficient than the (ksesr) system.

**Figure 1:**

In order to calculate and determine the horizontal angles of the parts (p1 - p2 - p3 - p4) of a panel (pn) which forms the "conic stationary eaves solar reflector" (ksesr) to send the arriving sun beams (s) to a horizontal direction within a given time limit and which consists of four parts (p), the sun beam (s) is assumed to arrive at four different solar elevation angles (alpha).

- elevation angle of the first sun beam (s1) is (alpha 1) = 65 degrees;
- elevation angle of the second sun beam (s2) is (alpha 2) = 45 degrees;
- elevation angle of the third sun beam (s3) is (alpha 3) = 27 degrees;
- elevation angle of the fourth sun beam (s4) is (alpha 4) = 15 degrees.

An essential innovation provided by the system which is used for heating and illuminating indoor spaces via indirectly reflecting the sun beams through the doors and windows on all facades of the building, and which is used for heating domestic water by reflecting said beams to the floor, is that a conic stationary eaves reflector (ksesr) similar to a quarter dome (quarter sphere) is used for vertically reflecting the sun beams (s1, s2, s3, s4..... sn), which arrive at various elevation angles (alpha1, alpha2, alpha3, alpha4 ..... alpha n), in a direction perpendicular to horizon. In order for the sun beams to be vertically reflected, a conic stationary eaves reflector (ksesr) shaped like a quarter sphere (quarter dome) is obtained by using n parts (p1, p2, p3, p4 ...... pn) arranged at various angles to the horizon depending on the elevation angles (alpha) of the incoming sun beams, and panels (pn) formed by parts (p) which are combined on top of each other.

a. **Determining the angle of part no 1 (p1), which shall reflect the sun beam (s1) arriving at an elevation angle of (alpha1) = 65 degrees perpendicular to the ground in a vertical direction:**

The sun beam (s1) arriving at an elevation angle (alpha1 = 65 degrees) and intersecting the circle (cr) at a point (1), arrives to the center point (m1) of the circle (cr). This beam is reflected vertically and over the y-y axis of the circle (cr) from the center point (m1) by the part no 1 (p1) and arrives at the point (f) on the circle (cr).

When the points (1) (f) where the arriving sun beam (s1) intersects the circle (cr) are connected, the horizontal angle, and therefore the position of the part 1 (p1), which will perpendicularly reflect the sun beam (s1) arriving at the horizon at a degree (alpha1 = 65 degrees), are found. The horizontal angle of the part 1 (p1) in this position is (78) degrees. The line which is obtained by connecting the point (1) on the circle and the point (f), form the part no 1 (p1).

The "part" (p) is obtained when the middle point of part no 1 (p1) is shifted in a parallel fashion until it arrives over the center (m1) of the circle. The positions and features of the parts (p, p1) are identical.

The sun beam (s1) arriving at the point (m1), which is in the middle of the "part" (p1) at a 78 degree angle to the horizon, is reflected to a vertical position (svt) from this point. (svt) denotes all sun beams (sv1, sv2, sv3, sv4) which are reflected to the vertical position.

The angle formed by the incoming sun beam (s1) and the reflected sun beam (sv1) at the point (m1) equals (n1+v1).

$$n1 = v1.$$

**b. Determining the angle of part no 2 (p2), which** shall **reflect the sun beam (s2) arriving** at **an elevation angle of (alpha2) = 45 degrees perpendicular to the ground in** a **vertical direction (Figure 1.1):**

The sun beam (s2) arriving at an elevation angle (alpha2 = 45 degrees) and intersecting the circle (cr) at a point (2), arrives to the center point (m1) of the circle (cr). This beam is reflected vertically and over the y-y axis of the circle (cr) from the center point (m1) and arrives at the point (f) on the circle (cr). Even though the figure shows that the reflection is performed by part no 1 (p1), the vertical reflection is actually performed by "part 2" (p2). This point will be more clearly presented in Figure 2.1.

When the points (2) (f) where the arriving sun beam (s2) intersects the circle (cr) are connected, the horizontal angle, and therefore the position of the part 2 (p2), which will perpendicularly reflect the sun beam (s2) arriving at the horizon at a degree (alpha2 = 45 degrees), are found. The horizontal angle of the part 2 (p2) in this position is (68) degrees. The line which is obtained by connecting the point (2) on the circle (cr) and the point (f), form the part no 2 (p2).

**c. "Part no 3" (p3) which will reflect the sun beams (s3) arriving at an elevation angle (alpha3) of 27 degrees, and the horizontal angle of said part are found to be (58) degrees according the above-mentioned method Figure 1.1).**

**d. "Part no 4" (p4) which will reflect the sun beams (s4) arriving at an elevation angle (alpha4) of 15 degrees, and the horizontal angle of said part** are **found to be (52) degrees according the above-mentioned method Figure 1.1).**

• Normal line (N1) and the sun beam (s1) line converge at the point (m1) at an angle (n1).

• Normal line (N1) and the "line of all vertically reflected sun beams (svt)" converge at the point (m) at an angle (v1). n1 = v1

• In Figure 1.1, sun beams (s1, s2, s3, s4) arrive at the center (m1) of the circle at four different alpha (1, 2, 3, 4) angles and said beams converge with the circle at points (1), (2), (3) and (4), and are vertically reflected as " all vertically reflected sun beams" (svt) from the point (m1) of the circle (cr) where they converged. The line (mf) is formed between the initial center point (m1) of all sun beams (svt) vertically reflected from the point (m1) and the point (f) in the circle.

In this case, four isosceles triangles, which share the line (m1-f), are formed:

- First one ....................... (1 - m1- f) triangle formed with the sun beam (s1),
- Second one .................. (2 - m1 - f) triangle formed with the sun beam (s2),
- Third one .................... (3 - m1 - f) triangle formed with the sun beam (s3),
- Fourth one ................... (4 - m1- f) triangle formed with the sun beam (s4).

The isosceles of these isosceles triangles, the shared corner point of which are (m1) and (f), are also the radius of the circle (cr). The line which goes perpendicularly from the corner point (m1), where the isosceles forming the radius of the circle meet, to the non-isosceles lines of the isosceles triangle and which divides said line in half, is the bisector of the isosceles of the isosceles triangle formed by the incoming (s1.... sn) and reflected (sv1 .....svn) sun beams; therefore it is the normal (N) (N1; N2; N3; N4). Each normal goes in the middle ((n+v):2) of the junction angle of the incoming (s1 .... sn) and vertically reflected (sv1..... svn) sun beams. For example, the line which goes through the bisector at the point (m1) where the lines (s1, svt) meet, is the normal (N1) (Figure 1.1).

In order to make calculations easier, four sun beams (sv1, sv2, sv3, sv4) vertically reflected at the center point (m1) are combined and vertically reflected as a single beam (svt). The four triangles can be seen separately in Figure 2.

- Incoming sun beam (s1) is vertically reflected by "part no 1" (p1) at the point (1) on the circle (cr),
- Incoming sun beam (s2) is vertically reflected by "part no 2" (p2) at the point (2) on the circle (cr),
- Incoming sun beam (s3) is vertically reflected by "part no 3" (p3) at the point (3) on the circle (cr),
- Incoming sun beam (s4) is vertically reflected by "part no 4" (p4) at the point (4) on the circle (cr), as can be seen in Figure 1.1.

The four triangles, the shared line (m1-f) of which is superimposed in Figure 1.1, can be seen separately in Figure 2. Therefore the points (r1, r2, r3, r4), which can be seen in Figure2, which are in the middle of the edges forming the parts (p1, p2, p3, p4) of the triangles and from where the "incoming sun beams" are reflected vertically, can be seen as a single point in Figure1.1 over the point (m1) which is the center of the circle.

In Figure 1.2, the sun beam (s) arriving at an elevation angle (alpha) can be seen as it is vertically reflected via the "active eaves solar reflector" (aesr), "conic stationary eaves solar reflector" (ksesr) or "stationary eaves solar reflector" (sesr) arranged on the eaves of a single storey building and the vertically reflected sun beam (sv) can be seen as it is rotated vertically (sh) and reflected into the indoor spaces via the "storey reflector" (sr) arranged in front of the storey window at angle of 45 degrees or at a different angle.

The performance of the same reflection action in a three-storey building is shown in Figure 1.2. The difference between the implementation of the reflection of sun beams into indoor spaces on a single-storey building and a multi-storey building is that, in the multi-storey implementation, after a portion of the sun beam (sv) arriving vertically to a "storey reflector" (sr) is reflected vertically (sh), a large portion goes through the translucent (sr) and heads towards the lower storeys and the storey reflectors (sr) arranged thereon. The main feature of the system is reflection of sun beams into indoor spaces via the windows on many storeys from a single vertically reflected sun beam and to make use of the sun beam as efficiently as possible.

**Figure 1.3** provides a sectional view of how the reflection action in Figure 1.2 happens in a single storey building.

## FIGURE 2:

Four sun beams (s1; s2; s3; s4) arriving at four different angles in Figure 1 are combined into a single sun beam (svt) and vertically reflected as such by converging at the center point (m1). Similarly, the lower end points of the "part" (p1, p2, p3, p4) lines which also have upper end points (1; 2; 3; 4) converge at the point (f) of the circle (cr) on the vertical y-y axis. More clearly, these four parts go out of the beginning points (f) at various angles. For easier understanding, Figure 2.1 illustrates the four sun beams arriving at the Earth at four different angles and Figures 2.1, 2.2, 2.3 and 2.4 separately illustrate the four parts (p) which will reflect said beams vertically.

- The horizontal angle (delta y1) of the "part 1" (p1), which will vertically reflect the sun beam (1) arriving to the horizon at an elevation angle of (alpha) 65 degrees, is 78 degrees.
- The horizontal angle (delta y2) of the "part 2" (p2), which will vertically reflect the sun beam (2) arriving to the horizon at an elevation angle of (alpha) 45 degrees, is 68 degrees.
- The horizontal angle (delta y3) of the "part 3" (p3), which will vertically reflect the sun beam (3) arriving to the horizon at an elevation angle of (alpha) 27 degrees, is 58 degrees.
- The horizontal angle (delta y4) of the "part 4" (p4), which will vertically reflect the sun beam (4) arriving to the horizon at an elevation angle of (alpha) 15 degrees, is 52 degrees.

Point (r) is the point where the sun beam (s) arriving at the part (p) is vertically reflected.
The sun beam (s1) arriving at the point (p1) is vertically reflected (sv1) by part (p1). Similarly:

- The sun beam (s2) arriving at the point (p2) is vertically reflected (sv2) by part (p2);
- The sun beam (s3) arriving at the point (p3) is vertically reflected (sv3) by part (p3);
- The sun beam (s4) arriving at the point (p4) is vertically reflected (sv4) by part (p4).

- For "part no 1" (p1):

- the "incidence angle" (g1) of the incoming sun beam (s1) is 13 degrees;
- the "reflection angle" (y1) of the reflected sun beam (s1) is 13 degrees.

- For "part no 2" (p2):

- the "incidence angle" (g2) of the incoming sun beam (s2) is 23 degrees;
- the "reflection angle" (y2) of the reflected sun beam (s2) is 23 degrees.

- For "part no 3" (p3):

- the "incidence angle" (g3) of the incoming sun beam (s3) is 31 degrees;
- the "reflection angle" (y3) of the reflected sun beam (s3) is 31 degrees.

- For "part no 4" (p4):

- the "incidence angle" (g4) of the incoming sun beam (s4) is 37 degrees;
- the "reflection angle" (y4) of the reflected sun beam (s4) is 37 degrees (Figure 2).

As seen in Figure 2.5, when the sun arrives at afternoon hours, the sun beam (s) goes through the translucent part (p) and is directed vertically towards the storey reflector (sr). As is clear, the system based on the reflection of the sun beam (s) into indoor spaces via storey reflectors (sr) can function even in the event that the sun arrives at an elevation angle (alpha) of 90 degrees,

The angle values mentioned in the description of the system which is used for heating and illuminating indoor spaces via indirectly reflecting the sun beams through the doors and windows on all facades of the building, and which is used for heating domestic water by reflecting said beams to the floor; are not final and there are certain tolerance limits. These angles are presented as examples. The number of parts and the angles thereof may be different. The system of the present invention may be configured to have different angles. These angles are not binding.

## FIGURE 3:

"Conic eaves solar reflectors" (ksesr) of three different forms are presented in Figures 3.1, 3.2 and 3.3, as arranged in front of the building eaves and a small distance away from the eaves.

## FIGURE 4:

Figure 4 presents the section, view and plan of the panel (pn), which is unit forming the "conic stationary eaves solar reflector" (ksesr)shaped as an arc of circle in the plan and arranged towards the center point (m) (Figures 5, 6, 7). Figure 4.4 illustrates a side view of the "conic stationary eaves solar reflector" (ksesr) formed by the combination of multiple panels (pn) and the plan of a single panel (pn). A panel comprises parts (p) which are connected at vertical and equal (or non-equal) intervals (n) with lines defined by additional points (k). A panel (pn) may also be formed by the combination of multiple parts (p) or by the inclination of a whole panel (pn) at certain refraction points (k). A part (p) may be formed by the connection of a panel (pn) at two, three or "n" locations. For example, the plane between the refraction or connection edges (k1, k2) is the "part no 2" (p2) (Figure 4.1).

Figure 4.1 illustrates a section of a panel (pn) which is inclined by refracting or bending said panel at three refraction points (lines) (k1 ; k2; k3). The horizontal angles of the four "parts" (p1, p2, p3, p4) used in this panel can be seen in the study presented in Figure 1.1.

The parts (p1.... p4) which leave the point (f) radially at various angles and the conditions of which are presented at Figure 1.1, form a panel (pn) by being adjacently connected in the following manner (Figure 4.1): At the panel:

1. from the bottom to the horizon........... at an angle of 78 degrees....... "part no 1" (p1) is present;
2. above that, to the horizon.................... at an angle of 68 degrees........ "part no 2" (p2) is present;
3. above that, to the horizon.................... at an angle of 68 degrees......... "part no 3" (p3) is present;
4. at the top to the horizon....................... at an angle of 52 degrees........ "part no 4" (p4) is present.

These angles are of exemplary nature and are not final. The horizontal angles of the parts, the number of refraction = connection points (k) in a panel (pn) and, in relation to that, the number of parts (p) may be different than the presented example.

- The top edge (k1) of the part (p1) is the bottom edge of the part (p2),
- The top edge (k2) of the part (p2) is the bottom edge of the part (p3),
- The top edge (k3) of the part (p3) is the bottom edge of the part (p4).

The phases of the vertical reflection of sun beams by a "panel" (pn) comprising four "parts" (p) is as follows (Figure 4.1):

1) Part (p4) vertically reflects the sun beam (s4) arriving from.................. "the east".................... in the morning, at an angle (alpha)of 15 degrees,
2) Approximately one hour later, part (p3) vertically reflects the sun beam (s3) arriving from.............."a location close to the east"............. at an angle (alpha) of 27 degrees,
3) Approximately two hour later, part (p2) vertically reflects the sun beam (s2) arriving from.............."a location close to the south"............. at an angle (alpha) of 45 degrees,
4) Approximately three hours later, part (p1) vertically reflects the sun beam (s1) arriving from..................."the south" ................ in the afternoon or close to the afternoon, at an angle (alpha) of 65 degrees.

The reverse order is repeated from the afternoon to the evening. In this system, the process of transferring sun beams to indoor spaces occurs, for example, "for a certain period of time during an hour", with interruption during the day the mechanism is in operation.

The panel (pn) may be refracted at two places (k1; k2) at certain angles (Figures 4.3 and 4.4) or may be refracted at three places (k1; k2; k3) at certain angles (Figures 4.1 and 4.2) or may be refracted at more places. "Four" planes are formed due to the refractions (k1, k2, k3) in Figure 4.1. These planes are called "parts" (p).

Conic stationary eaves solar reflector (ksesr) can be defined as follows: A sphere consisting of a hollow orange peel is horizontally cut in the middle to have half a sphere. This half sphere-dome is vertically cut to obtain two half domes (quarter spheres). "Conic stationary eaves solar reflector" (ksesr) is a conic solar reflector that is arranged similarly to this half dome (quarter sphere). This half geodesic dome (space frame) = half dome consists of a certain number of panels (pn).

The frontal view, side view and the plan of a panel (pn) comprising three parts (p) under each other is provided in Figure 4.4 and the section thereof is provided in Figure 4.3. In these Figures, it is shown how the sun beams (s1, s2, s3) are vertically reflected via the parts (p) at different angles.

As explained in detail in Figure 1.1, Figures 2.1, 2.2, 2.3, 2.4 and 2.5, the purpose in arranging "reflective panels" (pn) comprising four planar parts (p), each of which is inclined at a different angle, to face a center (m) in a radial manner over an arc of circle to be placed upon the eaves of a building is to catch the sun beams (s1....... sn) arriving at various elevation angles (alpha) and various azimuth angles (beta) and reflect all of them vertically.

The conic stationary eaves reflector (ksesr), which is one of the essential element of the present invention, comprises parts (p) and panels (pn).

- The feature of the parts (p) is that they are arranged at various horizontal angles in a manner that during the day, for example approximately once every hour, they are able to vertically reflect the sun beams (s), which arrive horizontally at different elevation angles (alpha), for a certain period of time.
- The feature of the panels (pn) is that, they are arranged in a manner that they are able to catch the sun beams (s) perpendicularly arriving thereto at different horizontal azimuth angles (beta) during the day, approximately once every hour, with a certain angle among them, and in a manner where they are connected to each other while radially facing a certain center point (m).

The height of each part (p) forming the panel (pn) in Figures 4.1, 4.2 and .-3 are defined as (n). The (n) dimension may be varied and variable.

As the number of refractions (k) in the panel (pn) increases, so will the number of parts (p) and accordingly, the number of vertical reflections of sun beams will increase during the day; however, the duration of the beam's reflection will become shorter.

If the reflection duration of the sun beam (s) is 20 minutes per hour between morning and afternoon when a four part (p) panel (pn) is used, the duration will drop to around 15 minutes every 45 minutes between morning and afternoon, when a five piece panel is used.

The solution in Figure 4.2 has been developed to vertically reflect the sunlight with short intervals and for longer durations. Thanks to the dual shelled solar reflector which comprises the panel (pn-top) and the panel (pn-bottom), arranged with a certain distance between them, and placed under each other by shifting the refraction points (k); the reflection duration remains the same and the number of hours with vertical reflection for the sun beam (s) and the reflection duration during the day increases (Figure 4.2). Four sun beams (s) are reflected vertically in the single shelled system (Figure 4.1), whereas eight sun beams (s) are reflected vertically in the dual shelled system. Thus, the period without reflection becomes shorter and the efficiency almost doubles. As the number of shells increases, the interruption periods for the vertical reflection of the sun beams (s) will become shorter.

**FIGURE** 5:

In the solution presented in Figure 5, in order to provide a larger vertical sun beam (s) reflection area for the "A-conic stationary eaves reflector" (ksesr-A)and shorter reflection interruption periods, partially overlapping, rectangular panels (pn), which have been refracted in two places (k1; k2), have been used.

- The horizontal inclination angle of the part (p1) in the point (f) is 78 degrees,
- The horizontal inclination angle of the part (p2) in the inclination point (k1) is 68 degrees,
- The horizontal inclination angle of the part (p3) in the inclination point (k2) is 58 degrees,
- The junction angle at the point (k1) of the parts (p1 and p2) is 170 degrees,
- The junction angle at the point (k2) of the parts (p2 and p3) is 170 degrees (Figure 5.2).

In order the prevent the overlapping of rectangular panels (pn), each panel (pn) had to be arranged higher than the adjacent panel. This difference in height is defined as (h) (Figure 5.2).

The axis of the rectangular panel (pna) going through the center (m) thereof, is over the B-B section. The panels (pnb, pnc, pnd, pne) are located above the "B-B" axis of the "conic stationary eaves solar reflector" (ksesr). Below the A-A axis, the panels (pnb1, pnc2, pnd2, pne2) are located asymmetrically to the axis. The number of panels (pn) is variable (Figure 5.1).

In the plan, the corners of the panels above the B-B section connect at the points (1, 2, 3, 4). In the plan, it is seen that the corner point of the panel (pna) and the corner point of the panel (pnb) connect at the point (1) (Figure 5.1). However, looking at Section B-B, it is possible to notice that there is a vertical difference in height (h) between the corner points (1) of the panels (pna and pnb) (Figure 5.2). As can be seen in Section B-B, the lower edges of the panels (pna, pnb, pnc, pnd, pne) are similar to stairs and each one is located higher than the adjacent one by a height of (h) (Figure 5.2).

In the plan presented in Figure 5.1, it can be seen that:

- the reflection action begins when the sun beam (sd) arriving from the east in the morning reaches the panel (pne1),
- the reflection continues when the afternoon sun beam (sg) arriving from the south in the afternoon reaches the panel (pna),
- the reflection action ends when the evening sun beam (sa) arriving from the west in the evening reaches the panel (pne).

**FIGURE 6:**

Two "dual conic stationary eaves solar reflectors" (ksesr-B and ksesr-C), which are placed over each other with certain space, can be seen in Figure 6.

In Figure 6.3 showing the "conic stationary eaves solar reflector" (ksesr-B), the plan of the "conic stationary eaves solar reflector" (ksesr-B), which is obtained by connecting nine trapezoid panels (pn) side by side, can be seen. The number of panels (pn) can change.

In the "conic stationary eaves solar reflector" (ksesr-C), there are five rectangular panels (pn) and four trapezoid (pn) panels. In this reflector, there is one trapezoid panel (pn) between each two rectangular panels (Figure 6.2).

"Conic stationary eaves solar reflector" (ksesr-B) is placed over the "conic stationary eaves solar reflector" (ksesr-B) in Figure 6.3, with a space (ar) between them (Figures 6.1, 6.2, 6.3, 6.4). The sun beam (s) follows the "solar reflection path" (syy), starting from the "morning reflection beginning" point (syb), when the reflection begins, until the "end of reflection" (ys) in the evening. "The morning reflection beginning point" (syb) of the sun beam (s) is considered as the first reflection phase (1) and the "evening reflection ending point" (ays) is considered as the ninth and last reflection phase. A panel (pn) maintains the reflection action for a certain time in each phase from (1) to (9). Since there are a total of 18 reflective panels (pn) in the overlapping "dual conic stationary eaves solar reflector" system, the sun beam (s) will maintain the reflection action for "a certain time" in 18 phases during the day, since the morning reflection beginning (syb) until the evening reflection ending (ays) (Figure 6.2 and 6.3). The purpose in arranging two "conic stationary eaves solar reflectors" over each other with a certain space (ar) between them is to vertically reflect the sun beam in shorter intervals and for longer durations. The sun follows the solar reflection path (syy) in the period from the morning reflection beginning (syb) to the evening reflection ending (ays).

The plan of the dual "conic stationary eaves solar reflector" (ksesr-BC) can be seen in Figure 6.1, and the section and view thereof is presented in Figure 6.4.

(syb) = beginning of the reflection in the morning,
(ays) = end of the reflection in the evening,
(s) = sun beam,
(m) = center
(syy) = solar reflection path,
(h1) = height of (ksesr-B),
(h2) = height of (ksesr-C),
(h) = difference of height between the stationary solar reflectors (ksesr-B and ksesr-C).
(g) = horizontal distance between the stationary solar reflectors (ksesr-B and ksesr-C).
(ar) = space between the "conic stationary eaves solar reflectors" (ksesr-B and ksesr-C).

The angles of the parts (p) of the panels (pn), nine for each, forming both reflectors are as mentioned in Figure 5.2 and these angles are not final; they can be configured in different degrees.

Panels are sorted as (pn1........ pn9).

Figure 6.5 illustrates the "conic stationary eaves solar reflector" (ksesr-D) alternative comprising trapezoid panels. The purpose of converting trapezoids by enlarging them and arranging the top panels partially over the bottom panels is to reflect more sun beams vertically in the same area.

In Figure 6.6, the "active panel eaves solar reflector" comprising panels (pn) with rectangular, etc. shapes is rotating horizontally on a single vertical axis at the center point (m). In this alternative, the rectangular panel (pn), which is an element of the "stationary" system and which is bent at certain refraction places (k), rotates horizontally at the point (m) and follows the sun in a fashion similar to the active system. A mixed system is obtained as an element of the stationary system behaves like the active system. The sun beam (sv) transferred vertically is discontinuous, not constant. The object of this solution is to reflect the sun beam (s) to indoor spaces with a low cost, even if it is interrupted.

## FIGURE 7:

Figure 7.1 illustrates the "conic stationary eaves solar reflector" (ksesr-E) as it is arranged in front of the building eaves.

The sun beams (s1, s2, s3) arriving at the parts (p) of the panels (pn) forming the "conic stationary eaves solar reflector" (ksesr-E) at different elevation angles (alpha), are reflected vertically via said parts (p).

The sun beams (sv) reflected vertically to the ground via the "conic stationary eaves solar reflector" (ksesr-E) are reflected to the indoor spaces vertically (sh) or at different angles, if so desired, via the "storey reflectors" (sr) arranged in front of the windows of the storeys at an angle of 45 degrees or other variable angles.

The sun beams (sv) passing through the translucent storey reflectors (sr) are reflected to the "water heater" (si) arranged horizontally on the floor and the water inside the water heater is heated by solar energy (Figure 7.1). By placing the water heater on the floor, and not on the roof, potential damages to the households due to water leakages from the roof are prevented and it becomes easier to maintain-repair said heater.

- Figure 7.2 illustrates.......... "conic stationary eaves solar reflector" (ksesr-E) comprising 11 panels (pn),
- Figure 7.3 illustrates.......... "conic stationary eaves solar reflector" (ksesr-B) comprising 9 panels (pn),
- Figure 7.4 illustrates.......... "conic stationary eaves solar reflector" (ksesr-F) comprising 7 panels (pn).
- Figure 7.5 illustrates (ksesr-E), the plan of which is presented in Figure 7.2,
- Figure 7.6 illustrates (ksesr-B), the plan of which is presented in Figure 7.3,
- Figure 7.7 illustrates (ksesr-F), the plan of which is presented in Figure 7.4,
- Storey reflectors (sr) may be of different shapes,

(syb) = Beginning of the reflection in the morning from the east,
(ays) = end of the reflection in the evening in the west,
(cE) = beam reflection duration limit angle at (ksesr-E),
(cB) = beam reflection duration limit angle at (ksesr-B),
(cF) = beam reflection duration limit angle at (ksesr-F),
The longest beam reflection duration is obtained by (ksesr-E) with 11 panels.

## FIGURE 8:

Figure 8 shows how sun beams are reflected indirectly to the indoor spaces which do not receive direct sun light, via the "active eaves solar reflector" (aesr) arranged in front of the eaves of a multi-storey building.

The sun beams (3) which arrive horizontally at a certain elevation angle (alpha) are vertically (perpendicular to the horizon) reflected via the "active eaves solar reflector" (aesr) which is arranged on the eaves of the building and which follows the sun on two axes (Figure 8).

While descending vertically, a portion of the sun beams (sv) which hit the "storey reflectors" (sr), arranged in front of each storey's windows at an angle of 45 degrees or in a fashion where the angle is changeable, are reflected by said "storey reflectors" (sr) and transferred horizontally into the indoor spaces; whereas the other major portion of the beams vertically pass through the translucent storey reflectors one by one and are reflected horizontally to indoor spaces via the storey reflectors (sr) in front of the windows of the lower storeys. Thus, sun beams can be indirectly reflected to the spaces of a 5-6 storey building via an "active eaves solar reflector" (aesr). Thanks to various embodiments, it is also possible to reflect sun beams to the spaces of 10-18 storey buildings via an (aesr).

(lsr) "last storey reflector", the last reflector on the bottom which reflects the sun beam to the spaces of the 5-6 storeys in the upper portions of the building (Figure 8.3)
(sv) vertically directed sun beam,
(s) sun beam,
(sv) horizontally reflected sun beam,
(prla) = parapet reflector which transforms the vertically arriving sun beam (sv) to a horizontal one,

(pr1) = parapet reflector which transforms the sun beam (sh) coming horizontally from the parapet reflector (prla) into a vertical one,

As the sun beam (sv) descends by passing through the storey reflectors (sr) in front of the windows of 5-6 storeys, it is also reflected into the indoor spaces via these storey reflectors (sr).

As the sun beam (sv), which is vertically reflected by the "active eaves solar reflector" (aesr) and which arrives at the storey reflector on a lower storey by passing through each storey reflector (sr), is going to lose a portion of its light intensity as it passes through each storey reflector (sr), it is rationally possible to transfer sun beams to the indoor spaces of a building with around 5-6 storeys via the "active eaves solar reflector" (aesr) and the "storey reflector" (sr) system. The rationally applicable number of storeys for the system will be determined based on experiments and calculations. It is possible to transfer sun beams via an (aesr) inside the spaces of more storeys by improving the system with experiments and calculations.

As can be seen in Figure 8.1, the system developed for heating and illuminating indoor spaces via indirectly reflecting the sun beams through the doors and windows on all facades of the building, and which is used for heating domestic water by reflecting said beams to the floor may include,

- planar active eaves solar reflectors (aesr) which are placed on the upper line of the windows in the eaves portion of the building, which follow the sun by moving on two axes (horizontal and vertical) and which reflect the incoming sun beam vertically,

- storey reflectors (sr) which may be positioned in front of the windows and below the active eaves solar reflector (aesr) horizontally at various angles and which reflect a portion of the sun beam to the indoor space and which allow the other portion to pass vertically.
  The system developed for heating and illuminating indoor spaces via indirectly reflecting the sun beams through the doors and windows on all facades of the building, and which is used for heating domestic water by reflecting said beams to the floor may include;

- storey reflectors (sr) which may be positioned in front of the windows and below the active eaves solar reflector (aesr) horizontally at various angles and which reflect a portion of the sun beam to the indoor space and which allow the other portion to pass vertically, the surface areas of which increase as they go from the upper storeys to the lower ones in order to prevent lower energy transfer in lower storeys due to the sun beam, which moves vertically, losing energy in each storey reflector.

In order to use this system in multi-storey buildings with more storeys such as 10-15-20, the storeys into which the sun beam (s) is reflected should be divided into storey groups and the sun beam (s) carrying system should be designed specifically for each storey floor. The embodiments of the present invention to this end are as follows:

In Figure 8.3, an alternative solution is presented for reflecting sun beams (s) into indoor spaces in buildings with numerous storeys by grouping the windows according to certain number of floors.

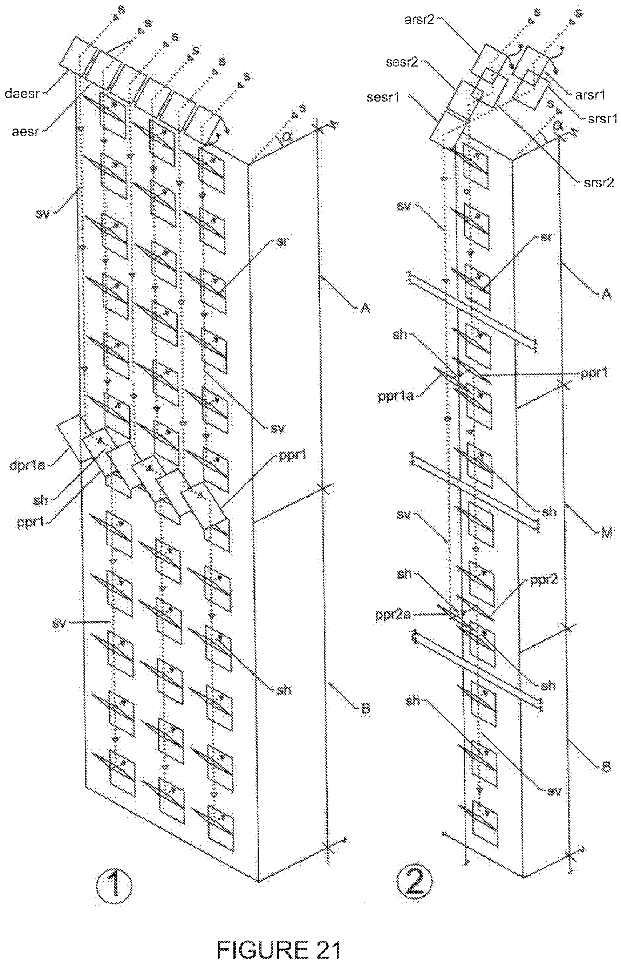

- The sun beam (sv) vertically reflected by the (aesr) on the eaves is reflected to the indoor spaces via the "storey reflectors" (sr) in front of the windows of the 5-6 storeys in the upper storeys, defined as the "first reflection group."
- The sun beam is reflected to the 5-6 floors in the lower parts of the building, defined as the "second reflection group", via the "active eaves solar reflector filled wall" (aesrd). The action is performed as follows:
  As shown in Figure 8.3 and Figure 21.1, the sun beam (sv) reflected vertically via the "active eaves solar reflector filled wall" (aesrd) placed on the eaves at the upper level of the filled wall, passes through approximately 5-6 storeys in the upper portions of the building and descends in front of the filled wall between the windows to arrive at the "parapet reflector" (prla) arranged at the parapet level. Here, the horizontally directed sun beam (sh) is reflected onto the "parapet reflector" (pr1). The sun beam (sh) arriving at the "parapet reflector" (pr1) is vertically reflected by said reflector (pr1). The vertically reflected sun beam (sv) is reflected into the indoor spaces via the "storey reflectors" (sr) arranged in front of the windows on the 5-6 storeys constituting the "second reflection group" on the lower portion of the building.

As can be seen in Figure 8.3 and Figure 21.1, the system developed for heating and illuminating indoor spaces via indirectly reflecting the sun beams through the doors and windows on all facades of a building with particularly 5-12 storeys, and which is used for heating domestic water by reflecting said beams to the floor may include,

- active eaves solar reflectors (aesr) which are placed on the upper line of the windows in the eaves portion of the building, which follow the sun by moving on two axes (horizontal and vertical) and which reflect the incoming sun beam vertically,

- filled wall active eaves solar reflectors (aesrd) which are positioned on the upper line of the filled wall between the windows of the building and which follow the sun by moving on two axes to reflect the incoming sun beam vertically,
- storey reflectors (sr) which are positioned in front of the windows and below the active eaves solar reflector (aesr) horizontally at various angles and which reflect a portion of the sun beam to the indoor space and which allow the other portion to pass vertically,
- "filled wall parapet reflectors" (prla) which are arranged at the parapet level on the facade of the storey in the middle of the building height and which transform the vertically incoming sun beam (sv) into a horizontal one so as to allow the sun beam vertically reflected by the filled wall active eaves solar reflectors (aesrd), which are positioned on the upper line of the filled wall between the windows of the building and which follow the sun by moving on two axes to reflect the incoming sun beam vertically, to be reflected to the storeys in the lower half of the building, and
- Parapet reflectors (pr1) between windows which vertically reflect the sun beam (sh) coming horizontally from the filled wall parapet reflector (dprla).

In order to implement this system, there has to be filled walls between the windows which are at least as wide as the windows.

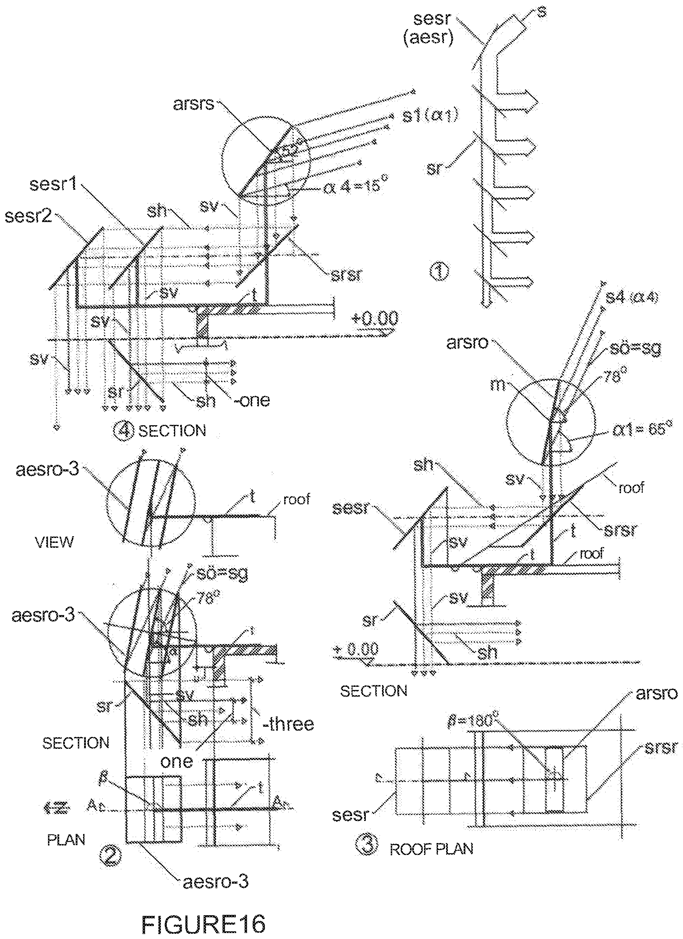

As can be seen in Figure 16.1, the sun beam (s) loses intensity as it passes through the storey reflectors (sr) in each storey to reach the storey reflector on the storey below. In order to prevent the descending sun beam (s) from losing its intensity, the width, and therefore the surface areas of the storey reflectors are increased as we descend each storey. Thus, even if the intensity of the light decreases in each storey, the intensity of the sun beam (sh) transferred into the indoor space will be the same on each storey as the reflective area of the storey reflectors (sr) will increase in each lower storey. As illustrated in Figure 8.2, the surface areas of the storey reflectors (sr) gradually increase in the lower storeys. Thus, it is prevented to have lower energy transfer in the lower storeys due to the vertically moving sun beam losing energy in storey reflectors (sr) which are positioned in front of the windows and below the active eaves solar reflector (aesr) horizontally at various angles and which reflect a portion of the sun beam to the indoor space and which allow the other portion to pass vertically.

It can be seen in Figure 8.1 that the sun beam (s) arriving at the "active eaves solar reflector" (aesr) is vertically reflected and that the vertically descending sun beam (sv) is reflected into the indoor spaces in the storeys, for example towards the ceiling (srt) or the flooring (srz), via the "storey reflectors" (sr) arranged at various angles in front of the windows in all storeys. The following are the alternatives for arranging the storey reflector (sr) at various angles:

- (sr) : The storey reflector arranged at an horizontal angle of 45 degrees reflects the sun beam (sh) horizontally into the indoor space,
- (srv) : The "storey reflector" is arranged vertically to prevent the sun beam (s) from being reflected to indoor spaces.

The "active eaves solar reflector" (aesr) which collects the sun beams (s) and vertically said beams vertically, is arranged right in front of the building eaves (Figure 8).

Two "under eaves reflectors" (er), one under the (aesr) and the other under the eaves protrusion, which are angled at 45 degrees are positioned over the storey reflectors (sr) in order to align the sun beam (sv) coming vertically from the active eaves solar reflector (aesr) of the sun beam (s) in the protruded building eaves, with the vertical reflection line. The sun beam (sv) reflected vertically from (aesr) is horizontally reflected via the "under eaves reflector (er) under the (aesr), in order to be reflected to the "under eaves reflector" (er) right above the eaves reflector (sr) under the eaves. The "under eaves reflector" (er) under the eaves reflects the horizontally incoming sun beam (sh) vertically towards the storey reflectors (sr); the storey reflectors (sr) transform the vertically incoming sun beam and reflect said beam into the indoor space.

**FIGURE** 9:

TWO SOLUTIONS REGARDING THE ARRANGEMENT OF THE "ACTIVE SOLAR REFLECTORS", WHICH FOLLOW THE SUN ON TWO AXES, NOT IN FRONT OF THE EAVES, BUT ON THE ROOF OF THE BUILDING BY RETRACTING SAID REFLECTORS:

As can be seen in Figure 8, Figure 10, Figure 11 and Figure 12; since the arrangement of the "active eaves solar reflector", which moves on two axes, in front of the roof eaves in the space away from the building might cause problems in the maintenance-repair of the joints and panels, an alternative solution is provided where the moving mechanisms and, in relation to that, some stationary mechanisms of the system are positioned behind the eaves, on the roof. In these solutions, "stationary eaves solar reflectors" (sesr) are arranged in a stationary manner in front of the eaves (Figure 9, Figures 16.3-4).

In the system where the sun beam is reflected into indoor spaces through the windows on the facades of the building

which do not receive direct sun light or through the windows in all facades via the "active roof solar reflector" (arsr) which is retracted from the face of the eaves and arranged on the roof of the building, "sets for reflecting sun beams into indoor spaces" are used.

SET UTILIZED FOR HEATING AND ILLUMINATING THE SPACES VIA INDIRECTLY REFLECTING SUN BEAMS THROUGH THE DOORS AND WINDOWS IN ALL FACADES OF THE BUILDING AND FOR HEATING DOMESTIC WATER VIA REFLECTING SUN BEAMS TO THE FLOOR

In Figure 9.1 and Figure 9.2, two alternatives of the "sets for reflecting sun beams into indoor spaces", arranged separately for "storey groups" consisting of approximately 5-6 adjacent storeys of a tall building, can be seen.

- Figure 9.1 illustrates three of three-piece,
- Figure 9.2 illustrates two of three-piece

"sets for reflecting sun beams into indoor spaces" being utilized. The working methods of said sets might be different.
As can be seen in Figure 9.1, the "Set for reflecting sun beams into indoor spaces", where the "active roof solar reflector" (arsr) is arranged behind the eaves and on the roof, the following parts are included:

1. "one "active roof solar reflector" (arsr) arranged on the roof and following the sun on two axes,
2. one "stationary roof solar reflector" (srsr) arranged on the roof,
3. one "stationary eaves solar reflector" (sesr) arranged on the eaves at a horizontal angle of 45 degrees,
4. "storey reflectors" (sr) arranged in front of the windows in five-six (or more) storeys at an angle of 45 degrees or at variable angles.

The "solar reflector" system in Figure 9 operates as follows:

1. "Active roof solar reflector no 1" (arsr1) placed on a strut on the roof vertically reflects the sun beam (sv) arriving at an elevation angle (alpha);
2. The vertically reflected sun beam (sv) arrives at the "stationary roof solar reflector no 1" (srsr1) which is right below the "active roof solar reflector no 1" (arsr1) and which is positioned in its projection at a horizontal angle of 45 degrees and which is most probably made of mirror; and is horizontally (sh) reflected by said reflector to arrive at "stationary eaves solar reflector no 1" (sesr1);
3. The sun beam (sh) which arrives at the "stationary eaves solar reflector no 1" (sesr1), which is at a horizontal angle of 45 degrees, is vertically (sv) reflected by said panel;
4. The vertically reflected sun beam (sv) arrives at the "storey reflectors" (sr) arranged in front of the windows in all storeys at an angle of 45 degrees or at a variable degree;
5. The sun beam (sv), which descends to the ground by passing through the storey reflectors (sr) vertically for 5-6 storeys, is reflected horizontally by the storey reflectors (sr) in front of the windows in all storeys and is transferred into the indoor spaces in each storey.

**a. Reflection of the sun beam (s) to the indoor spaces in multi-storey buildings via the "Three-piece set for reflecting the sun beam into indoor spaces" (Figure 9.1):**

Three "active roof solar reflectors" (arsr1; arsr2; arsr3) arranged on the roof are configured in a way that the oblique sun beam (s) arriving in the morning goes through the translucent "active roof solar reflector no 3" (arsr 3) and arrives at the "active roof solar reflector no 2" (arsr2) and passes through this part and arrives at the "active roof solar reflector no 1" (arsr1). Even though the intensity of the sun beam drops a little during this passage, the intensity of the sun beam (sv) transferred into the indoor spaces can be balanced by increasing the intensity of the light entering the indoor space via enlarging the surface area of the storey reflector (sr) gradually towards the lower floors. However, since this disadvantage occurs in the morning hours when the sun beam (s) intensity is relatively low and the (alpha) angle is smaller, it does not cause a major drawback in the additional heating and illuminating of the space. The reason is that the intensity of the sun beam (s) and the incidence angle (alpha) gradually increases from the morning until the afternoon and it reaches the maximum level (moving) at noon. The important thing is to utilize the energy of the sun beam (s) which arrives at steeper angles and higher intensities at noon and at hours closer to afternoon. As the sun starts to arrive at larger (alpha) angles while rising in the afternoon, the disadvantage caused by the sun beam (s) arriving at a smaller (alpha) angle in the morning will mostly disappear since direct sun beams (s) will arrive directly at each solar reflector (arsr1; arsr2; arsr3), as is shown in Figure 9.1.

A similar solution is presented in Figure 9.2. The solution in Figure 9.2 is more economical compared to the one in Figure 9.1. The reason is that while 3 "sets for reflecting sun beams into indoor spaces" are used in the solution in Figure 9.1 for the reflection of the sun beams (s) in all storeys of an 18-storey building; 2 "sets for reflecting sun beams into indoor spaces" are used for the same action in the solution presented in Figure 9.2. Each set reflects sun beams (s) through the windows of approximately 5-6 storeys in the solution presented in Figure 9.1, whereas one set reflects the sun beams (s) through the windows of approximately 5-6 storeys and the other reflects said beams (s) through the windows of approximately 10-12 storeys. Therefore, the initial cost for taking the same action and obtaining the same efficiency is approximately 30% lower for the solution in Figure 9.2 compared to that of Figure 9.1.

Transfer of sun beams to the indoor spaces in all storeys of a building with approximately 15-18 storeys, by grouping certain storeys, such as with 3 different actions (three-piece set) for each adjacent 5-6 storey section (Figure 9.1):

1. Reflection of the sun beams (s) to the indoor spaces in the "upper" 5-6 storeys of a 15-18 storey building:

The sun beam (sv) reflected vertically via the "stationary eaves solar reflector no 3" (sesr3) is transferred into the indoor spaces via the "storey reflectors" (sr) angled at 45 degrees in front of the windows of the "5-6 storeys on the upper part of the building" (Figure 9.1). The extensive description of the path taken by the sun beam (s) until it arrives at the "stationary eaves solar reflector no 3" (sesr3) is explained above under Figures 8 and 9.

2. Reflection of the sun beams (s) to the indoor spaces in the "middle" 5-6 storeys of a 15-18 storey building:

As illustrated in Figure 9.1, the sun beam (sv) reflected vertically via the "stationary eaves solar reflector" (sesr2) arrives at the "parapet reflector" (prla) and is horizontally reflected by this element to be transferred to the "parapet reflector" (pr1). The sun beam (sv) is vertically reflected via the "parapet reflector" (pr1) and said beam is reflected into the indoor space via the storey reflectors (sr) in front of the window of the 5-6 storeys in the middle of the building.

3. Reflection of the sun beams (s) to the indoor spaces in the "lower" 5-6 storeys of a 15-18 storey building:

As can be seen in Figure 9.1, the sun beam (sv) vertically reflected by the "stationary eaves solar reflector" (sesr1) while skipping the upper 10-12 floors, arrives at the "parapet reflector" (pr2a) and horizontally arrives at the "parapet reflector" (pr2) from there. The sun beam (sv) vertically reflected via the "parapet reflector" (pr2) is reflected into the indoor space via the storey reflectors (sr) in front of the 5-6 storeys in the lower part of the building.

As illustrated in Figure 9.1, a system is developed within the scope of the present invention, comprising "sets for reflecting sun beams into indoor spaces" arranged separately for "storey groups" consisting of approximately 5-6 adjacent storeys, for the heating and illuminating indoor spaces via indirectly reflecting the sun beams through the doors and windows on all facades of a building with particularly 5-18 storeys, and which is used for heating domestic water by reflecting said beams to the floor. Among the sets for reflecting sun beams into indoor spaces, the set forming the three-piece set shown in Figure 9.1 comprises the following elements:

- The first set operating for the reflection for the 5-6 storeys at the lower parts of the building comprises;

    ◦ "active roof solar reflector no 1" (arsr1) which is placed on a strut on the roof,
    ◦ "stationary roof solar reflector no 1" (srsr1) which is right below the "active roof solar reflector no 1" (arsr1) and which is positioned in its projection at a horizontal angle of 45 degrees and which is made of mirror,
    ◦ "stationary eaves solar reflector no 1" (sesr1) which is positioned on the eaves in the horizontal level of the "stationary roof solar reflector no 1" (srsr1) and which is made of mirror or a translucent material,
    ◦ "parapet reflector" (pr2a) which horizontally reflects the sun beam (sv), which is vertically reflected while skipping the upper 10-12 storeys, and which is placed in line with the parapet,
    ◦ "parapet reflector" (pr2) which vertically reflects the sun beam horizontally reflected via the "parapet reflector" (pr2a) to the storey reflectors (sr) in front of the 5-6 storeys in the lower parts of the building, and which is placed on the level of the parapet of the storey above this 5-6 storey group,
    ◦ storey reflectors (sr) which reflect the sun beam (sv) reflected by the "parapet reflector" (pr2), into the indoor spaces, and which is located in front of the windows of the 5-6 storeys in the lower parts of the building.

- The second set operating for the reflection for the 5-6 storeys at the middle parts of the building comprises;

    ◦ "active roof solar reflector no 2" (arsr2) which is placed on a strut on the roof,
    ◦ "stationary roof solar reflector no 2" (srsr2) which is right below the "active roof solar reflector no 2" (arsr2) and which is positioned in its projection at a horizontal angle of 45 degrees and which is made of mirror,

∘ "stationary eaves solar reflector no 2" (sesr2) which is positioned on the eaves in the horizontal level of the "stationary roof solar reflector no 2" (srsr2) and which is made of mirror or a translucent material,

∘ "parapet reflector" (prla) which horizontally reflects the sun beam (sv), which is vertically reflected while skipping the upper 5-6 storeys, and which is placed in line with the parapet,

∘ "parapet reflector" (pr1) which vertically reflects the sun beam horizontally reflected via the "parapet reflector" (prla) to the storey reflectors (sr) in front of the 5-6 storeys in the middle parts of the building, and which is placed on the level of the parapet of the storey above this 5-6 storey group,

∘ storey reflectors (sr) which reflect the sun beam (sv) reflected by the "parapet reflector" (pr1), into the indoor spaces, and which is located in front of the windows of the 5-6 storeys in the middle parts of the building.

- The third set operating for the reflection for the 5-6 storeys at the upper parts of the building comprises;

  ∘ "active roof solar reflector no 3" (arsr3) which is placed on a strut on the roof,

  ∘ "stationary roof solar reflector no 3" (srsr3) which is right below the "active roof solar reflector no 3" (arsr3) and which is positioned in its projection at a horizontal angle of 45 degrees and which is made of mirror,

  ∘ "stationary eaves solar reflector no 3" (sesr3) which is positioned on the eaves in the horizontal level of the "stationary roof solar reflector no 3" (srsr3) and which is made of mirror or a translucent material,

  ∘ storey reflectors (sr) which reflect the sun beam (sv) reflected by the "stationary roof solar reflector no 3" (srsr3), into the indoor spaces, and which is located in front of the windows of the 5-6 storeys in the upper parts of the building.

**b. Reflection of the sun beam (s) to the indoor spaces in multi-storev buildings via the "Two-piece set for reflecting the sun beam into indoor spaces" (Figure 9.2):**

1. Reflection of the sun beam (s) to the indoor spaces in the 5-6 storeys located in the middle and lower parts of the building via the first set:

   - The arrival of the sun beam (s) to the "stationary eaves solar reflector" (sesr1) is explained above. The sun beam vertically reflected by the "stationary eaves solar reflector no 1"(sesr1) arranged on the eaves, passes in front of the "storey reflectors" (sr) on the windows of the 5-6 storeys in the upper part of the building and arrives at the "parapet reflector" (prla) arranged on the parapet between two successive windows.

   - The sun beam (sh) reflected by said (prla) is transferred to the "parapet reflector" (pr1). The sun beam (sv) vertically reflected by this element is reflected into indoor spaces via the translucent storey reflectors (sr) which are arranged at a 45 degree angle in front of the windows on the 5-6 storeys in the middle part of the building,

   - A significant amount of the beam group (sv) which vertically passes through the translucent "parapet reflector" (prla), descends by passing approximately 5-6 storeys in the middle part of the building and arrives at the "parapet reflector" (pr2a). The sun beam (s) is transferred to the "parapet reflector" (pr2) by being horizontally reflected by said "parapet reflector" (pr2a). The sun beam (sv) is vertically reflected via the "parapet reflector" (pr2) to the "storey reflectors" (sr) in front of the windows of the 5-6 storeys in the lower parts of the building and is reflected horizontally (or at different angles) into indoor spaces via said "storey reflectors" (sr).

2. Reflection of the sun beam (s) to the indoor spaces in the 5-6 storeys located in the upper parts of the building via the second set:
   The working method of the second set is explained in the first part of the "reflection of the sun beam to the indoor spaces in the 5-6 storeys in the upper parts of a multi-storey building via a three-piece set."

Since the second "active roof solar reflector no 1" (arsr1) on the roof is arranged lower than the "active roof solar reflector no 2" (arsr2) in this solution, both reflectors are able to receive the sun beams (s) directly even in the early hours of the morning.

(sesr1) "stationary eaves solar reflector no (1)" which is arranged in front of the building eaves, (sesr2) "stationary eaves solar reflector no (2)" which is arranged in front of the building eaves, (prla) "parapet reflector" arranged at a 45 degree angle on the filled wall (parapet) between two vertically successive windows. This parapet reflector (prla) transforms the vertically arriving sun beam (sv) into a horizontal one and

the "parapet reflector" (pr1) which is arranged on the level of the (prla), in a position close to the wall, at a 45 degree angle, vertically reflects the sun beam (sv), reflected to itself horizontally by the (prla), by reflecting it at 45 degrees.

The functions of the "parapet reflectors" (pr2a, pr2) are identical to those of (prla, pr1); They are responsible for transferring the sun beam (sv) to the storey reflectors (sr) arranged in front of the windows for the said beam to be reflected into the indoor spaces in the 5-6 storeys in the lower part of the building.

The "three-piece" system in Figure 9.1 differs from the "two-piece" system in Figure 9.2 in that:

- in the "three-piece" system, each set reflects the sun beam (sh) into the indoor spaces through a window group consisting of 5-6 storeys,
- whereas in the "two-piece" system in Figure 9.2, the second set reflects the sun beam (sh) into the indoor spaces through a "first" windows group consisting of the 5-6 storeys in the upper part of the building. On the other hand, after reflecting the sun beam (sd) into the indoor spaces through the "second" window group consisting of 5-6 storeys in the middle of the building, the first set reflects the sun beam (sh) into the indoor spaces through the "third" window group consisting of 5-6 storeys in the lower part of the building; and therefore reflects the sun beam (sh) into the indoor spaces through the windows of approximately 10-12 storeys. For this reason, the "two-piece set" in Figure 9.2 is more efficient.

The heating of the domestic water inside the water heater (si) placed on the floor with sun beams (Figure 9.2):

The sun beam (sv), which descends perpendicularly to the ground after passing through the translucent storey reflectors (sr) or the translucent parapet reflectors (pr), is vertically reflected to the "water heater" (si) placed horizontally on the floor and heats the water therein.

As illustrated in Figure 9.2, a system comprising "sets for reflecting sun beams into indoor spaces" arranged separately for "storey groups" consisting of approximately 5-6 adjacent storeys, for the heating and illuminating indoor spaces via indirectly reflecting the sun beams through the doors and windows on all facades of a building with particularly 5-18 storeys, and which is used for heating domestic water by reflecting said beams to the floor, may be formed with two sets.

The first set operating for the reflection for the 10-12 storeys at the middle and lowermost parts of the building comprises;

- ◦ "active roof solar reflector no 1" (arsr1) which is placed on a strut on the roof,
- ◦ "stationary roof solar reflector no 1" (srsr1) which is right below the "active roof solar reflector no 1" (arsr1) and which is positioned in its projection at a horizontal angle of 45 degrees or at a closer angle, and which is made of mirror,
- ◦ "stationary eaves solar reflector no 1" (sesr1) which is positioned on the eaves in the horizontal or near-horizontal level of the "stationary roof solar reflector no 1" (srsr1) and which is made of mirror or a translucent material,
- ◦ translucent "parapet reflector" (prla) which allows a portion of the sun beam (sv) to vertically pass through and which horizontally reflects another portion of said beam (sv), which is vertically reflected while skipping the upper 5-6 storeys, and which is placed in line with the parapet,
- ◦ "parapet reflector" (pr1) which vertically reflects the sun beam horizontally reflected via the "parapet reflector" (prla) to the storey reflectors (sr) in front of the 5-6 storeys in the middle parts of the building, and which is placed on the level of the parapet of the storey above this 5-6 storey group,
- ◦ storey reflectors (sr) which reflect the sun beam (sv) reflected by the "parapet reflector" (pr1), into the indoor spaces, and which is located in front of the windows of the 5-6 storeys in the middle parts of the building,
- ◦ "parapet reflector" (pr2a) which horizontally reflects the sun beam (sv), which is vertically reflected while skipping the upper 10-12 storeys and passing through the translucent "parapet reflector" (prla), and which is placed in line with the parapet,
- ◦ "parapet reflector" (pr2) which vertically reflects the sun beam horizontally reflected via the "parapet reflector" (pr2a) to the storey reflectors (sr) in front of the 5-6 storeys in the lowermost parts of the building, and which is placed on the level of the parapet of the storey above this 5-6 storey group,
- ◦ storey reflectors (sr) which reflect the sun beam (sv) reflected by the "parapet reflector" (pr2), into the indoor spaces, and which is located in front of the windows of the 5-6 storeys in the lowermost parts of the building.

The second set operating for the reflection for the 5-6 storeys at the upper parts of the building comprises;

- ◦ "active roof solar reflector no 2" (arsr2) which is placed on a strut on the roof,
- ◦ "stationary roof solar reflector no 2" (srsr2) which is right below the "active roof solar reflector no 2" (arsr2) and which is positioned in its projection at a horizontal angle of 45 degrees or at a closer angle, and which is made of mirror,
- ◦ "stationary eaves solar reflector no 2" (sesr2) which is positioned on the eaves in the horizontal or near-horizontal level of the "stationary roof solar reflector no 2" (srsr2) and which is made of mirror,
- ◦ storey reflectors (sr) which reflect the sun beam (sv) reflected by the "stationary eaves solar reflector no 2" (sesr2), into the indoor spaces, and which is located in front of the windows of the 5-6 storeys in the upper parts of the building.

**FIGURE 10:**

Sun beams (s) are reflected to the indoor spaces of 5-6 storeys in the "middle" and "lower" parts of a multi-storey building, in other words to 10-12 lower storeys in a 15-18 storey building, via one, two or more "remote active solar reflectors" (uasr) and one, two or more "remote reflectors" (ur1, ur2..... urn) positioned in a remote location.

In this embodiment, the aim is to free up the building roof and facade by removing certain materials from the building roof and facade by way of arranging certain mechanisms, which need to be arranged on the roof, eaves and facade of the multi-storey building, in an appropriate remote location on the building.

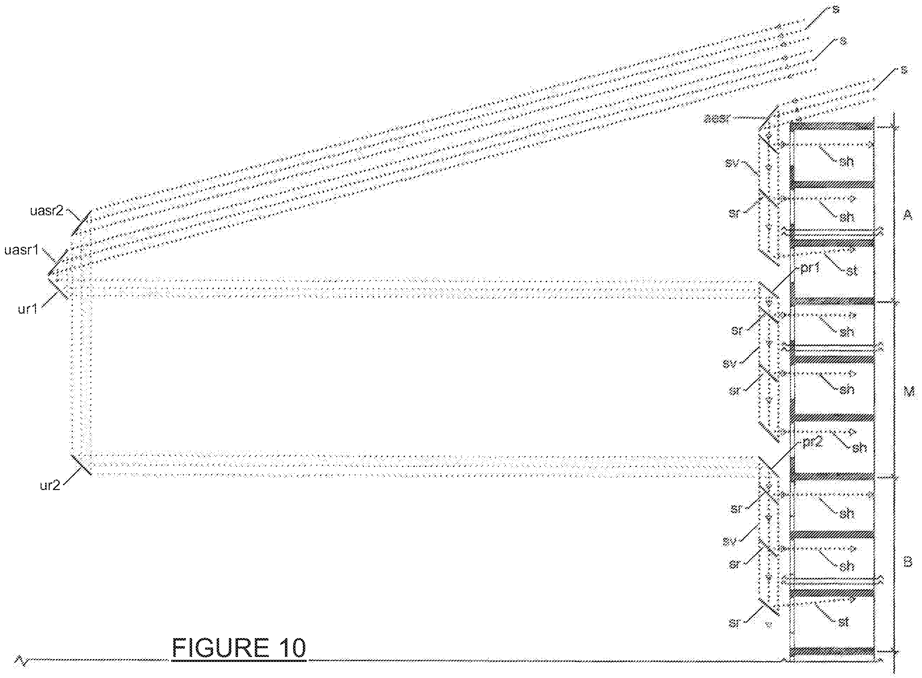

1. The sun beam (s) arriving at the "active eaves solar reflector" (aesr) arranged on the eaves of the building is vertically reflected by said element as seen in Figure 10 and said beam is reflected into the indoor spaces via the "storey reflectors" (sr) through the windows in the 5-6 storeys in the upper parts of the building.

2. The sun beam (s) arriving at the "remote active solar reflector no 2" (uasr2) is reflected to the 5-6 storeys in the lower parts of the building as seen in Figure 10.

3. The sun beam (s) arriving at the "remote active solar reflector no 1" (uasr1) is reflected to the 5-6 storeys in the middle parts of the building as seen in Figure 10.

"Reflector 1" (ur1) and "remote reflectors" (ur2) are reflectors which reflect the vertically sun beam coming thereto from above (uasr1, uasr2), to the building in a horizontal or other angle, and which are arranged remotely from the building at a 45 degree angle or another angle.

"Reflector 1" (ur1) and "remote reflectors" (ur2) are mirrors.

For the sun beams (s):

- Sun beams (sv) are vertically reflected by the "remote active solar reflectors" (uasr1, uasr2) arranged remotely from the building and transferred to the "remote reflectors (ur1, ur2) by reflection.

- Said reflectors (ur1, ur2) reflect the sun beam coming thereto horizontally and transfer it to the "parapet reflectors" (pr1, pr2) which are arranged on the facade of the building at the parapet level.

- The horizontally reflected sun beam (s) is vertically reflected by the "parapet reflectors" (p1, pr2) and the vertically reflected sun beam (sv) is transferred into the indoor spaces via the "storey reflectors" arranged in front of all storey windows.

As illustrated in Figure 10 and 23, the system comprising "elements for reflecting sun beams into indoor spaces" which are positioned partially remotely from the building and arranged separately for "storey groups" consisting of approximately 5-6 adjacent storeys, for the heating and illuminating indoor spaces via indirectly reflecting the sun beams through the doors and windows on all facades of a building with particularly 15-18 storeys, and which is used for heating domestic water by reflecting said beams to the floor; comprises:

• For the reflection of the sun beams into the indoor spaces of the uppermost 5-6 storeys of the building;

◦ active eaves solar reflectors (aesr) which are placed on the upper line of the windows in the eaves portion of the building, which follow the sun by moving on two axes (horizontal and vertical) and which reflect the incoming sun beam vertically,

◦ storey reflectors (sr) which may be positioned in front of the windows of the upper 5-6 storeys and below the active eaves solar reflector (aesr) horizontally at various angles and which reflect a portion of the sun beam to the indoor space and which allow the other portion to pass vertically,

• For the reflection of the sun beams into the indoor spaces of the middle 5-6 storeys of the building;

◦ "remote active solar reflector no 1" (uasr1) which is placed remotely from the building, which follows the sun by moving on two axes (horizontal and vertical) and which reflect the incoming sun beam vertically,

◦ "remote reflector no 1" (ur1) which is located in the projection of the "remote active solar reflector no 1" (uasr1), which reflects the sun beam vertically reflected via the "remote active solar reflector no 1" (uasr1) horizontally or at an angle to the horizon, and which is located remotely from the building at the level of the parapet,

◦ "parapet reflector no 1" (pr1) which is placed at the parapet level of the storey above the 5-6 storey group in the middle part of the building in order to vertically reflect the sun beam reflected via the "remote reflector no 1" (ur1) horizontally or at an angle to the horizon,

○ storey reflectors (sr) which reflect the sun beam (sv) reflected by the "parapet reflector no 1" (pr1), into the indoor spaces, and which are located in front of the windows of the 5-6 storeys in the middle parts of the building,

- For the reflection of the sun beams into the indoor spaces of the lowermost 5-6 storeys of the building;

  ○ "remote active solar reflector no 2" (uasr2) which is placed remotely from the building, which follows the sun by moving on two axes (horizontal and vertical) and which reflect the incoming sun beam vertically,
  ○ "remote reflector no 2" (ur2) which is located in the projection of the "remote active solar reflector no 2" (uasr2), which reflects the sun beam vertically reflected via the "remote active solar reflector no 2" (uasr2) horizontally or at an angle to the horizon, and which is located remotely from the building at the level of the parapet,
  ○ "parapet reflector no 2" (pr2) which is placed at the parapet level of the storey above the 5-6 storey group in the lowermost part of the building in order to vertically reflect the sun beam reflected via the "remote reflector no 2" (ur2) horizontally or at an angle to the horizon,
  ○ storey reflectors (sr) which reflect the sun beam (sv) reflected by the "parapet reflector no 2" (pr2), into the indoor spaces, and which are located in front of the windows of the 5-6 storeys in the lowermost parts of the building.

**FIGURE 11:**

The conditions of the "active eaves solar reflectors" (aesr), which are arranged in front of the eaves on the roof and which always reflect the sun beams (s), which arrive at various angles and from various directions depending on the hour of the day, in the vertical direction perpendicular to the horizon, within the limits of movement during:

- morning hours (Figure 11.1)
- afternoon hours (Figure 11.2)
- evening hours (Figure 11.3)

are presented when the sun beam is reflected thereto.

The section of the building roof and the section (Section A-A) of the "active eaves solar reflector" (aesrs) in the event of sun beam (s) arriving from the east in the morning at an elevation angle (alpha) of 15 degrees can be seen in Figure 11.5. The section illustrates that the sun beam (s4) hits the center point (m) of the "active eaves solar reflector" (aesrs) in the morning position and is reflected vertically (sv4).

"Active eaves solar reflector" (aesr) rotates around both the horizontal (x - x = x1; x2; x3: xn) and vertical (z - z) axes; and therefore follows the sun on two axes.

(m) : is the center of the "active eaves solar reflector" (aesr). the moving solar reflector panel (aesr) is positioned atop a point on a strut and rotates in the horizontal and vertical directions around this point.

(x-x) axis : is the axis going through the middle of the panel while parallel to the upper and lower edges of the "active eaves solar reflector" (aesr), which always keep their horizontal conditions, and therefore through the center point (m).

(x-x) axis always maintains its position parallel to the floor (horizon) and rotates around the vertical (z - z) axis at the center point (m) while maintaining its position which is perpendicular to the sun beam, depending on the different directions taken by the sun from the morning until the evening (Section A-A).

The rotating center of the (x-x) axis is (m).

(aesrs): morning position of the (aesrs) panel in the event that the sun beam (sd) arriving "from the east in the morning" hits the (x1 - x1)axis of the "active eaves solar reflector" perpendicularly, (ascro): afternoon position of the (aeso) panel in the event that the sun beam (sg) arriving "from the south in the afternoon" hits the (x2 - x2)axis of the "active eaves solar reflector" perpendicularly, (ascra): evening position of the (aesra) panel in the event that the sun beam (sb) arriving "from the west in the evening" hits the (x3 - x3)axis of the "active eaves solar reflector" perpendicularly,

- (x1-x1 = x1) : "morning" position of the vertical axis (x-x) of the "active eaves solar reflector" (aesrs), which rotates around the vertical axis (z-z) at the center point (m),
- (x2-x2 = x2) : "afternoon" position of the vertical axis (x-x) of the "moving solar collector-reflector" (aesro), which rotates around the vertical axis (z-z) at the center point (m),
- (x3-x3 = x3) : "evening" position of the vertical axis (x-x) of the "moving solar collector-reflector" (aesra), which rotates around the vertical axis (z-z) at the center point (m),
- (m): center around which the panel (aesr) rotates on two axes,
- (z - z) : axis vertical to the horizon,
- (sd) : sun beam arriving from the east (alpha angle is assumed to be 15 degrees);
- (sg) : sun beam arriving from the south (alpha angle is assumed to be 15 degrees);

- (sb) : sun beam arriving from the west
- (ab) : arrow where the sun beam arriving from the west in the evening touches the panel (aesra) in the evening position (Figure 11.4);
- (ad) : arrow where the sun beam arriving from the east in the morning touches the panel (aesrs) in the morning position (Figure 11.4);
- (ag) : arrow where the sun beam arriving from the south in the afternoon touches the panel (aesro) in the afternoon position (Figure 11.4);
- (a) : arrow where the incoming sun beam touches (aesr) (Figure 11.4);
- (s4) : sun beam arriving to the horizon at an alpha angle of 15 degrees,
- (sv4) : sun beam reflected vertically via the panel (aesrs) in the morning position,
- (g4) : angle between the "active eaves solar reflector" (aesrs) in the morning position and the sun beam (s4) intersecting at the point (m) = 37 degrees. (Figure 11.5);
- (y4) : angle between the panel (aesrs) and the sun beam (sv4) reflected vertically at the point (m) = 37 degrees. (Figure 11.5),
- (g4 = y4),
- (alpha4) : elevation angle of the sun beam (s4) arriving from the east in the morning and from the west in the evening at the point (m) of the "active eaves solar reflector" (aesrs) in the morning position = 15 degrees;
- (beta) : azimuth angle,
- (c) : The beginning-end angle of the path followed by the sun during the period starting with the reflection of the sun beam in the morning from the east and ending in the west in the evening,

The position of the "active eaves solar reflector" (aesrs) in the event of the arrival of the sun beam (s) from the east in the morning can be seen in Figure 11.1. The axis (A - A) is perpendicular to the axis (x1).
The polar (azimuth) angle of the sun beam (sd) arriving from the east in the morning is beta.
"Active eaves solar reflector" (aesr) is a rectangular panel. It may also be a square or any other geometrical or non-geometrical form (Figure 11.1).
Figure 11.5 shows the sun beam (s4) arriving at an elevation angle (alpha4) of 15 degrees. In this case, the horizontal angle (delta y4) o the "morning position" of the panel (aesrs) becomes 52 degrees. (Figure 11.1; Figure 11.5).
The southward reflection of the sun beams after hitting the point (m) can be seen in Figure 11.1 for the beam arriving from the east (sd), in Figure 11.2 for the one arriving from the south (sg) and in Figure 11.3 for the one arriving from the west (sb).
Figures 11.1-2-3 show three separate positions for the reflection of the sun beams arriving at the "active eaves solar reflector" (aesr) arranged in front of the eaves during;

- morning,
- afternoon and
- evening

hours, whereas Figure 11.4 illustrates the morning, afternoon and evening positions, taken by rotating around the center point (m), all together.

## FIGURE 12:

Figure 12 provides the section, plan, view and projection of the arrival of the sun beam (sd = s1) from the east in the morning to the "active eaves solar reflector" (aesrs) in the morning position and the reflection of said beam, after hitting the center point (m) of the panel (aesrs) and being vertically reflected (sv), to the indoor spaces through the window glass in a horizontal (or other angle) direction by the "storey reflector" (sr).
(a-a axis) = Axis going over the panel perpendicularly to the axis (x1-x1) in the center (m) of the panel (aesrs),
(x1-x1) axis = "morning" position of the (x-x) axis going through the center (m) of the rectangular panel forming the (aesr), in parallel to the upper and lower edges of the panel, in the event that the morning sun beam (sd) arrives horizontally at an elevation angle (alpha),
(alpha1) = is the elevation angle of the sun beam (sd) arriving at the center point (m) of the (aesrs); here, the angle is taken as 15 degrees.
(beta) = is the azimuth angle of the sun beam (sd) arriving from the east,
(sd) = is the sun beam arriving at the center (m) of the panel from the east in the morning perpendicularly to the (x1-x1) axis, as seen in the plan,
(m) = is the center point around which the "active eaves solar reflector" (aesr) rotates and where the axes (x-x, a-a) of the panel which are perpendicular to each other intersect.

Figure 12 provides the plan, view, A-A and B-B sections of the position of the (aesrs) in case the sun beam (sd) arrives from the east.

In the example, (aesr) is a rectangular panel. The upper and lower edges of said panel, which are parallel to each other, maintain their horizontal conditions throughout the day.

The "active eaves solar reflector" (aesr) rotates at the fixed center point (m) around both the (x-x) axis and the (y-y) axis within certain beginning-end limits; therefore, said reflector follows the sun on two axes.

Regardless of the position of the reflector panel (aesr), the axis (x) is always parallel to the horizon.

As can be seen in the projection presented in Figure 12, the horizontal angle of the (aesrs) is 52 degrees in the event that the morning sun beam (sd) arrives at an elevation angle (alpha) of 15 degrees (Figure 1.1; Figure 2).

## FIGURE 13:

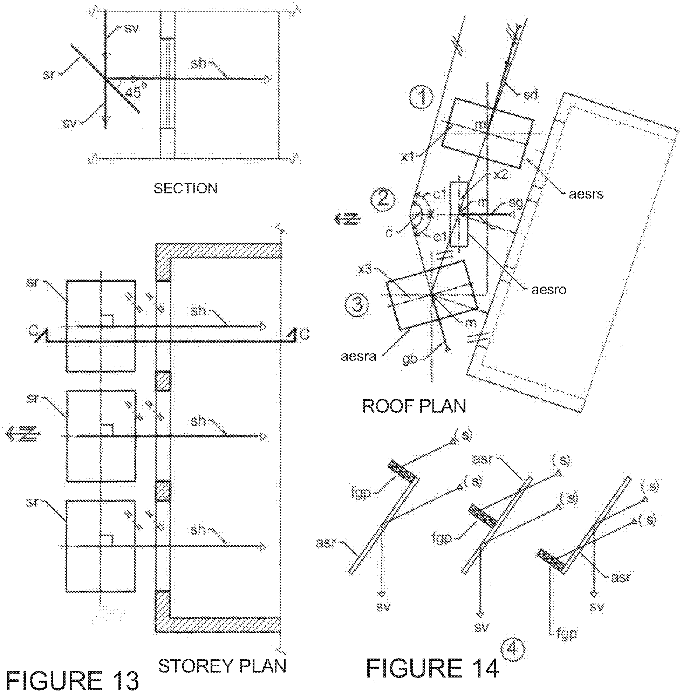

The "storey reflectors" (sr) which are arranged in front of the storey windows at an angle of 45 degrees and which reflect the sun beam (sv) vertically reflected thereto via the "stationary eaves solar reflector" (sesr) on the eaves, "conic stationary eaves reflector" (ksesr) or the "active eaves solar reflector" (aesr), to indoor spaces by transforming said beam into a horizontal one (sh), can be seen in the plan and section provided in Figure 13.

-    (sr): "storey reflector" made of glass, organic glass, etc., which is arranged in front of the windows at a horizontal angle of 45 degrees, which has the capacity to "pass and reflect light" and which has a form of a rectangle or other different geometrical forms.
-    (sv) : sun beam traveling in vertical direction,
-    (sh) : sun beam traveling in horizontal direction,

## FIGURE 14:

In the above-mentioned examples, it is assumed that the northern facades of the buildings, on the eaves of which "solar reflectors" are placed, are always perpendicular to the north. However, it is clear that the northern facades of the buildings cannot always be arranged perpendicular to the north.

The various positions of the "active eaves solar reflector" (aesr) arranged on the eaves in cases of receiving the sun beam in the morning, afternoon and the evening, and the relations thereof with the building, in the event that the line defined by the northern facade of the building is not perpendicular to the north-south pole axis, in other world being angled, is shown in Figure 14:

-    position of (aesrs) and the relation thereof with the building in case the sun beam (sd) arrives from the east in the morning (Figure 14.1),
-    position of (aesro) and the relation thereof with the building in case the sun beam (sg) arrives from the south in the afternoon (Figure 14.2),
-    position of (aesra) and the relation thereof with the building in case the sun beam (sb) arrives from the west in the evening (Figure 14.3).

The position of the (aesrs) in the roof plan presented in Figure 11 in case the morning sun beam (sd) arrives from the east (Figure 11.1); and the position of the "active eaves solar reflector" (aesra) in the roof plan presented in Figure 11.3 in case the evening sun beam (sb) arrives from the west, are symmetrical to each other on both sides of the line drawn perpendicularly from the center point (m) in Figure 11.2 to the facade of the building. Yet, the morning position of the "active eaves solar reflector" (aesrs) seen in Figure 14.1 and the evening position of the "active eaves solar reflector" (aesra) are not symmetrical to each other on both sides of the line drawn from the center point (m) in Figure 14.2 to the north. Furthermore, they are not symmetrical to each other on both sides of the line drawn from the center point (m) to the facade of the building. However this feature is not significant in terms of the extent of the ability of these collector-reflector panels to reflect incoming sunlight in vertical direction.

-    (c) : Angle of the path followed by the sun from the beginning of the reflection as the "active eaves solar reflector" (aesr) starts vertically reflecting the sun beam (sd) arriving from the east and the end of said action when said reflector vertically reflects the last sun beam arriving from the west (sb) in the evening (Figure 11 and Figure 14),
-    $c_1 = c/2$ (Figure 14),

"Photovoltaic solar panel" (fgp) alternatives placed on the bottom, middle and top parts of the "active eaves solar reflectors" (aesr) can be seen in Figure 14.4. The sun beam passing through the transparent (aesr) produces electrical energy after reaching the (fgp). As direct sun beams are to be received when the (fgp) is arranged over the panel, this is a more rational solution. The "active eaves solar reflectors" (aesr) will benefit from the solar energy via the electricity produced by the sun beams thanks to the (fgp) panels, and therefore will move at a much less cost. Thus, the carrying of the sun beam = solar energy inside the building will be much less costly.

It is also possible to implement (fgp) panels with various mechanisms.

## FIGURE 15:

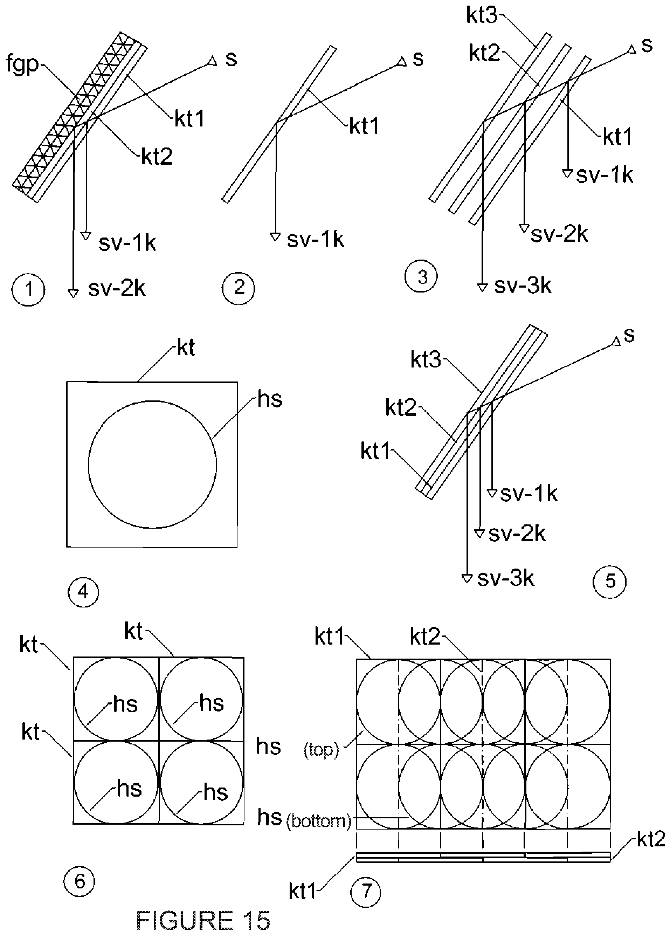

Figure 15 illustrates various alternatives of the stationary or active solar reflector. A layered reflector (kt1) made of opaque reflective mirror or translucent and reflective glass, organic glass, etc. is shown in Figure 15.2. These materials called "layers" (kt): can be used in all reflective panels.

In the solution presented in Figure 15.2, the arriving sun beam (s) is reflected vertically (sv) via "layer 1" (kt1). Even though the intensity of the light decreases a little in this implementation, the intensity of the arriving and reflected lights are close to each other.

Figure 15.3 illustrates the three piece "solar reflector "(kt1 + kt2 + kt3) arranged in parallel to one another with a certain distance between them. In this solution, (kt1) and (kt2) are made of translucent and reflective materials. However, (kt3) may be arranged as a mirror etc. in order to vertically reflect the incoming sun beam (s) more intensively. Description of Figure 15.3:

> 1. a beam (s) coming from the sun first hits (kt1) and a portion thereof (sv-1k) is vertically reflected; the other portion passes through (kt1) and is directed towards (kt2);
> 2. a portion of the sun beam (s) which is directed to (kt2) after passing through the translucent panel (kt1), is vertically reflected (sv-2k) by (kt2); the other portion passes through (kt2) and is directed towards (kt3):
> 3. the whole beam which hits the translucent or mirror panel (kt3) is vertically reflected (sv-k3) by (kt3).

The panel (kt3) may be of translucent material; in this case, however, the intensity of the sun beam (sv) which is vertically reflected will decrease by a small margin compared to the mirror.

In this solution, the incoming sun beam (s) is reflected vertically via (kt1), (kt2) and (kt3) separately as (sv-1k), (sv-2k) and (sv-3k) while nearly multiplying its light intensity three times. The light intensity of the sun reflected vertically with this method is multiplied nearly three times and is reflected first in the vertical direction and then into the indoor spaces. Thanks to said method, the sun beam energy increases approximately 300%. The actual values may be obtained through experiments.

The method and function of the solution in Figure 15.3 are the same as the alternative solution in Figure 15.5. The sole difference is that the in Figure 15.5, the layers made of reflective-translucent glass or translucent materials such as artificial glass, etc. are attached to one another.

In the alternative solution presented in Figure 15.1, it can be seen that a portion of the incoming sun beams (s) are vertically reflected (sv) while passing through two translucent and reflective materials adjacent to each other, and then said beams reach the photovoltaic solar panel (fgp) and are vertically reflected while also generating electrical energy in this panel.

Thus, a solar reflector panel both reflects the sun beam (s) vertically and generates the electrical energy required for said panel and other panels to follow the sun on two axes if needed.

Hotspot (hs) reflected on the layer (kt) of a solar reflector can be seen in Figure 15.4. Here, a hotspot is reflected in a unit area.

Four hotspots (hs) reflected on a "layer" (kt) comprising four parts can be seen in Figure 15.6. In this solution, it is possible to reflect a few times more of the sun beam in a single layer (kt). Therefore, it is enabled to multiply the hotspot light intensity of the sun.

In Figure 15.7, numerous hotspots (hs) will be reflected via the solar reflector obtained by horizontally shifting and connecting two or three translucent-reflective layers, made of planar parts which are adjacent and attached to one another side by side, under each other. Thus, a unit area will reflect a solar energy with a greater intensity than the solar energy it collects.

- (kt1); (kt2); (kt3) = Reflective layers of the solar reflector,
- fvp = photovoltaic solar battery
- (sv-1k; sv-k2, sv-3k) = vertically reflected sun beams,
- (bottom) = reflective bottom layer,
- (top) = reflective top layer
- (hs) = hotspot

As shown in Figure 15, in the system which is developed for heating and illuminating indoor spaces via indirectly reflecting the sun beams through the doors and windows on all facades of the building, and which is used for heating domestic water by reflecting said beams to the floor; conic stationary eaves solar reflectors (ksesr), active eaves solar reflectors (aesr), stationary eaves solar reflectors (sesr), "active roof solar reflectors no 1, 2 and 3" (arsr1, arsr2, arsr3), "stationary roof solar reflectors no 1, 2 and 3" (srsr1) and/or "parapet reflectors no 1 and 2" (pr1 and pr2) may be arranged;

- in a way that they are made of single layered, multi-layered translucent materials or mirror, or
- in a way that a mirror or photovoltaic solar battery will be present as an additional layer in case they are made of single or multi layered and translucent materials, or
- in a way that they all include one or multiple layers made of translucent materials, which are positioned adjacently or with spaces between them, or
- in a way that the rearmost later is a mirror or photovoltaic solar battery in case there are two layers, or
- in a way that they are made of numerous translucent and reflective materials which are adjacent side by side and/or under each other without being monolithic.

**FIGURE** 16:

In Figure 16.1, it is shown how the light intensity decreases while the sun beam (sv) vertically reflected by arriving at the (sesr-aesr) arranged on the eaves passes through the storey reflectors (sr) arranged in front of the windows in all storeys and goes to the storey reflectors in a lower storey; and therefore how the intensity of the sun beam (sv) reflected into the indoor spaces in the lower storeys gradually decreases compared to the upper storeys.

Alternative solutions, regarding the arrangement of the moving solar reflector on the eaves (aesro) and on the roof (arsro) in the vertical radiation of the afternoon sun at an elevation angle (alpha), can be seen in Figures 16.2-3.

Description of Figure 16.4:

- The sun beam (s) arriving at the "active roof solar reflector" (arsrs), which is arranged on the roof, in the morning at an angle (alpha) of 15 degrees, is vertically reflected by said reflector and is directed towards the "stationary roof solar reflector" (srsr) arranged on the roof at an angle of 45 degrees.
- The "stationary roof solar reflector" (srsr) reflects the sun beam (sh), which arrives vertically thereto, in the horizontal direction and reflects said beam to two "stationary eaves solar reflectors" (sesr1, sesr2) arranged back to back on the eaves at the same level.
- The horizontal sun beam (sh) arriving at the "first stationary eaves solar reflector" (sesr1) horizontally passes through said transparent reflector and is reflected to the "second stationary eaves solar reflector."
- The "stationary eaves solar reflectors" (sesr1, sesr2), arranged on the eaves at a 45 degree angle, reflect the horizontally incoming sun beam (sh) vertically.
- The sun beam (sv) vertically reflected by (sesr1) and (sesr2) is reflected into the indoor spaces via the "storey reflectors" (sr) arranged in front of the windows in all storeys at a 45 degree or variable angle.
- Sun beam is reflected to the indoor spaces in the upper storeys via the "first stationary eaves solar reflector" (sesr1) and to the indoor spaces in the lower storeys via the "second stationary eaves solar reflector" (sesr2) (Figure 16.4).

Figure 16.2 illustrates the plan, section and view of the arrangement of the (aesro) in the afternoon position in front of the building eaves.

The arrangement of the "active roof solar reflector in afternoon position" (arsro) on the roof of the building can be seen as a plan and a section in Figure 16.3.

In order to facilitate the maintenance-repair of the joints and panels of the active solar reflectors, said reflectors are slid backwards from the front of the eaves onto the roof (Figures 16.3-4).

Arrangement of the (arsro) "on the roof" for the horizontal radiation of the sun in the afternoon at an elevation angle (alpha)

- (so = sg) ; Sun beam arriving in the afternoon at an elevation angle (alpha),
- (sd) : sun beam arriving from the east in the morning
- (sg) = sun beam arriving from the south
- (sv) = vertically reflected sun beam,
- (m) = is the center point of (aesr) or (arsr) and is placed to the top end point of the strut (di) at this center (m); the panel forming the solar reflector moves by rotating on two axes around this point (m),
- (sh) = sun beam reflected horizontally into the indoor space,
- (alpha) = horizontal elevation angle of the incoming sun beam,
- (di) = strut placed from the center point (m) of the panel (ascr) to the top end thereof in a hinged fashion,
- (sr) = storey reflector,
- (t) = structure carrying (arsr-srsr),

- (srsr) = "stationary roof solar reflector" arranged on the roof,
- (sesr1 - sesr2) = "stationary eaves solar reflectors" arranged in front of the eaves of the building at the roof level..

Figure 16.2 illustrates the status of the "active roof solar reflector" (aesro) arranged in front of the eaves at the roof level, in the event that the sun beam (sg) arrives from the south. The working principle of this method is described above with Figure 11, Figure 12 and the relevant descriptions. The main feature of the method is that the (aesr) is arranged right in front of the roof eaves, at a small distance from the eaves.

It can be seen in Figure 16.3 that the "active roof solar reflector" in the afternoon position = (arsro) is arranged on the roof and that the sun beam (sg) arrives from the south at an elevation angle (alpha). The sun beam (sg = so) hitting the (arsro), which is positioned on the center point (m) on the strut (di) so that it can move on two axes, in the afternoon from the south at a near-right angle; is vertically reflected by said panel to be reflected to the "stationary roof solar reflector" (srsr) arranged below it, in its projection and at a horizontal degree of 45 degrees on the roof. (srsr) reflects the sun beam (sv), arriving vertically thereto, in the horizontal direction and transfers said beam to the "stationary eaves solar reflector" (sesr) arranged at a horizontal angle of 45 degrees on the eaves of the building. The sun beam (s) vertically reflected in parallel to the building facade by the (sesr), is horizontally reflected (sh) into the indoor spaces via the storey reflectors (sr) arranged in front of the windows at an angle of 45 degrees (Figure 16.3).

The "roof plan" in Figure 16.3 shows the positions of:

- (arsro) = "active roof solar reflector" in the afternoon position,
- (srsr) = "stationary roof solar reflector",
- (sesr) = "stationary eaves solar reflector"

in case the sun beam (so = sg) arrives in the afternoon.
In the event that the sun beam (sg=so) arrives in the afternoon, the azimuth angle (beta) is 180 degrees.

In the 0.00 level plan presented in Figure 16.3, the storey reflector (sr) arranged in front of the windows and the reflection of the sun beams (sh) into the indoor spaces via said reflector can be seen.

The difference between the system seen in Figure 16.4 and the system in Figure 16.3 is that in the former system, two "static eaves solar reflectors" (sesr1; sesr2) are arranged not on the eaves level of the building but side by side with a certain space between them.

The purpose of arranging the second "static eaves solar reflector" (sesr2) on the eaves is to vertically reflect (sv) the sun beams (sh) passing horizontally from the first "stationary eaves solar reflector" (sesr1), via the "second stationary eaves solar reflector" (sesr2) in order to directly transfer the sun beams to the storeys in the lower parts of the building so as to allow said storeys to receive more sunlight. Otherwise, the sun beam (sv) passing through the "storey reflectors" (sr) via a single (sesr) in front of the windows, starting from the top floor, will have almost no light intensity by the time it reaches the storey reflector (sr) 8 storeys below.

In case the "active eaves solar reflector" (aesro) with a single layer (kt) is used; due to the "active roof solar reflector" (arsro), which will collect the sun beam (s) arriving at an angle close to 90 degrees in the afternoon hours and vertically direct said beams, being in a near-upright position, the area and therefore the amount of sun beams (s) reflected to the floor decreases too much (Figure 16.3). Looking at the section in the 0.00 level in Figure 16.3, it can be seen that the amount of sun beam (s4) arriving at the nearly upright (arsro) is really low and correspondingly, the amount of light (sh), which arrives respectively to (srsr), (sesr) and finally to the storey reflector (sr), reflected into the indoor space via the storey reflector (sr) is really low. The three-piece (aesr) system developed to overcome said inconvenience is explained below:

The "three-piece active eaves solar reflector" (aesro-3), which consists not of a single layer (kt) but three layers (kt1+kt2+kt3) made of translucent materials such as glass, etc. (described in Figure 15), arranged on the eaves in the afternoon position can be seen in the section and view presented in Figure 16.2. In this way, the reflection area of the sun beam (sv) reflected by this "three-piece" "active eaves solar reflectors" (aesro-3) in the vertical direction towards the storey reflectors (sr), and therefore the intensity of the sun beam (sh) transferred into the indoor space via the (sr) significantly increase in the afternoon, when the light intensity of the sun is at the highest. Thus, great efficiency is obtained in terms of heating and illuminating the indoor spaces.

As can be seen in the section presented in Figure 16.4, when a single layered (kt1) eaves solar reflector is used, the amount of sun beam (sh) reflected into the indoor space in the afternoon position is (one). As can be seen in the section presented in Figure 16.2, when a three layered (kt1+kt2+kt3) eaves solar reflector (aesro-3) is used, the amount of sun beam (sh) reflected into the indoor space in the afternoon position is (three). Therefore, the "three layered" reflection system is approximately three times more efficient than the "single layered" system.

It can be seen in the section presented in Figure 16.3 that the "stationary roof solar reflector" srsr) is placed inside the inclined roof.

(aesro-3) : three-piece active eaves solar reflector,

(one) : the amount of sun beams (sh) reflected inside the indoor space in the afternoon via the (aesro) comprising a single layer (kt),

(three) : the amount of sun beams (sh) reflected inside the indoor space in the afternoon via the (aesro-3) comprising three layers (kt1+kt2+kt3).

### FIGURE 17:

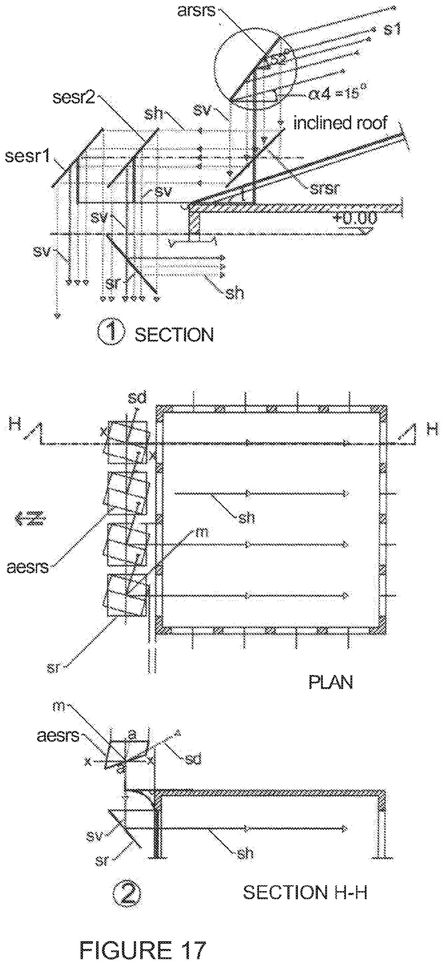

In Figure 16.4, a terrace (flat) roof is used in the system for reflecting sun beams to indoor spaces. In Figure 17.1, it can be seen that an inclined roof is used instead of a terrace (flat) roof for reflecting sun beams. Here, the "stationary roof solar reflector" (srsr) is placed on the inclined roof plane.

The plan presented in Figure 17 shows the positions of "active solar collectors-reflectors" (aesrs) and storey reflectors (sr), which are arranged in front of the eaves on the northern facade of a square planned building with, for example, four windows on each facade; in case the sun beam (sd) arrives "from the east in the morning."

- (sd) sun beam arriving from the east in the morning,
- (aesrs) position of the "active eaves solar reflector" in case the sun beam (sd) arrives from the east in the morning,
- (sr) "storey reflector" arranged in front of the windows at 45 degrees or at variable angles,
- (sv) vertically reflected sun beam,
- (sy) sun beam reflected horizontally into the indoor space.
- (x-x) axis which goes through the center (m) of the panel (aesrs) and which is parallel to the top-bottom edges,
- (a-a) axis which goes through the center (m) of the panel (aesrs) and which is perpendicular to the (x-x) axis,

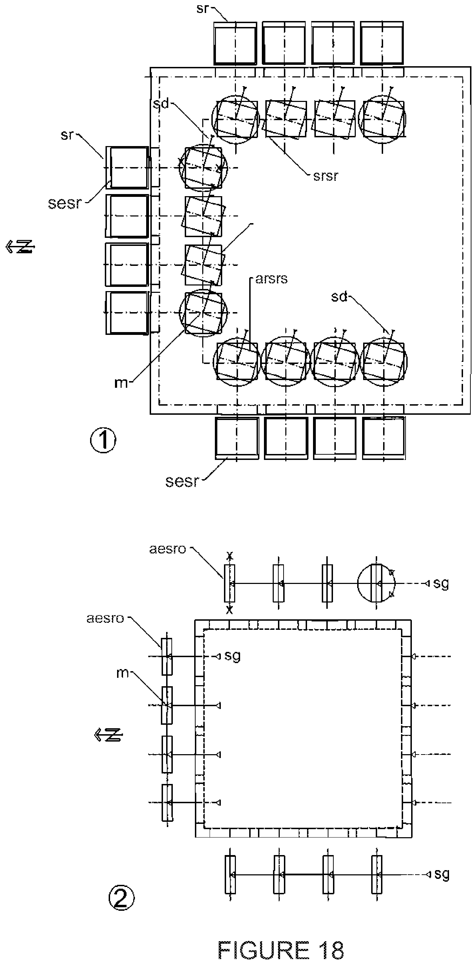

The signs described in Figure 17 can be used as reference for the signs repeated in Figures 18-19-20.

The section presented in Figure 17.1 illustrates the arrangement of the active solar reflector (arsrs) on the roof and the arrangement of two stationary reflectors (sesr1; sesr2) back to back on the eaves. The section (H-H) in Figure 17.2 shows the reflection of the sun beam arriving from the east in the morning into indoor spaces.

### FIGURE 18:

Figure 18.1 shows the positions of "active roof solar reflectors" (arsrs), "stationary roof solar reflectors" (srsr), which are arranged on the roof of a building with, for example, four windows on each facade; "stationary eaves solar reflectors" (sesr) and "storey reflectors" (sr) arranged on the eaves; in case the sun beam (sd) arrives from the east in the morning.

Figure 18.2 shows the positions of the "active eaves solar reflectors" (aesro), which are included in the system for reflecting sun beams into indoor spaces "which do not receive direct sunlight" and which are arranged in front of the eaves on "all facades except for the southern one" (east - north - west) in the building with, for example, four windows on each facade; in case the sun beam (sg) arrives from the south.

- (sg) sun beam arriving from the south
- (aesro) positions of the "active eaves solar reflector" in case the sun beam (sd) arrives from the south in the afternoon,

### FIGURE 19:

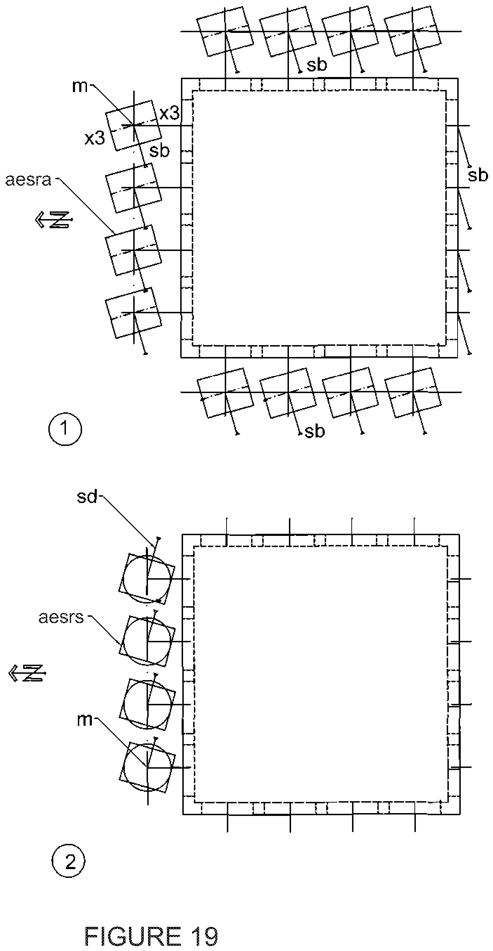

Figure 19.1 shows the positions of the (ascra) which are arranged on the eastern, western and northern facades, in case the sun beam (sb) arrives at the building from the west in the evening.

- (sb) sun beam arriving from the west
- status of the "active eaves solar reflector" (aesra) in case the sun beam (sb) arrives from the west in the evening,

Figure 19.2 shows the morning positions of the active eaves solar reflector (aesrs) arranged on the northern facade of the building, in case the sun beam (sd) arrives at the building from the east in the morning.

### FIGURE 20:

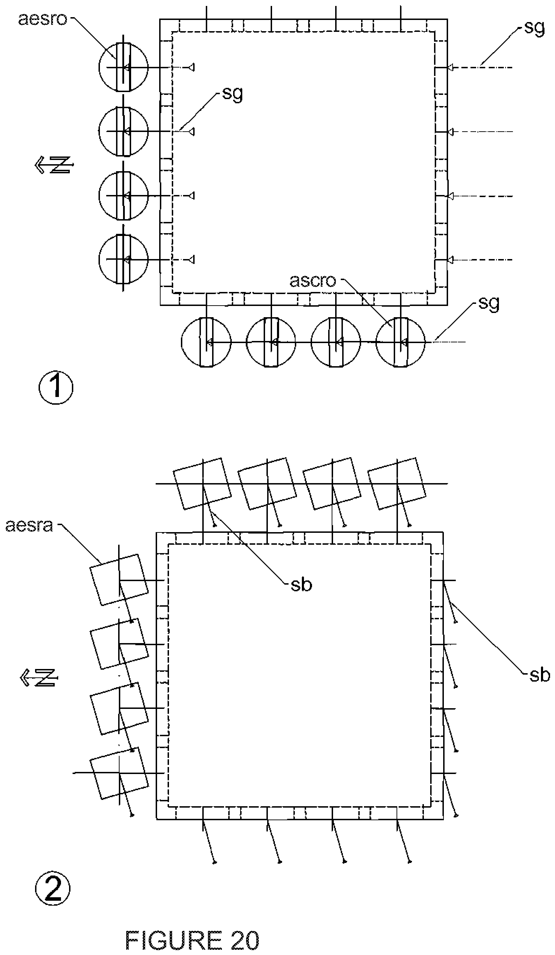

Figure 20.1 shows the positions of the (aesro)s on the northern facade of the building, in case the sun beam (sg) arrives at the building from the south in the afternoon.

- (aesro) position of the "active roof solar reflector" in case the sun beam (sg) arrives from the south in the afternoon,

Figure 20.2 shows the positions of the (aesra)s arranged on the eaves of the northern and eastern facades of the building, in case the sun beam (sb) arrives at the building from the west in the evening.

- (sb) sun beam arriving from the west
- (aesra) : position of the "active eaves solar reflector" in case the eastern sun beam (sb) arrives in the evening.

FIGURE 21:

Figure 21.1 shows in three dimensions how the sun beams (s) are reflected to indoor spaces during the day from the windows of the storeys in the upper and lower sections of 12-15 storey buildings. The form and method for the reflection of the sun beam (s) presented in three dimensions in the Figure are explained in the description of Figure 8.3.
Figure 21.2 shows in three dimensions how the sun beams (s) are reflected to indoor spaces during the day from the windows of the storeys in the upper, middle and lower sections of 15-18 storey buildings. The form and method for the reflection of the sun beam (s) presented in three dimensions in the Figure are explained in the description of Figure 9.2.

FIGURE 22:

Figure 22.1 shows how the sun beams (sd) arriving from the east are reflected into indoor spaces through the windows on the four facades of the multi-storey building facing north, south, east and west. In this method, "active roof solar reflector 1" (arsr), "stationary roof solar reflector 1" (srsr1) and "stationary eaves solar reflector 1" (sesr1) arranged on the roof, are used. The two-piece version of this single set comprising three parts (arsr1; srsr1; sesr1) can be seen in the section presented in Figure 9.2 and the three-piece version of said set can be seen in the section in Figure 9.1.
Figure 22.2 shows the reflection of the sun beams (sb) arriving from the west into indoor spaces through the windows on the four facades of the multi-storey building facing north, south, east and west. In this method, there is only one "active eaves solar reflector" (aesr) in front of the eaves at the upper level of each window. The figure shows the positions of the "active eaves solar reflectors" (aesra) in case the sun beam (sb) arrives from the west and how said reflectors vertically (sh) reflect the beams arriving thereto. The figure also shows how the vertically (sh) traveling sun beams (sh) are transformed into horizontal ones via "storey reflectors" (sr) arranged in front of each window and how they are reflected into indoor spaces. The section of this method is provided in Figures 8.1-2.
Figure 22.3 shows the actual spatial and three dimensional status and the horizontal projection of the "solar reflection path" (syy).
The center of both ellipses are at a single point and the "building", whose indoor spaces receive the reflected sun beam (sh) through the windows on the facades thereof, is located at said point.
(sd) is the three dimensional spatial status of the sun beam arriving at the building from the east.
(sb) is the three dimensional spatial status of the sun beam arriving at the building from the west.

FIGURE 23:

In Figure 23, it can be seen that the sun beam reflected by the "remote reflectors" (ur1, urs) are angled, not parallel, in contradiction to the solution in the remote reflection method presented in Figure 10. Thus, it is possible to arrange said reflectors in a location close to the ground.
All horizontal, vertical and angled reflector positions and light reflection angles stated in the description of the present invention have certain deviation tolerances.
In the various embodiments of the above-mentioned system developed by the present invention for heating and illuminating indoor spaces by reflecting sun beams through the door and window openings on the facades of the buildings and for heating domestic water by reflecting said sun beams to the floor; there may be water heaters (SI) located under the storey reflectors (sr) and on the ground. Thus, water heating can be provided.

**OTHER DETAILS IN THE EMBODIMENT OF THE SYSTEM**

In the system,

- Electric resistance wires can be provided within the materials such as transparent or non-transparent glass, etc., in order to prevent possible snow accumulation and icing.
- The surfaces of the materials such as transparent or non-transparent glass, etc. may have dirt-resistance and dirt-repelling properties.

## 6. INDUSTRIAL APPLICABILITY OF THE PRESENT INVENTION

The sun beam (s) which is collected via the stationary "solar eaves reflector" (ser) or active solar collector-reflector" (ascr) arranged in front of the building eaves or on the roof; is reflected into the indoor spaces in all facades of the building during the day as long as the sun is visible, through windows openings, via translucent and reflective "storey reflectors" (sr) arranged in front of said windows at an angle of 45 degrees or at variable angles; as said beam is descending to the ground while passing in front of the numerous windows located under each other, while also being vertically reflected along the facade of the building. Thus, the indoor spaces are heated and illuminated by reflecting the sun beam (s) into the indoor spaces on the facades of the building which do not receive sunlight.

Innovations provided by the invention:

An innovation provided by the invention is to allow the sun beam (s) to enter inside the indoor spaces from all facades of the building, by reflecting said sun beam (s) into the indoor spaces in three facades of the building, via arranged reflective panels as the sun beam (s) arrives at a facade (southern) of the building.

Another innovation is to enable the sun beam to be reflected into the indoor spaces through the windows in all facades of the building, including the eastern one not receiving sunlight, via stationary and/or reflective panels arranged on the eaves and roof of the building and in front of the windows thereof, as the sun beam arrives, for example, at the southern facade of the building. This means that, when the developed mechanism is installed, all facades in the building will simultaneously receive, three indirectly and one directly, the sunlight throughout the day. Thus the spaces will be illuminated and heated throughout the day.

In the event that the sun beam arrives from the southeast, indirect sun beam will be reflected into the indoor spaces on the northern and western facades of the building, which do not receive sunlight, via the reflective panels as mentioned above. In the event that the sun beam arrives from the southwest, indirect sun beam will be reflected into the spaces in the northern and eastern facades of the building in a similar fashion to that described above.

In case the mechanisms of the present invention are placed on the eastern, northern and western facades of the building, regardless of the direction the sun is coming from, one or two facades will receive the sun beam directly while the other two or three facades will receive said beams indirectly. Thus, all facades of the building will receive solar energy partially in a direct and indirect manner.

Another innovation provided by the invention is that, the sun beam (s) vertically reflected via the solar collector-reflector arranged on the roof of the building, passes through the translucent storey reflectors (sr) or is directly reflected in order to heat the water inside the water heater (si) arranged horizontally on the floor.

Thanks to the invention, the costs for heating and illuminating the building will decrease and so will the expenses for heating the domestic water.

In the radiator calculation of the buildings with central heaters, the number of radiator sections in the northern facades of the building is provided by increasing the number 20% than those in the south-facing facades. This means that 20% more fuel = energy is spent for heating the indoor spaces in the northern facade of the building when compared to the spaces in the southern facade. Since approximately half of the building spaces face north, the indoor spaces in the north-facing facades increase the total heating cost of the building by 10% due to lack of sun beams.

Thanks to the present invention, the 10% increase in the costs, due to the sun not being able to enter the spaces in the northern facades of the building, will be saves by indirectly reflecting sun beams to the indoor spaces in the north.

The annual current deficit of Turkey is around 50 billion USD. Since 40% this stems from energy expenditures, the amount Turkey spends outside for energy importing is 20 billion USD. As the amount of foreign currency transferred abroad for energy import is around 20 billion USD, a 10% saving on this expense item reaches up to 2 billion USD.

The annual spending for the heating of 9 million housings and the structures for financial, industrial, administrative, military, educational, health care etc. purposes, makes up 40% of the total energy spending of Turkey.

1. The ENERGY IMPORTED by Turkey was 65.4 billion USD in 2013.

2. 40% OF THE TOTAL ENERGY CONSUMED in TURKEY is allocated for HEATING BUILDINGS.

3. In 2013, 26 billion USD, which makes up 40% of the 65.4 billion USD spent on ENERGY IMPORT, has been spent for "HEATING BUILDINGS."

4. The CURRENT DEFICIT of Turkey is expected to be 50 billion USD in 2014.

5. 26 billion USD spent annually for HEATING BUILDINGS is 52% of the 2014 CURRENT DEFICIT which is expected to be 50 billion USD.

Therefore "half of the current deficit is caused by the "expenses for heating buildings.""

In the system developed with the present invention, additional heating is provided by reflecting the heat energy radiated by the sun beams into rooms facing the north, east and the west; so, the necessity to use 20% additional radiator sections in the north-facing rooms is no longer valid; thus, a 10% saving is achieved in the heating expenditure of the building.

Since 26 billion USD (in 2013) is spent on heating all buildings in Turkey:

The innovation developed herein will save 10% in the 25 billion USD annual energy expenses and Turkey will SAVE 2.5 billion USD in annual ENERGY IMPORTS.

**The 2.5 billion USD savings in energy import will reduce the current deficit of Turkey by 5%.**

Therefore, when the system developed herein is used in all buildings in Turkey, the annual current deficit of 50 billion USD in Turkey will decrease by 2.5 billion USD and go down to 47.5 billion USD.

**COMPARISON OF THE PRESENT INVENTION WITH SIMILAR EXISTING TECHNOLOGIES IN TERMS OF CONTRIBUTION TO THE ECONOMY, PERFORMANCE AND IMPLEMENTATION**

**A) INFORMATICS:**

- Since approximately 20 years, Turkey has been directing almost all of its incentives to the hardware - software industry, which makes up half of the activities of the technology development centers in the university campuses. Despite the efforts to build so much technology centers and significant incentives, in 2012:

  - software import is 175 million USD;
  - hardware import is 262 million USD;

  and the total import amount spent on the informatics industry is 437 million USD (Gungor URAS, Milliyet Newspaper, July 30, 2013).

- There are 9 million households in Turkey. Furthermore, the total household can be calculated as 10 million when hospitals, administrative - commercial - military buildings, schools and university campuses are taken into consideration. The annual foreign currency saving capacity of the present invention is around 2.5 billion USD if it is used in 10 million households.

- Considering that 25% of the 437 million USD software-hardware import income is taxes, the amount of money to enter the Turkish treasury from the 437 million USD software-hardware import will be approximately 110 million USD.

- Yet, the state treasury will save approximately 2.5 billion USD each year in foreign currency spending for energy imports, in case the present invention regarding sun beams is implemented in the 10 million households in the country. Thus, two advantages will be present.

  a) The state will not lose foreign currency by not paying 2.5 billion USD each year to purchase energy; foreign currency amounting up to 2.5 billion USD will remain in the treasury of the Republic of Turkey.

  b) As 10% of the heating - illuminating expenses of the indoor spaces facing north and partially east and west in all households of Turkey will be covered free of charge via the "renewable" solar energy, Turkey will automatically save approximately a total of 4 billion USD in the 10 million households as 10% in heating-illumination expenses in each household.

As can be seen in the comparison above, the software-hardware industry, on which almost all incentives of the state are spent, can bring foreign currency worth 437 million USD each year and approximately 110 million USD of tax income can be made.

**B) SUN BEAM ILLUMINATION (Solatube) :**

In the sun beam illumination also called solar tunnel, a system is developed for use in dark spaces which are under the roof, covered with a suspended floor, which don't receive sunlight, such as the bathroom, doorway, dressing room and corridors. Solar tunnel extension modules (tubes) enable application up to 6 meters (RAF 38, May 2012). Sun beam illumination can be used in offices and markets as well (www.solatube.com)

The difference between the present invention and sun beam illumination is as follows: Each extension tube illuminates one space. Moreover, it does not have a capability for heating. However, the mechanism in the present invention additionally illuminates and heats many indoor spaces simultaneously.

What Turkey gains from the international implementation of the invention:

Energy is a global problem. It is possible to use the present invention in all countries in the cold climate zone north of the 42nd latitude above the equator, where Turkey is located, and the countries under the equator in the cold climate zone. Assuming that the invention is used in 5 million households in each country, which is approximately half of the 10 million households in Turkey, it is projected that 100 countries x 5 million = 500 million mechanisms of the present will be exported and assuming that the state will earn approximately 5,000 USD in foreign currencies per each exported product according to the present invention (5,000 USD x 500,000,000 = 25 billion USD), the product according to the present invention is expected to have an export income potential around 25 billion USD in sales to other countries over the years.

In the system which is used for heating and illuminating indoor spaces via indirectly reflecting the sun beams through the doors and windows on all facades of the building, and which is used for heating domestic water by reflecting said beams to the floor:

- in weathers where no sun beams are present,
- during the time since the hour the sun sets in the evening until it rises in the morning, when no sun beams arrive at the earth,
- in stormy weathers and weather with extreme winds,
- when it is not desired for the sun beams to enter the indoor spaces,

it is possible to implement methods for raising the storey reflectors (sr) above so that they are not seen in front of the window when looking outside from the indoor space or for reflecting sun beams to the flooring of the indoor space, and for arranging said reflectors (sr) by placing them over the glass of the window.

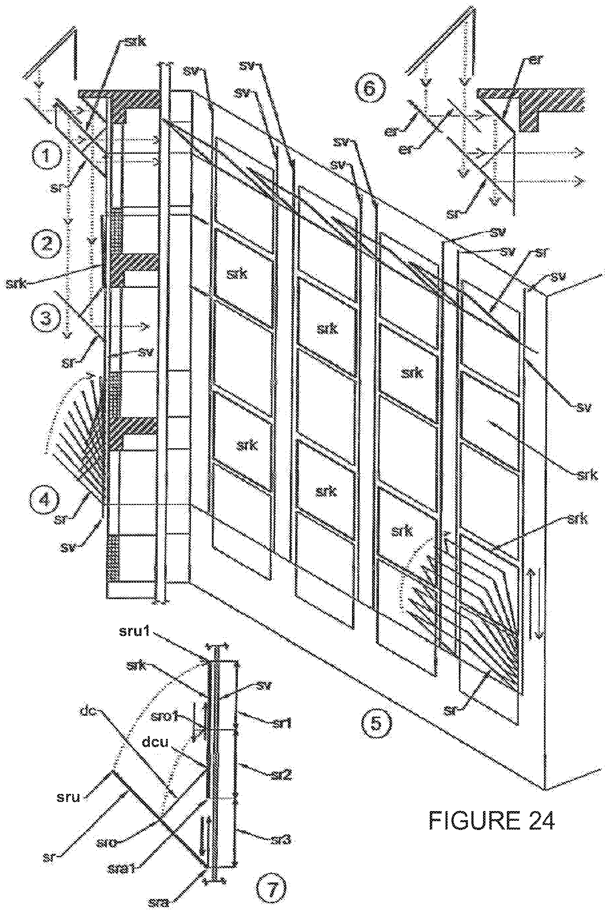

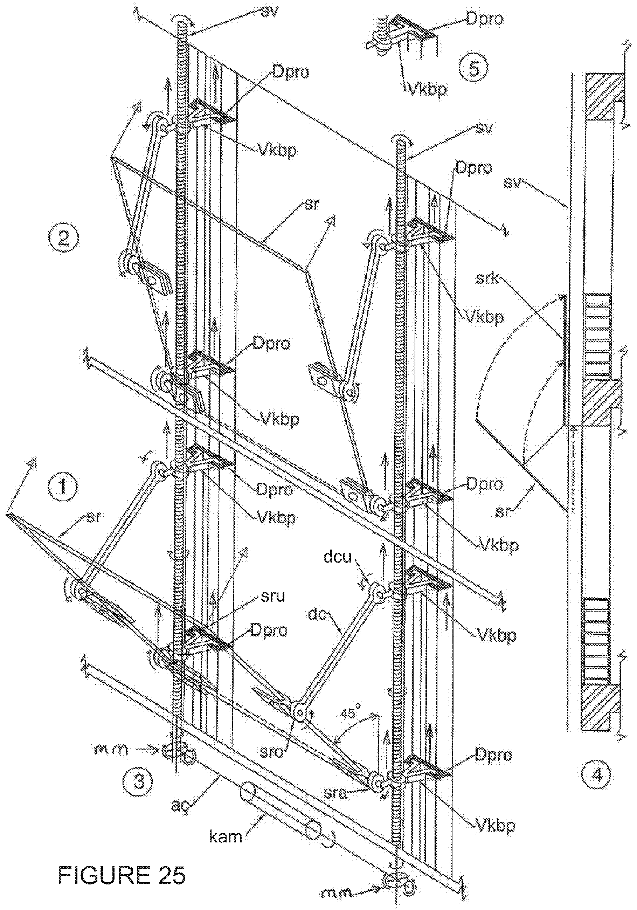

Figure 24 and Figure 25 show the aforementioned methods.

The description of the parts/elements shown in Figure 24 are as follows:

(sv) : worm screw

(srk) : closed storey reflector: closed position of the storey reflector (sr), where it is slid upwards thanks to the worm screws on the side and placed vertically in front of the parapet wall above.

(sru) : upper edge point of the storey reflector

(sra) : lower edge point of the storey reflector

(dc) : diagonal rod : rod connecting the storey reflector to the worm screw (sv)

(dcu) : upper point where the diagonal rod is attached to the worm screw (sv) in a jointed manner

(sro) : point in the middle of the storey reflector (sr) or close to the middle thereof, where it attaches to the lower end of the diagonal rod (dc) in a jointed fashion

(sro1) : points where the points (sro) in the middle of the storey reflector or close to the middle thereof arrive on the worm screw (sv) when the storey reflector (sr) is closed,

(sra1) : lower edge points of the closed storey reflector (srk) on the worm screw (sv) when the storey reflector (sr) is closed by sliding upwards and becoming vertical in front of the parapet wall of the floor above,

(sru1) : upper edge points of the closed storey reflector (srk) on the worm screw (sv) when the storey reflector (sr) is closed by sliding upwards and becoming vertical in front of the parapet wall of the floor above,

(sr1) : distance between the point (sro1) and point (sru1);

(sr2) : distance between the point (sra1) and point (sro1);

(sr3) :     distance of the path taken by the jointed nuts on the lower edge points (sra) of the storey reflector (sr) on the "worm screw" (sv), when it goes from the "lower point of the storey reflector" (sra) to the "lower point of the closed storey reflector (sra1).

(pro) :     profile under which the upper edge of the storey reflector (sr) goes when said reflector is closed.

The description of the parts/elements shown in Figure 25 are as follows:

(V kbp):    part which travels up and down over the "worm screw" (sv) as said screw (sv) turns, and which travels up and down inside the profile (D pro) thanks to its V-shaped arms with protruded ends

(kam) :     "self-receiving motor" which is automatically or manually controlled and which enables the storey reflector (sr) to open by itself when the sun is up, which enables the storey reflector (sr) to close by itself when there is no sun, when there is storm and during summer months etc. or which enables the storey reflector (sr) to be opened or closed manually when desired.

(ac):      "transmission rod" which transmits the rotational movement coming from the self-receiving motor (kam) to the worm screw (sv).

(D pro) :   Profile allowing the "sliding connection parts" (V kbp) to move up and down within itself.

(mm) :     ends via which the worm screw is moved manually or with the motor

In Figure 24, the action of raising the storey reflectors (sr) in front of the windows upwards above the glass can be performed manually or with a remote controller.
Two alternatives may be used in the remote control system.

• Manual opening-closing,
• Automatic opening-closing according to sunrise and sunset and automatic closing during storm under the control of the motor.

The system has the following feature:
The storey reflector (sr), which is "open" and stationary in front of the window at a 45 degree or other angle, is slid upwards via the vertical worm screws (sv) arranged at the sides of the reflector in parallel to the wall and simultaneously, said reflector "closes" by vertically moving from the angled position to the front of the parapet of the upper storey and in parallel to the wall.
The elements allowing the movement (mm) may be remotely controlled with radio frequency (RF), Bluetooth or WI-FI. The action can be performed manually or automatically with the help of the remote controlled motor. When the system is set to automatic movement, the "closed storey reflector" (srk), which stands vertically in front of the parapet walls during the night, moves downwards when the sun rises, arrives at the angled storey reflector (sr) position in front of the windows and becomes ready to reflect the sunlight into indoor spaces; said reflector returns to the "closed storey reflector" (srk) in front of the parapet wall when the sun sets. The movement of the storey reflector (sr) can be arranged separately or in groups. In the automatic setting, the system operates automatically in case of a storm and the storey reflector (sr) slides upwards to arrive at the vertical and closed (srk) position in front of the parapet in the upper storey.
Figure 24.5 shows, in axonometric perspective, the "closed storey reflectors" (srk) which are brought to vertical position in front of the parapet walls via sliding upwards thanks to the worm screws (sv) arranged vertically on both sides of the storey reflectors (sr). This figure shows, in axonometric perspective, the phases of the storey reflector (sr) in front of the window on the lowermost storey at the right side, arriving at the "closed storey reflector" (srk) by sliding in front of the parapet wall on the upper storey.
Figure 24.4 shows, in cross-section, the phases of the storey reflector (sr) in front of the window, arriving from the angled position (sr) reflecting the sun beam in front of the window, to the "closed" position (srk) by sliding said reflector in upwards in parallel to the parapet wall above the window, thanks to the rotational movement of the worm screws (sv) arranged vertically on both sides of said reflectors.
The rotational movement of the worm screws (sv) is performed by turning the manual arm or motor (mm) located on the lower sides. This movement can also be performed from the upper side of the worm screw (sv). Separate manual or motorized movement elements (mm) can be connected to the ends of the worm screws (sv), or various movement mechanisms which allow movement from a single center can be used.
Figure 24.3 shows the storey reflector (sr) arranged at a certain angle in front of the window, in the position where it transfers the sun beam into the indoor space.

Figure 24.2 shows the "closed storey reflector" (srk) position of the storey reflector (sr) which is slid upwards from the position in front of the window to the vertical position in front of the upper parapet wall, via the worm screws (sv) at the sides of the storey reflectors.

Figure 24.1 shows the system for transferring the sun beam vertically arriving from the top to underneath the eaves and the upwards sliding of the storey reflector (sr), in front of the window on the top floor, as designated by the arrows.

Figure 24.6 shows the three-piece alternative solution of the "under-eaves reflectors" (er) arranged under the eaves above the top storey window at an angle of 45 degrees.

Figure 24.7 shows the arrival of the storey reflector (sr) to the vertical "closed storey reflector" (srk) by sliding in front of the parapet on the upper storey.

The storey reflector (sr) which stands at an angle of 45 degrees and in a position to reflect the sun beam into the indoor space is carried by hanging to the worm screw (sv) at the jointed points (sra) on both ends of the lower horizontal edge. On the upper edge, the storey reflector (sr) is connected to two "diagonal rods" (dc) as it is jointed to a certain point (sro) of both side edges. The other ends of these "diagonal rods" (dc) are connected to the "worm screw" (sv) in a jointed fashion at the "upper points of the diagonal rod" (dcu). Therefore, the "storey reflector" (sr) is connected to the worm screw (sv) at four points.

As the two vertical worm screws (sv) on the sides of the windows rotate when the storey reflector (sr) closes by arriving to the vertical position in front of the parapet wall on the upper wall by sliding upwards; the "storey reflector lower points" (sra), which are connected to the worm screws in a jointed fashion at the lower end corners of the "storey reflector" (sr), move upwards over the worm screws. As the worm screws rotate, the "diagonal rod upper points" (dcu) located on top of both worm screws move upwards over the worm screws.

As the "diagonal rod upper points" (dcu) on the upper end of both "diagonal rods" (dc) move upwards over the worm screw due to the rotation of the screw (sv), they also pull the jointed "storey reflector middle or near-middle points" (sro), located in the middle parts of the storey reflectors (sr), upwards. As the "storey reflector middle point" (sro) moves upwards, both "storey reflector end points" (sru) on the upper ends of the storey reflector (sr) also move upwards. Thus, the storey reflector (sr) arrives in front of the upper storey parapet by sliding upwards and takes the vertical "closed storey reflector" (srk) position.

When the storey reflector (sr) closes in front of the upper storey parapet by sliding upwards:

"storey reflector upper points" (sru) arrive at the (sru1) position;

"storey reflector lower points" (sra) arrive at the (sra1) position;

lower points (sro) of the diagonal rods (dc) which are connected with joints to the middle or near-middle of both sides of the storey reflector (sr) and which carries the storey reflector (sr) extending as a console, arrive at the (sro1) position.

Storey reflector (s) is slid upwards over the worm screw (sv) for a certain distance (sr3). In the event that the storey reflector (sr) is slid to vertically arrive in front of the parapet wall of the upper storey:

distance between the point (sro1) and point (sru1) is (sr1);

distance between the point (sra1) and point (sro1) is (sr2).

Figure 25 shows, in axonometric perspective and section, the vertical arrival (srk) of the storey reflector (sr), which is arranged at an angle of 45 degrees in front of the window and which reflects the sun beams into the indoor spaces, to the front of the parapet below the window on the upper floor by changing its 45 degree position with automatic or manual control, in cases where it is not desired to reflect light into the indoor space, when there is no sun, in rainy-snowy weathers or during summer months.

There are "worm screws" (sv) which are vertically arranged on both sides of the storey reflectors (sr) at a certain distance from the building facade and which are connected to said facade in a way that they will perform the rotation and carrying actions at certain points.

As the "V sliding connection parts" (V kbp), connected in a jointed fashion to the "storey reflector lower edge points" (sra), and the "V sliding connection parts" (V kbp), connected in a jointed fashion to the "diagonal rod upper points" (dcu) on the diagonal rod; travel up and down over the "worm screws" (sv) vertically mounted at a certain distance to the building facade, said parts also travel up and down within the "vertical profiles" (D pro) vertically mounted on the building facade at the sides of the storey reflectors (Figures 25.1 -2).

"V sliding connection parts" (V kbp) connected in a jointed fashion to the "storey reflector lower edge points" (sra) and to the "diagonal rod upper points" (dcu), are arranged in the "D profiles" (D pro) with a V profile where the ends thereof enter the slits in the "D profiles" so as to carry the load of the lateral wind that may come in any direction, in order to protect the "worm screws" (sv) and maintain the vertical positions thereof. "V sliding connection parts" (V kbp) move upwards within the "D profiles" (D pro) in order to bring the "storey reflector" (sr) standing at a 45 degree angle in front of the window to the vertical position (srk) in front of the parapet on the upper storey; said parts also move the "storey reflector" (srk) in the vertical position in front of the parapet downwards in order to bring it to the "storey reflector" (sr) position angled at 45 degrees in front of the window of the lower storey.

Figure 25.1 shows the position of the "storey reflector" (sr) arranged at an angle of 45 degrees in front of the window.

Figure 25.2 shows the position of the storey reflector (sr), which moves upwards in order to arrive at the vertical position in front of the upper storey parapet and whose 45 degree angle becomes narrower, during the closing action.

Figure 25.3 shows the "self-receiving motor" (kam) in the horizontal position, which enables the "worm screws" (sv) to rotate, and the "transmission rod" (ac). "Self-receiving motor" (kam) transmits the rotational movement to the "worm screw" (sv) via the "transmission rods."

Figure 25.4 shows the "storey reflector" (sr) which is arranged in front of the window at a 45 degree angle and which transfer the sun beam to the indoor space, and the "closed storey reflector" (srk) which closes by moving upwards in parallel to the wall in front of the upper storey parapet and which thus becomes vertical.

Figure 25.5 shows the alternative solution of the "V sliding connection parts" (V kbp) moving vertically inside the "D profiles" (D pro).

**Claims**

1. A system for indirectly heating and illuminating indoor spaces via reflecting the sun beams through the doors and windows on all facades of a building, and which is used for heating domestic water by reflecting said beams to the floor, **characterized in that** it comprises;

   • planar active eaves solar reflectors (aesr) which are placed on the upper line of the windows in the eaves portion of the building, which follow the sun by moving on two axes, horizontal and vertical, and which reflect the incoming sun beam vertically,
   • storey reflectors (sr) positioned in front of the windows and below the active eaves solar reflector (aesr) horizontally at various angles and which reflect a portion of the sun beam to the indoor space and which allow the other portion to pass vertically.

2. A system according to Claim 1, wherein surface areas of the storey reflectors (sr) increase as they go from the upper storeys to the lower ones in order to prevent lower energy transfer in lower storeys due to the sun beam, which moves vertically, losing energy in each storey reflector.

3. A system according to Claim 1 or 2, further comprising :

   • filled wall active eaves solar reflectors (aesrd) which are positioned on the upper line of the filled wall between the windows of the building and which follow the sun by moving on two axes to reflect the incoming sun beam vertically,
   • "filled wall parapet reflectors" (pr1a) which are arranged at the parapet level on the facade of the storey in the middle of the building height and which transform the vertically incoming sun beam (sv) into a horizontal one so as to allow the sun beam vertically reflected by the filled wall active eaves solar reflectors (aesrd) to be reflected to the storeys in the lower half of the building, and
   • Parapet reflectors (pr1) between windows which vertically reflect the sun beam (sh) coming horizontally from the filled wall parapet reflector (pr1a).

4. A system for indirectly heating and illuminating indoor spaces via reflecting the sun beams through the doors and windows on all facades of a building with 15-18 storeys, and which is used for heating domestic water by reflecting said beams to the floor, comprising "sets for reflecting sun beams into indoor spaces" arranged separately for "storey groups" consisting of approximately 5-6 adjacent storeys, wherein it comprises three sets and wherein

   • The first set operating for the reflection for the 5-6 storeys at the lowermost parts of the building comprises;

     ◦ "active roof solar reflector no 1" (arsr1) which is placed on a strut on the roof,

◦ "stationary roof solar reflector no 1" (srsr1) which is right below the "active roof solar reflector no 1" (arsr1) and which is positioned in its projection at a horizontal angle of 45 degrees and which is made of mirror,
◦ "stationary eaves solar reflector no 1" (sesr1) which is positioned on the eaves in the horizontal level of the "stationary roof solar reflector no 1" (srsr1) and which is made of mirror or a translucent material,
◦ "parapet reflector" (pr2a) which horizontally reflects the sun beam (sv), which is vertically reflected while skipping the upper 10-12 storeys, and which is placed in line with the parapet,
◦ "parapet reflector" (pr2) which vertically reflects the sun beam horizontally reflected via the "parapet reflector" (pr2a) to storey reflectors (sr) in front of the 5-6 storeys in the lower parts of the building, and which is placed on the level of the parapet of the storey above this 5-6 storey group,
◦ storey reflectors (sr) which reflect a portion of the sun beam (sv) reflected by the "parapet reflector" (pr2), into the indoor spaces and which allow the other portion to pass vertically, and which are located in front of the windows of the 5-6 storeys in the lowermost parts of the building, and

• The second set operating for the reflection for the 5-6 storeys at the middle parts of the building comprises;

◦ "active roof solar reflector no 2" (arsr2) which is placed on a strut on the roof,
◦ "stationary roof solar reflector no 2" (srsr2) which is right below the "active roof solar reflector no 2" (arsr2) and which is positioned in its projection at a horizontal angle of 45 degrees and which is made of mirror,
◦ "stationary eaves solar reflector no 2" (sesr2) which is positioned on the eaves in the horizontal level of the "stationary roof solar reflector no 2" (srsr2) and which is made of mirror or a translucent material,
◦ "parapet reflector" (pr1a) which horizontally reflects the sun beam (sv), which is vertically reflected while skipping the upper 5-6 storeys, and which is placed in line with the parapet,
◦ "parapet reflector" (pr1) which vertically reflects the sun beam horizontally reflected via the "parapet reflector" (pr1a) to storey reflectors (sr) in front of the 5-6 storeys in the middle parts of the building, and which is placed on the level of the parapet of the storey above this 5-6 storey group,
◦ storey reflectors (sr) which reflect a portion of the sun beam (sv) reflected by the "parapet reflector" (pr1), into the indoor spaces and which allow the other portion to pass vertically, and which are located in front of the windows of the 5-6 storeys in the middle parts of the building,
and

• The third set operating for the reflection for the 5-6 storeys at the upper parts of the building comprises;

◦ "active roof solar reflector no 3" (arsr3) which is placed on a strut on the roof,
◦ "stationary roof solar reflector no 3" (srsr3) which is right below the "active roof solar reflector no 3" (arsr3) and which is positioned in its projection at a horizontal angle of 45 degrees and which is made of mirror,
◦ "stationary eaves solar reflector no 3" (sesr3) which is positioned on the eaves in the horizontal level of the "stationary roof solar reflector no 3" (srsr3) and which is made of mirror or a translucent material,
◦ storey reflectors (sr) which reflect a portion of the sun beam (sv) reflected by the "stationary roof solar reflector no 3" (srsr3), into the indoor spaces and which allow the other portion to pass vertically, and which are located in front of the windows of the 5-6 storeys in the upper parts of the building.

5. A system for indirectly heating and illuminating indoor spaces via reflecting the sun beams through the doors and windows on all facades of a building with 15-18 storeys, and which is used for heating domestic water by reflecting said beams to the floor, comprising "sets for reflecting sun beams into indoor spaces" arranged separately for "storey groups" consisting of approximately 5-6 adjacent storeys, wherein it comprises two sets and wherein

• The first set operating for the reflection for the 10-12 storeys at the middle and lowermost parts of the building comprises;

◦ "active roof solar reflector no 1" (arsr1) which is placed on a strut on the roof,
◦ "stationary roof solar reflector no 1" (srsr1) which is right below the "active roof solar reflector no 1" (arsr1) and which is positioned in its projection at a horizontal angle of 45 degrees or at a closer angle, and which is made of mirror,
◦ "stationary eaves solar reflector no 1" (sesr1) which is positioned on the eaves in the horizontal or near-horizontal level of the "stationary roof solar reflector no 1" (srsr1) and which is made of mirror or a translucent material,
◦ translucent "parapet reflector" (pr1a) which allows a portion of the sun beam (sv) to vertically pass through and which horizontally reflects another portion of said beam (sv), which is vertically reflected while skipping the upper 5-6 storeys, and which is placed in line with the parapet,

∘ "parapet reflector" (pr1) which vertically reflects the sun beam horizontally reflected via the "parapet reflector" (pr1a) to storey reflectors (sr) in front of the 5-6 storeys in the middle parts of the building, and which is placed on the level of the parapet of the storey above this 5-6 storey group,

∘ storey reflectors (sr) which reflect a portion of the sun beam (sv) reflected by the "parapet reflector" (pr1), into the indoor spaces and which allow the other portion to pass vertically, and which are located in front of the windows of the 5-6 storeys in the middle parts of the building,

∘ "parapet reflector" (pr2a) which horizontally reflects the sun beam (sv), which is vertically reflected while skipping the upper 10-12 storeys and passing through the translucent "parapet reflector" (pr1a), and which is placed in line with the parapet,

∘ "parapet reflector" (pr2) which vertically reflects the sun beam horizontally reflected via the "parapet reflector" (pr2a) to storey reflectors (sr) in front of the 5-6 storeys in the lowermost parts of the building, and which is placed on the level of the parapet of the storey above this 5-6 storey group,

∘ storey reflectors (sr) which reflect a portion of the sun beam (sv) reflected by the "parapet reflector" (pr2), into the indoor spaces and which allow the other portion to pass vertically, and which are located in front of the windows of the 5-6 storeys in the lowermost parts of the building, and

• The second set operating for the reflection for the 5-6 storeys at the upper parts of the building comprises;

∘ "active roof solar reflector no 2" (arsr2) which is placed on a strut on the roof,

∘ "stationary roof solar reflector no 2" (srsr2) which is right below the "active roof solar reflector no 2" (arsr2) and which is positioned in its projection at a horizontal angle of 45 degrees or at a closer angle, and which is made of mirror,

∘ "stationary eaves solar reflector no 2" (sesr2) which is positioned on the eaves in the horizontal or near-horizontal level of the "stationary roof solar reflector no 2" (srsr2) and which is made of mirror,

∘ storey reflectors (sr) which reflect a portion of the sun beam (sv) reflected by the "stationary eaves solar reflector no 2" (sesr2), into the indoor spaces and allow the other portion to pass vertically, and which are located in front of the windows of the 5-6 storeys in the upper parts of the building.

6. A system for indirectly heating and illuminating indoor spaces via reflecting the sun beams through the doors and windows on all facades of a building with 15-18 storeys, and which is used for heating domestic water by reflecting said beams to the floor, wherein it comprises

• the system of claim 1 for the reflection of the sun beams into the indoor spaces of the uppermost 5-6 storeys of the building;

• For the reflection of the sun beams into the indoor spaces of the middle 5-6 storeys of the building;

∘ "remote active solar reflector no 1" (uasr1) which is placed remotely from the building, which follows the sun by moving on two axes, horizontal and vertical, and which reflects the incoming sun beam vertically,

∘ "remote reflector no 1" (ur1) which is located in the projection of the "remote active solar reflector no 1" (uasr1), which reflects the sun beam vertically reflected via the "remote active solar reflector no 1" (uasr1) horizontally or at an angle to the horizon, and which is located remotely from the building at the level of the parapet,

∘ "parapet reflector no 1" (pr1) which is placed at the parapet level of the storey above the 5-6 storey group in the middle part of the building in order to vertically reflect the sun beam reflected via the "remote reflector no 1" (ur1) horizontally or at an angle to the horizon,

∘ storey reflectors (sr) which reflect a portion of the sun beam (sv) reflected by the "parapet reflector no 1" (pr1), into the indoor spaces and which allow the other portion to pass vertically, and which are located in front of the windows of the 5-6 storeys in the middle parts of the building,

• For the reflection of the sun beams into the indoor spaces of the lowermost 5-6 storeys of the building;

∘ "remote active solar reflector no 2" (uasr2) which is placed remotely from the building, which follows the sun by moving on two axes, horizontal and vertical, and which reflects the incoming sun beam vertically,

∘ "remote reflector no 2" (ur2) which is located in the projection of the "remote active solar reflector no 2" (uasr2), which reflects the sun beam vertically reflected via the "remote active solar reflector no 2" (uasr2) horizontally or at an angle to the horizon, and which is located remotely from the building at the level of the parapet,

◦ "parapet reflector no 2" (pr2) which is placed at the parapet level of the storey above the 5-6 storey group in the lowermost part of the building in order to vertically reflect the sun beam reflected via the "remote reflector no 2" (ur2) horizontally or at an angle to the horizon,

◦ storey reflectors (sr) which reflect a portion of the sun beam (sv) reflected by the "parapet reflector no 2" (pr2), into the indoor spaces and which allow the other portion to pass vertically, and which are located in front of the windows of the 5-6 storeys in the lowermost parts of the building.

7. A system for indirectly heating and illuminating indoor spaces via reflecting the sun beams through the doors and windows on all facades of the building, and which is used for heating domestic water by reflecting said beams to the floor, **characterized in that** it comprises;

• conic stationary eaves solar reflectors (ksesr) which are positioned on the eaves of the building at the upper level of the windows and which vertically reflect the sun beam arriving thereto from various directions vertically,

• storey reflectors (sr) which are positioned in front of the windows and below the conic stationary eaves solar reflector (ksesr) horizontally at various angles and which reflect a portion of the sun beam to the indoor space and which allow the other portion to pass vertically, and wherein the conic stationary eaves solar reflectors (ksesr) comprise;

• n parts (p1, p2, p3, p4..... pn) arranged at various horizontal angles depending on the incidence elevation angles (alpha) of the sun beams, in order to reflect the sun beams (s1, s2, s3, s4...... sn) arriving at various elevation angles (alpha1, alpha2, alpha3, alpha4..... alpha n) towards vertical directions;

• panels (pn) shaped like half orange peel slices, formed by combining the parts (p1, p2, p3, p4.... pn) at their horizontal edges in a stacked manner at various angles;

and

are formed as a quarter-sphere (quarter-dome) so as to allow the sun beams (s1 ......... sn) with various horizontal azimuth angles to arrive perpendicularly to the panels (pn1 ...... pn) and therefore to the n parts (p1 ........pn) forming the panels (pn).

8. A system according to Claim 7, wherein the conic stationary eaves reflectors (ksesr) are formed as;

• dual panels (pn) which can be arranged on top of each other **with** spaces, or

• "conic stationary eaves solar reflector A" (ksesr-A) which is obtained by arranging inclined rectangular panels (pna, pnb, pnc, pnd, pne, pnb1, pnc1, pnd1, pne1), the axes of which converge at the center point (m), with an elevation difference (h) among them and with certain distances among them in a shape similar to a quarter dome, or

• "conic stationary eaves solar reflector B" (ksesr-B) which is obtained by arranging nine inclined trapezoid panels, the axes of which converge at the center point (m), side by side in a fashion similar to a quarter dome, or

• "conic stationary eaves solar reflector C" (ksesr-C) which is obtained by placing an inclined trapezoid panel, the axes of which converge at the center point (m), between two inclined rectangular panels, the axes of which also converge at the center point (m); which comprises panels (pn1, pn2, pn3, pn4, pn5, pn6, pn7, pn8, pn9) and which is similar to a quarter dome, or

• "conic stationary eaves solar reflector B-C" (ksesr B-C) which is obtained by placing a "conic stationary eaves solar reflector C" (ksesr-C), the axes of which converge at the center point (m), over a "conic stationary eaves solar reflector B" (ksesr-B), the axes of which converge at the center point (m), with a certain elevation difference (h) and with a certain space (ar) between them, or

• "conic stationary eaves solar reflector D" (ksesr-D) which is obtained enlarging rectangular panels to turn them into trapezoids and arranging an upper panel partially over a lower panel.

9. A system according to any of the aforementioned Claims, wherein the storey reflectors (sr) are reflectors (srt) arranged to reflect the sun beam to the ceiling of the indoor space or reflectors (srz) arranged to reflect the sun beam to the floor of the indoor space.

10. A system according to any of the aforementioned Claims, wherein the conic stationary eaves solar reflectors (ksesr), active eaves solar reflectors (aesr), stationary eaves solar reflectors (sesr), "active roof solar reflectors no 1, 2 and 3" (arsr1, arsr2, arsr3), "stationary roof solar reflectors no 1, 2 and 3" (srsr1) or "parapet reflectors no 1 and 2" (pr1 and pr2) are made of single layered, multi-layered translucent material or mirror, or made of single or multi layered translucent materials, wherein a mirror or photovoltaic solar battery can be placed at the back as an additional layer, or made of translucent materials which are all adjacent to each other or which are positioned with spaces among them; or wherein said reflectors comprise one or more layers, or include at least two layers, the rearmost layer being a mirror or a photovoltaic solar battery, or made of numerous translucent and reflective materials which are adjacent side by side and/or under each other without being monolithic.

11. A system according to any of the aforementioned Claims, wherein it comprises a water heater (SI) located under the storey reflectors (sr) and on the ground.

12. A system according to any of the aforementioned Claims, wherein

   • in weathers where no sun beams are present,
   • during the time since the hour the sun sets in the evening until it rises in the morning, when no sun beams arrive at the earth,
   • in stormy weathers and weather with extreme winds,
   • when it is not desired for the sun beams to enter the indoor spaces,
   for raising the storey reflectors (sr) above so that they are not seen in front of the window when looking outside from the indoor space or for reflecting sun beams to the flooring of the indoor space, and for arranging said reflectors (sr) by placing them over the glass of the window;
   • it comprises "worm screws" (sv) which are vertically arranged on both sides of the storey reflectors (sr) at a certain distance from the building facade and which are connected to said facade in a way that they will perform the rotation and carrying actions at certain points,
   • also comprises, manual or motorized movement elements (mm) which enable movement and which are connected to the ends of the screws (sv) from the upper or lower parts of the worm screws (sv), separately or from a single center;
   • it carries the storey reflector (sr) which stands at an angle of 45 degrees and in a position to reflect the sun beam into the indoor space, by hanging said reflector to the worm screw (sv) at the jointed points (sra) on both ends of the lower horizontal edge,
   • it has, on the upper edge, the storey reflector (sr) connected to two "diagonal rods" (dc) as it is jointed to a certain point (sro) of both side edges,
   • it has, the other ends of these "diagonal rods" (dc) connected to the "worm screw" (sv) in a jointed fashion at the "upper points of the diagonal rod" (dcu),
   • and it has, therefore, the "storey reflector" (sr) connected to the worm screw (sv) at four points.

13. A system according to Claim, wherein there are "V sliding connection parts" (V kbp), connected in a jointed fashion to the "storey reflector lower edge points" (sra), and "V sliding connection parts" (V kbp), connected in a jointed fashion to the "diagonal rod upper points" (dcu) on the diagonal rod; which travel up and down over the "worm screws" (sv) vertically mounted at a certain distance to the building facade, and which also travel up and down within the "vertical profiles" (D pro) vertically mounted on the building facade at the sides of the storey reflectors.

14. A system according to Claim 13, wherein the "V sliding connection parts" (V kbp) connected in a jointed fashion to the "storey reflector lower edge points" (sra) and to the "diagonal rod upper points" (dcu), are arranged in the "D profiles" (D pro) with a V profile where the ends thereof enter the slits in the "D profiles" so as to carry the load of the lateral wind that may come in any direction, in order to protect the "worm screws" (sv) and maintain the vertical positions thereof.

15. A system according to Claim 12, 13 or 14, wherein the motorized elements allowing the movement (mm) are remotely controlled with radio frequency (RF), Bluetooth or WI-FI.

**Patentansprüche**

1. System zum indirekten Heizen und Beleuchten von Innenräumen mittels Reflektieren der Sonnenstrahlen durch die Türen und Fenster an allen Fassaden eines Gebäudes, und das zum Heizen von Haushaltswasser verwendet wird, indem die genannten Strahlen auf den Boden reflektiert werden, **dadurch gekennzeichnet, dass** es umfasst;

   • planare aktive Traufsolarreflektoren (aesr), die an der oberen Linie der Fenster im Traufabschnitt des Gebäudes platziert sind, die der Sonne folgen, indem sie sich auf zwei Achsen horizontal und vertikal bewegen, und die den eintreffenden Sonnenstrahl vertikal reflektieren,
   • Etagenreflektoren (sr), die vor den Fenstern und unter dem aktiven Traufsolarreflektor (aesr) horizontal in verschiedenen Winkeln positioniert sind und die einen Abschnitt des Sonnenstrahls in den Innenraum reflektieren und den anderen Abschnitt vertikal passieren lassen.

2. System nach Anspruch 1, wobei die Oberflächenbereiche der Etagenreflektoren (sr) von den oberen Etagen zu den unteren Etagen vergrößern, um eine geringere Energieübertragung in den unteren Etagen aufgrund des Sonnenstrahls zu verhindern, der sich vertikal bewegt somit Energie in jedem Etagenreflektor verliert.

3. System nach Anspruch 1 oder 2, ferner umfassend :

• gefüllte Wand aktive Traufsolarreflektoren (aesrd), die an der oberen Linie der gefüllten Wand zwischen den Fenstern des Gebäudes positioniert sind und die der Sonne folgen, indem sie sich auf zwei Achsen bewegen, um den eintreffenden Sonnenstrahl vertikal zu reflektieren,
• gefüllte Wand Brüstungsreflektoren (pr1a), die auf der Brüstungsebene an der Fassade der Etage in der Mitte der Gebäudehöhe angeordnet sind und die den vertikal eintreffenden Sonnenstrahl (sv) in einen Horizontalstrahl transformieren, so dass der von den gefüllten Wand aktiven Traufsolarreflektoren (aesrd) vertikal reflektierte Sonnenstrahl auf die Etagen in der unteren Hälfte des Gebäudes reflektiert werden kann, und
• Brüstungsreflektoren (pr1) zwischen Fenstern, die den Sonnenstrahl (sh), der horizontal vom gefüllten Wand Brüstungsreflektor (pr1a) kommt, vertikal reflektieren

4. System zum indirekten Heizen und Beleuchten von Innenräumen mittels Reflektieren der Sonnenstrahlen durch die Türen und Fenster an allen Fassaden eines Gebäudes mit 15-18 Etagen, und das zum Heizen von Haushaltswasser verwendet wird, indem die genannten Strahlen auf den Boden reflektiert werden, umfassend "Sätze zum Reflektieren der Sonnenstrahlen in Innenräume", die getrennt für "Etagengruppen" angeordnet sind, die aus etwa 5-6 benachbarten Etagen bestehen, wobei es drei Sätze umfasst und wobei

• Der erste Satz, der für die Reflexion für die 5-6 Etagen in den untersten Teilen des Gebäudes betrieben wird, umfasst;

◦ "aktiver Dachsolarreflektor Nr. 1" (arsr1), der auf einer Strebe auf dem Dach platziert wird,
◦ "stationärer Dachsolarreflektor Nr. 1" (srsr1), der sich direkt unter dem "aktiven Dachsolarreflektor Nr. 1" (arsr1) befindet und der in seiner Projektion in einem horizontalen Winkel von 45 Grad positioniert ist und aus Spiegel besteht,
◦ "stationärer Traufsolarreflektor Nr. 1" (sesr1), der an der Traufe in der horizontalen Ebene des "stationären Dachsolarreflektors Nr. 1" (srsr1) positioniert ist und aus Spiegel oder einem lichtdurchlässigen Material besteht,
◦ "Brüstungsreflektor" (pr2a), der den Sonnenstrahl (sv) horizontal reflektiert, der vertikal reflektiert wird, während die oberen 10-12 Etagen übersprungen werden, und der in einer Linie mit der Brüstung platziert ist,
◦ "Brüstungsreflektor" (pr2), der den über den "Brüstungsreflektor" (pr2a) horizontal reflektierten Sonnenstrahl vertikal auf Etagenreflektoren (sr) vor den 5-6 Etagen in den unteren Teilen des Gebäudes reflektiert, und der auf der Höhe der Brüstung der Etage über dieser 5-6 Etagengruppe platziert ist,
◦ Etagenreflektoren (sr), die einen Abschnitt des Sonnenstrahls (sv), der vom "Brüstungsreflektor" (pr2) reflektiert wird, in die Innenräume reflektieren und den anderen Abschnitt vertikal passieren lassen, und die sich vor den Fenstern der 5-6 Etagen in den untersten Teilen des Gebäudes befinden, und

• Der zweite Satz, der für die Reflexion für die 5-6 Etagen in den mittleren Teilen des Gebäudes betrieben wird, umfasst;

◦ "aktiver Dachsolarreflektor Nr. 2" (arsr2), der auf einer Strebe auf dem Dach platziert wird,
◦ "stationärer Dachsolarreflektor Nr. 2" (srsr2), der sich direkt unter dem "aktiven Dachsolarreflektor Nr. 2" (arsr2) befindet und der in seiner Projektion in einem horizontalen Winkel von 45 Grad positioniert ist und aus Spiegel besteht,
◦ "stationärer Traufsolarreflektor Nr. 2" (sesr2), der an der Traufe in der horizontalen Ebene des "stationären Dachsolarreflektors Nr. 2" (srsr2) positioniert ist und aus Spiegel oder einem lichtdurchlässigen Material besteht,
◦ "Brüstungsreflektor" (pr1a), der den Sonnenstrahl (sv) horizontal reflektiert, der vertikal reflektiert wird, während die oberen 5-6 Etagen übersprungen werden, und der in einer Linie mit der Brüstung platziert ist,
◦ "Brüstungsreflektor" (pr1), der den über den "Brüstungsreflektor" (pr1a) horizontal reflektierten Sonnenstrahl vertikal auf Etagenreflektoren (sr) vor den 5-6 Etagen in den mittleren Teilen des Gebäudes reflektiert, und der auf der Höhe der Brüstung der Etage über dieser 5-6 Etagengruppe platziert ist,

◦ Etagenreflektoren (sr), die einen Abschnitt des Sonnenstrahls (sv), der vom "Brüstungsreflektor" (pr1) reflektiert wird, in die Innenräume reflektieren und den anderen Abschnitt vertikal passieren lassen, und die sich vor den Fenstern der 5-6 Etagen in den mittleren Teilen des Gebäudes befinden, und

• Der dritte Satz, der für die Reflexion für die 5-6 Etagen in den oberen Teilen des Gebäudes betrieben wird, umfasst;

◦ "aktiver Dachsolarreflektor Nr. 3" (arsr3), der auf einer Strebe auf dem Dach platziert wird,
◦ "stationärer Dachsolarreflektor Nr. 3" (srsr3), der sich direkt unter dem "aktiven Dachsolarreflektor Nr. 3" (arsr3) befindet und der in seiner Projektion in einem horizontalen Winkel von 45 Grad positioniert ist und aus Spiegel besteht,
◦ "stationärer Traufsolarreflektor Nr. 3" (sesr3), der an der Traufe in der horizontalen Ebene des "stationären Dachsolarreflektors Nr. 3" (srsr3) positioniert ist und aus Spiegel oder einem lichtdurchlässigen Material besteht,
◦ Etagenreflektoren (sr), die einen Abschnitt des Sonnenstrahls (sv), der vom "stationären Dachsolarreflektor Nr. 3" (srsr3) reflektiert wird, in die Innenräume reflektieren und den anderen Abschnitt vertikal passieren lassen, und die sich vor den Fenstern der 5-6 Etagen in den oberen Teilen des Gebäudes befinden, und

5. System zum indirekten Heizen und Beleuchten von Innenräumen mittels Reflektieren der Sonnenstrahlen durch die Türen und Fenster an allen Fassaden eines Gebäudes mit 15-18 Etagen, und das zum Heizen von Haushaltswasser verwendet wird, indem die genannten Strahlen auf den Boden reflektiert werden, umfassend "Sätze zum Reflektieren der Sonnenstrahlen in Innenräume", die getrennt für "Etagengruppen" angeordnet sind, die aus etwa 5-6 benachbarten Etagen bestehen, wobei es zwei Sätze umfasst und wobei

• Der erste Satz, der für die Reflexion für die 10-12 Etagen in den mittleren und untersten Teilen des Gebäudes betrieben wird, umfasst;

◦ "aktiver Dachsolarreflektor Nr. 1" (arsr1), der auf einer Strebe auf dem Dach platziert wird,
◦ "stationärer Dachsolarreflektor Nr. 1" (srsr1), der sich direkt unter dem "aktiven Dachsolarreflektor Nr. 1" (arsr1) befindet und der in seiner Projektion in einem horizontalen Winkel von 45 Grad oder in einem näheren Winkel positioniert ist und aus Spiegel besteht,
◦ "stationärer Traufsolarreflektor Nr. 1" (sesr1), der an der Traufe in der horizontalen oder fast horizontalen Ebene des "stationären Dachsolarreflektors Nr. 1" (srsr1) positioniert ist und aus Spiegel oder einem lichtdurchlässigen Material besteht,
◦ lichtdurchlässiger "Brüstungsreflektor" (pr1a), der einen Abschnitt des Sonnenstrahls (sv) vertikal passieren lässt und der einen anderen Abschnitt des genannten Strahls (sv) horizontal reflektiert, der vertikal reflektiert wird, während die oberen 5-6 Etagen übersprungen werden, und der in einer Linie mit der Brüstung platziert ist,
◦ "Brüstungsreflektor" (pr1), der den über den "Brüstungsreflektor" (pr1a) horizontal reflektierten Sonnenstrahl vertikal auf Etagenreflektoren (sr) vor den 5-6 Etagen in den mittleren Teilen des Gebäudes reflektiert, und der auf der Höhe der Brüstung der Etage über dieser 5-6 Etagengruppe platziert ist,
◦ Etagenreflektoren (sr), die einen Abschnitt des Sonnenstrahls (sv), der vom "Brüstungsreflektor" (pr1) reflektiert wird, in die Innenräume reflektieren und den anderen Abschnitt vertikal passieren lassen, und die sich vor den Fenstern der 5-6 Etagen in den mittleren Teilen des Gebäudes befinden,
◦ "Brüstungsreflektor" (pr2a), der den Sonnenstrahl (sv) horizontal reflektiert, der vertikal reflektiert wird, während die oberen 10-12 Etagen übersprungen und durch den lichtdurchlässigen "Brüstungsreflektor" (pr1a) passiert wird, und der in einer Linie mit der Brüstung platziert ist,
◦ "Brüstungsreflektor" (pr2), der den über den "Brüstungsreflektor" (pr2a) horizontal reflektierten Sonnenstrahl vertikal auf Etagenreflektoren (sr) vor den 5-6 Etagen in den untersten Teilen des Gebäudes reflektiert, und der auf der Höhe der Brüstung der Etage über dieser 5-6 Etagengruppe platziert ist,
◦ Etagenreflektoren (sr), die einen Abschnitt des Sonnenstrahls (sv), der vom "Brüstungsreflektor" (pr2) reflektiert wird, in die Innenräume reflektieren und den anderen Abschnitt vertikal passieren lassen, und die sich vor den Fenstern der 5-6 Etagen in den untersten Teilen des Gebäudes befinden, und

• Der zweite Satz, der für die Reflexion für die 5-6 Etagen in den oberen Teilen des Gebäudes betrieben wird, umfasst;

◦ "aktiver Dachsolarreflektor Nr. 2" (arsr2), der auf einer Strebe auf dem Dach platziert wird,

48

◦ "stationärer Dachsolarreflektor Nr. 2" (srsr2), der sich direkt unter dem "aktiven Dachsolarreflektor Nr. 2" (arsr2) befindet und der in seiner Projektion in einem horizontalen Winkel von 45 Grad oder in einem näheren Winkel positioniert ist und aus Spiegel besteht,

◦ "stationärer Traufsolarreflektor Nr. 2" (sesr2), der an der Traufe in der horizontalen oder fast horizontalen Ebene des "stationären Dachsolarreflektors Nr. 2" (srsr2) positioniert ist und aus Spiegel besteht,

◦ Etagenreflektoren (sr), die einen Abschnitt des Sonnenstrahls (sv), der vom "stationären Traufsolarreflektor Nr. 2" (sesr2) reflektiert wird, in die Innenräume reflektieren und den anderen Abschnitt vertikal passieren lassen, und die sich vor den Fenstern der 5-6 Etagen in den oberen Teilen des Gebäudes befinden, und

6. System zum indirekten Heizen und Beleuchten von Innenräumen mittels Reflektieren der Sonnenstrahlen durch die Türen und Fenster an allen Fassaden eines Gebäudes mit 15-18 Etagen, und das zum Heizen von Haushaltswasser verwendet wird, indem die genannten Strahlen auf den Boden reflektiert werden, wobei es umfasst

• System nach Anspruch 1 für die Reflexion der Sonnenstrahlen in die Innenräume der obersten 5-6 Etagen des Gebäudes;

• Für die Reflexion der Sonnenstrahlen in die Innenräume der mittleren 5-6 Etagen des Gebäudes;

◦ "entfernter aktiver Sonnenreflektor Nr. 1" (uasr1), der entfernt vom Gebäude platziert ist, der der Sonne folgt, indem er sich um zwei Achsen, horizontal und vertikal, bewegt, und der den eintreffenden Sonnenstrahl vertikal reflektiert,

◦ "entfernter Reflektor Nr. 1" (ur1), der sich in der Projektion des "entfernten aktiven Sonnenreflektors Nr. 1" (uasr1) befindet, der den über den "entfernten aktiven Sonnenreflektor Nr. 1" (uasr1) vertikal reflektierten Sonnenstrahl horizontal oder in einem Winkel zum Horizont reflektiert, und der sich entfernt vom Gebäude auf Höhe der Brüstung befindet,

◦ "Brüstungsreflektor Nr. 1" (pr1), der auf der Brüstungsebene der Etage über der Gruppe von 5-6 Etagen im mittleren Teil des Gebäudes platziert wird, um den über den "entfernten Reflektor Nr. 1" (ur1) horizontal oder in einem Winkel zum Horizont reflektierten Sonnenstrahl vertikal zu reflektieren,

◦ Etagenreflektoren (sr), die einen Abschnitt des Sonnenstrahls (sv), der vom "Brüstungsreflektor Nr. 1" (pr1) reflektiert wird, in die Innenräume reflektieren und den anderen Abschnitt vertikal passieren lassen, und die sich vor den Fenstern der 5-6 Etagen in den mittleren Teilen des Gebäudes befinden,

• Für die Reflexion der Sonnenstrahlen in die Innenräume der untersten 5-6 Etagen des Gebäudes; "entfernter aktiver Sonnenreflektor Nr. 2" (uasr2), der entfernt vom Gebäude platziert ist, der der Sonne folgt, indem er sich um zwei Achsen, horizontal und vertikal, bewegt, und der den eintreffenden Sonnenstrahl vertikal reflektiert,

◦ "entfernter Reflektor Nr. 2" (ur2), der sich in der Projektion des "entfernten aktiven Sonnenreflektors Nr. 2" (uasr2) befindet, der den über den "entfernten aktiven Sonnenreflektor Nr. 2" (uasr2) vertikal reflektierten Sonnenstrahl horizontal oder in einem Winkel zum Horizont reflektiert, und der sich entfernt vom Gebäude auf Höhe der Brüstung befindet,

◦ "Brüstungsreflektor Nr. 2" (pr2), der auf der Brüstungsebene der Etage über der Gruppe von 5-6 Etagen im untersten Teil des Gebäudes platziert wird, um den über den "entfernten Reflektor Nr. 2" (ur2) horizontal oder in einem Winkel zum Horizont reflektierten Sonnenstrahl vertikal zu reflektieren,

◦ Etagenreflektoren (sr), die einen Abschnitt des Sonnenstrahls (sv), der vom "Brüstungsreflektor Nr. 2" (pr2) reflektiert wird, in die **Innenräume** reflektieren und den anderen Abschnitt vertikal passieren lassen, und die sich vor den Fenstern der 5-6 Etagen in den untersten Teilen des Gebäudes befinden.

7. System zum indirekten Heizen und Beleuchten von Innenräumen mittels Reflektieren der Sonnenstrahlen durch die Türen und Fenster an allen Fassaden des Gebäudes, und das zum Heizen von Haushaltswasser verwendet wird, indem die genannten Strahlen auf den Boden reflektiert werden, **dadurch gekennzeichnet, dass** es umfasst;

• konische stationäre Traufsolarreflektoren (ksesr), die an der Traufe des Gebäudes auf der oberen Ebene der Fenster positioniert sind und die den aus verschiedenen Richtungen ankommenden Sonnenstrahl vertikal reflektieren,

• Etagenreflektoren (sr), die vor den Fenstern und unter dem konischen stationären Traufsolarreflektor (ksesr) horizontal in verschiedenen Winkeln positioniert sind und die einen Abschnitt des Sonnenstrahls in den Innenraum reflektieren und den anderen Abschnitt vertikal passieren lassen, und wobei die konischen stationären Traufsolarreflektoren (ksesr) umfassen;

• n Teile (p1, p2, p3, p4......pn), die in Abhängigkeit von den Einfallshöhenwinkeln (alpha) der Sonnenstrahlen unter verschiedenen horizontalen Winkeln angeordnet sind, um die unter verschiedenen Höhenwinkeln (alpha1, alpha2, alpha3, alpha3, alpha4.....alpha n) ankommenden Sonnenstrahlen (s1, s2, s3, s4.....sn) in vertikale Richtungen zu reflektieren;
• Platten (pn), die als halbe Orangenschalenscheiben geformt sind, die durch Kombination der Teile (p1, p2, p3, p4......pn) an ihren horizontalen Kanten in gestapelter Weise unter verschiedenen Winkeln geformt sind; und die als Viertelkugel (Viertelkuppel) geformt sind so dass die Sonnenstrahlen (s1.......sn) mit verschiedenen horizontalen Azimutwinkeln senkrecht auf die Platten (pnl.....pn) und damit auf die n Teile (p1......pn), die die Platten (pn) formen, ankommen können.

8. System nach Anspruch 7, wobei die konischen stationären Traufreflektoren (ksesr) wie folgt geformt sind;

• Doppelplatten (pn), die **mit** Zwischenräumen übereinander angeordnet werden können, oder
• "konischer stationärer Traufsolarreflektor A" (ksesr-A), der durch Anordnen von schrägen rechteckigen Platten (pna, pnb, pnc, pnd, pne, pnb1, pnc1, pnd1, pne1) erhalten wird, deren Achsen im Mittelpunkt (m) zusammenlaufen, mit einem Höhenunterschied (h) zwischen ihnen und mit bestimmten Abständen zwischen ihnen in einer Form ähnlich einer Viertelkuppel, oder
• "konischer stationärer Traufsolarreflektor B" (ksesr-B), der durch die Anordnung von neun schrägen trapezförmigen Platten, deren Achsen im Mittelpunkt (m) zusammenlaufen, nebeneinander ähnlich einer Viertelkuppel erhalten wird, oder
• "konischer stationärer Traufsolarreflektor C" (ksesr-C), der erhalten wird, durch Platzierung ein schrägen trapezförmigen Platte, dessen Achsen im Mittelpunkt (m) zusammenlaufen, zwischen zwei schrägen rechteckigen Platten platziert wird, deren Achsen auch im Mittelpunkt (m) zusammenlaufen; der Platte (pn1, pn2, pn3, pn4, pn5, pn6, pn7, pn8, pn9) umfasst und ähnlich einer Viertelkuppel ist, oder
• "konischer stationärer Traufsolarreflektor B-C" (ksesr B-C), der durch Platzierung eines "konischen stationären Traufsolarreflektors C" (ksesr-C) erhalten wird, dessen Achsen im Mittelpunkt (m) zusammenlaufen, über einem "konischen stationären Traufsolarreflektor B" (ksesr-B), dessen Achsen im Mittelpunkt (m) zusammenlaufen, mit einem bestimmten Höhenunterschied (h) und mit einem bestimmten Zwischenraum (ar) zwischen ihnen, oder
• "konischer stationärer Traufsolarreflektor D" (ksesr-D), der durch die Erweiterung rechteckiger Platten in Trapezform und die Anordnung einer oberen Platte teilweise über einer unteren Platte erhalten wird.

9. System nach einem der vorgenannten Ansprüche, wobei die Etagenreflektoren (sr) **Reflektoren (srt) sind, die so angeordnet sind, dass sie den Sonnenstrahl zur Decke des Innenraums reflektieren, oder Reflektoren (srz), die so angeordnet sind, dass sie den Sonnenstrahl zum Boden des Innenraums reflektieren.**

10. System nach einem der vorgenannten Ansprüche, wobei die konischen stationären Traufsolarreflektoren (ksesr), aktiven Traufsolarreflektoren (aesr), stationären Traufsolarreflektoren (sesr), "aktiven Dachsolarreflektoren Nr. 1, 2 und 3" (arsr1, arsr2, arsr3), "stationäre Dachsolarreflektoren Nr. 1, 2 und 3" (srsr1) oder "Brüstungsreflektoren Nr. 1 und 2" (pr1 und pr2) sind aus einschichtigen, mehrschichtigen lichtdurchlässigen Materialien oder Spiegeln hergestellt, oder **sind aus ein- oder mehrschichtigen lichtdurchlässigen Materialien hergestellt, wobei ein Spiegel oder eine photovoltaische Solarbatterie auf der Rückseite als eine zusätzliche Schicht platziert werden kann oder aus lichtdurchlässigen Materialien hergestellt sein kann, die alle benachbart zueinander sind oder die mit Zwischenräumen zwischen ihnen positioniert sind; oder wobei die genannten Reflektoren eine oder mehrere Schichten umfassen oder mindestens zwei Schichten enthalten, von denen die hinterste Schicht ein Spiegel oder eine photovoltaische Solarbatterie ist, oder aus zahlreichen lichtdurchlässigen und reflektierenden Materialien hergestellt sind, die benachbart Seite an Seite und/oder unter einander sind, ohne monolithisch zu sein.**

11. System nach einem der vorgenannten Ansprüche, wobei es einen Wassererhitzer (SI) umfasst, der unter den Etagenreflektoren (sr) und auf dem Boden befindet.

12. System nach einem der vorgenannten Ansprüche, wobei

• bei Wetter, wo keine Sonnenstrahlen vorhanden sind,
• während der Zeit seit der Stunde, in der die Sonne abends untergeht, bis sie morgens aufgeht, wenn keine Sonnenstrahlen auf die Erde kommen,
• bei stürmischem Wetter und Wetter mit extremen Winden,
• wenn es nicht erwünscht ist, dass die Sonnenstrahlen in die Innenräume eindringen, zum Anheben der Etagenreflektoren (sr) darüber, so dass sie vor dem Fenster nicht gesehen werden, wenn vom Innenraum aus nach außen geblickt wird, oder zum Reflektieren der Sonnenstrahlen auf den Bodenbelag des Innenraums, und zum Anordnen der genannten Reflektoren (sr), indem sie über dem Glas des Fensters platziert werden;
• es "Schneckenschrauben" (sv) umfasst, die vertikal auf beiden Seiten der Etagenreflektoren (sr) in einem bestimmten Abstand von der Fassade des Gebäudes angeordnet sind und die mit dieser Fassade so verbunden sind, dass sie an bestimmten Punkten die Dreh- und Tragwirkung ausführen,
• umfasst auch manuelle oder motorisierte Bewegungselemente (mm), die eine Bewegung ermöglichen und die mit den Enden der Schnecken (sv) aus dem oberen oder unteren Teil der Schneckenschrauben (sv) verbunden sind, getrennt oder von einem einzigen Zentrum aus;
• es trägt den Etagenreflektor (sr), der in einem Winkel von 45 Grad steht und in einer Position ist, um den Sonnenstrahl in den Innenraum zu reflektieren, indem der Reflektor an der Schneckenschraube (sv) an den Gelenkpunkten (sra) an beiden Enden der unteren horizontalen Kante aufgehängt wird,
• es hat an der Oberkante den Etagenreflektor (sr), der mit zwei "Diagonalstäben" (dc) verbunden ist, da er an einem bestimmten Punkt (sro) der beiden Seitenkanten angelenkt ist,
• es hat, die anderen Enden dieser "Diagonalstäbe" (dc) mit der "Schneckenschraube" (sv) an den "oberen Punkten des Diagonalstabes" (dcu) gelenkig verbunden,
• und es hat somit den "Etagenreflektor" (sr), der an vier Punkten mit der Schneckenschraube (sv) verbunden ist.

13. System nach Anspruch 12, wobei es "V gleitende Verbindungsteile" (V kbp), die gelenkig mit den "Etagenreflektor-Unterkantenpunkten" (sra) verbunden sind, und "V gleitende Verbindungsteile" (V kbp), die gelenkig mit den "Diagonalstab-Oberpunkten" (dcu) auf dem Diagonalstab verbunden sind, gibt; die sich über die in einem bestimmten Abstand von der Fassade des Gebäudes vertikal montierten "Schneckenschrauben" (sv) auf- und abwärts bewegen, und die sich auch innerhalb der vertikal an der Fassade des Gebäudes an den Seiten der Etagenreflektoren vertikal montierten "Vertikalprofile" (D pro) auf- und abwärts bewegen.

14. System nach Anspruch 13, wobei die "V gleitende Verbindungsteile" (V kbp), die gelenkig mit den "Etagenreflektor-Unterkantenpunkten" (sra) und den "Diagonalstab-Oberpunkten" (dcu) verbunden sind, in den "D-Profilen" (D pro) mit einem V-Profil angeordnet sind, wo deren Enden in die Schlitze in den "D-Profilen" eindringen, um die Last des seitlichen Windes, der aus jeder Richtung kommen kann, zu tragen, um die "Schneckenschrauben" (sv) zu schützen und deren vertikale Positionen beizubehalten.

15. System nach Anspruch 12, 13 oder 14, wobei die motorisierten Elemente, die die Bewegung (mm) ermöglichen, mit Hochfrequenz (RF), Bluetooth oder WI-FI ferngesteuert werden.

## Revendications

1. Système pour le chauffage et l'éclairage indirects des espaces intérieurs via réflexion des rayons de soleil à travers les portes et les fenêtres de toutes les façades d'un bâtiment, et qui est utilisé pour chauffer l'eau domestique en réfléchissant lesdits rayons vers le plancher, **caractérisé en ce qu'**il comprend;

   • les réflecteurs solaires planaires actifs de l'avant-toit (aesr) qui sont placés sur la ligne supérieure des fenêtres dans la partie de l'avant-toit du bâtiment, qui suivent le soleil en se déplaçant sur deux axes horizontal et vertical, et qui réfléchissent verticalement le rayon de soleil entrant,
   • les réflecteurs d'étage (sr) positionnés devant les fenêtres et sous le réflecteur solaire actif de l'avant-toit (aesr) horizontalement à différents angles et qui réfléchissent une partie du rayon de soleil vers l'espace intérieur et qui permettent à l'autre partie de passer verticalement.

2. Système selon la revendication 1, dans lequel les aires de surface des réflecteurs d'étage (sr) augmentent au fur et à mesure qu'ils passent des étages supérieurs aux étages inférieurs afin d'empêcher un transfert d'énergie plus faible dans les étages inférieurs en raison du rayon de soleil, qui se déplace verticalement, perdant de l'énergie dans le réflecteur de chaque étage.

3. Système selon la revendication 1 ou 2, comprenant en outre

   • les réflecteurs solaires actifs de l'avant-toit à mur rempli (aesrd) qui sont positionnés sur la ligne supérieure du mur rempli entre les fenêtres du bâtiment et qui suivent le soleil en se déplaçant sur deux axes pour réfléchir verticalement le rayon de soleil entrant,
   • "les réflecteurs de parapet à mur rempli" (pr1a) qui sont disposés au niveau du parapet sur la façade de l'étage au milieu de la hauteur du bâtiment et qui transforment le rayon de soleil entrant verticalement (sv) en un rayon de soleil horizontal de manière à permettre au rayon de soleil réfléchi verticalement par les réflecteurs solaires actifs de l'avant-toit à mur rempli (aesrd) d'être réfléchi vers les étages dans la moitié inférieure du bâtiment, et
• Les réflecteurs de parapet (pr1) entre les fenêtres qui réfléchissent verticalement le rayon de soleil (sh) provenant horizontalement du réflecteur de parapet à mur rempli (pr1a)

4. Système pour le chauffage et l'éclairage indirects des espaces intérieurs via réflexion des rayons de soleil à travers les portes et les fenêtres de toutes les façades d'un bâtiment de 15 - 18 étages, et qui est utilisé pour chauffer l'eau domestique en réfléchissant lesdits rayons vers le plancher, comprenant des "séries pour réfléchir les rayons de soleil dans les espaces intérieurs" disposés séparément pour des "groupes d'étages" composés d'environ 5-6 étages adjacents, dans lequel il comprend trois séries et dans lequel

• La première série fonctionnant pour la réflexion pour les 5-6 étages aux parties les plus basses du bâtiment comprend;

◦ "le réflecteur solaire actif de toit n° 1" (arsr1) qui est placé sur une contre-fiche sur le toit,
◦ "le réflecteur solaire stationnaire de toit n° 1" (srsr1) qui se trouve juste en dessous du "le réflecteur solaire actif de toit n° 1" (arsr1) et qui est positionné dans sa projection à un angle horizontal de 45 degrés et qui est fait de miroir,
◦ "le réflecteur solaire de l'avant-toit stationnaire n° 1" (sesr1) qui est positionné sur l'avant-toit au niveau horizontal du "le réflecteur solaire du toit stationnaire n° 1" (srsr1) et qui est fait de miroir ou d'un matériau translucide,
◦ "le réflecteur de parapet" (pr2a) qui réfléchit horizontalement le rayon de soleil (sv), qui est réfléchi verticalement en sautant les 10-12 étages supérieurs, et qui est placé en ligne avec le parapet,
◦ "le réflecteur de parapet" (pr2) qui réfléchit verticalement le rayon de soleil réfléchi horizontalement via "le réflecteur de parapet" (pr2a) vers les réflecteurs d'étage (sr) devant les 5-6 étages dans les parties inférieures du bâtiment, et qui est placé au niveau du parapet de l'étage au-dessus de ce groupe de 5-6 étages,
◦ les réflecteurs d'étage (sr) qui réfléchissent une partie du rayon de soleil (sv) réfléchi par "le réflecteur de parapet" (pr2) vers l'espace intérieur et qui permettent à l'autre partie de passer verticalement, et qui sont situés devant les fenêtres des 5-6 étages dans les parties les plus basses du bâtiment, et

• La seconde série fonctionnant pour la réflexion pour les 5-6 étages aux parties intermédiaires du bâtiment comprend;

◦ "le réflecteur solaire actif de toit n° 2" (arsr2) qui est placé sur une contre-fiche sur le toit,
◦ "le réflecteur solaire stationnaire de toit n° 2" (srsr2) qui se trouve juste en dessous du "le réflecteur solaire actif de toit n° 2" (arsr2) et qui est positionné dans sa projection à un angle horizontal de 45 degrés et qui est fait de miroir,
◦ "le réflecteur solaire de l'avant-toit stationnaire n° 2" (sesr2) qui est positionné sur l'avant-toit au niveau horizontal du "le réflecteur solaire du toit stationnaire n° 2" (srsr2) et qui est fait de miroir ou d'un matériau translucide,
◦ "le réflecteur de parapet" (pr1a) qui réfléchit horizontalement le rayon de soleil (sv), qui est réfléchi verticalement en sautant les 5-6 étages supérieurs, et qui est placé en ligne avec le parapet,
◦ "le réflecteur de parapet" (pr1) qui réfléchit verticalement le rayon de soleil réfléchi horizontalement via "le réflecteur de parapet" (pr1a) vers les réflecteurs d'étage (sr) devant les 5-6 étages dans les parties intermédiaires du bâtiment, et qui est placé au niveau du parapet de l'étage au-dessus de ce groupe de 5-6 étages,
◦ les réflecteurs d'étage (sr) qui réfléchissent une partie du rayon de soleil (sv) réfléchi par "le réflecteur de parapet" (pr1) vers l'espace intérieur et qui permettent à l'autre partie de passer verticalement, et qui sont situés devant les fenêtres des 5-6 étages dans les parties intermédiaires du bâtiment, et

• La troisième série fonctionnant pour la réflexion pour les 5-6 étages aux parties supérieures du bâtiment comprend;

◦ "le réflecteur solaire actif de toit n° 3" (arsr3) qui est placé sur une contre-fiche sur le toit,
◦ "le réflecteur solaire stationnaire de toit n° 3" (srsr3) qui se trouve juste en dessous du "le réflecteur solaire actif de toit n° 3" (arsr3) et qui est positionné dans sa projection à un angle horizontal de 45 degrés et qui est fait de miroir,

◦ "le réflecteur solaire de l'avant-toit stationnaire n° 3" (sesr3) qui est positionné sur l'avant-toit au niveau horizontal du "le réflecteur solaire du toit stationnaire n° 3" (srsr3) et qui est fait de miroir ou d'un matériau translucide,

◦ les réflecteurs d'étage (sr) qui réfléchissent une partie du rayon de soleil (sv) réfléchi par "réflecteur solaire stationnaire de toit n° 3" (srsr3) vers l'espace intérieur et qui permettent à l'autre partie de passer verticalement, et qui sont situés devant les fenêtres des 5-6 étages dans les parties supérieures du bâtiment,

5. Système pour le chauffage et l'éclairage indirects des espaces intérieurs via réflexion des rayons de soleil à travers les portes et les fenêtres de toutes les façades d'un bâtiment de 15 - 18 étages, et qui est utilisé pour chauffer l'eau domestique en réfléchissant lesdits rayons vers le plancher, comprenant des "séries pour réfléchir les rayons de soleil dans les espaces intérieurs" disposés séparément pour des "groupes d'étages" composés d'environ 5-6 étages adjacents dans lequel il comprend deux séries et dans lequel

• La première série fonctionnant pour la réflexion pour les 10-12 étages aux parties intermédiaires et parties les plus basses du bâtiment comprend;

◦ "le réflecteur solaire actif de toit n° 1" (arsr1) qui est placé sur une contre-fiche sur le toit,

◦ "le réflecteur solaire stationnaire de toit n° 1" (srsr1) qui se trouve juste en dessous du "le réflecteur solaire actif de toit n° 1" (arsr1) et qui est positionné dans sa projection à un angle horizontal de 45 degrés ou à un angle plus proche et qui est fait de miroir,

◦ "le réflecteur solaire de l'avant-toit stationnaire n° 1" (sesr1) qui est positionné sur l'avant-toit au niveau horizontal ou quasi-horizontale du "le réflecteur solaire du toit stationnaire n° 1" (srsr1) et qui est fait de miroir ou d'un matériau translucide,

◦ "le réflecteur de parapet" translucide (pr1a) qui permet à une partie du rayon de soleil (sv) de passer verticalement et qui réfléchit horizontalement une autre partie dudit rayon (sv), qui est réfléchi verticalement en sautant les 5-6 étages supérieurs, et qui est placé en ligne avec le parapet,

◦ "le réflecteur de parapet" (pr1) qui réfléchit verticalement le rayon de soleil réfléchi horizontalement via "le réflecteur de parapet" (pr1a) vers les réflecteurs d'étage (sr) devant les 5-6 étages dans les parties intermédiaires du bâtiment, et qui est placé au niveau du parapet de l'étage au-dessus de ce groupe de 5-6 étages,

◦ les réflecteurs d'étage (sr) qui réfléchissent une partie du rayon de soleil (sv) réfléchi par "le réflecteur de parapet" (pr1) vers l'espace intérieur et qui permettent à l'autre partie de passer verticalement, et qui sont situés devant les fenêtres des 5-6 étages dans les parties intermédiaires du bâtiment,

◦ "le réflecteur de parapet" (pr2a) qui réfléchit horizontalement le rayon de soleil (sv), qui est réfléchi verticalement en sautant les 10-12 étages supérieurs et passant par "le parapet réflecteur" translucide (pr1a), et qui est placé en ligne avec le parapet,

◦ "le réflecteur de parapet" (pr2) qui réfléchit verticalement le rayon de soleil réfléchi horizontalement via "le réflecteur de parapet" (pr2a) vers les réflecteurs d'étage (sr) devant les 5-6 étages dans les parties les plus basses du bâtiment, et qui est placé au niveau du parapet de l'étage au-dessus de ce groupe de 5-6 étages,

◦ les réflecteurs d'étage (sr) qui réfléchissent une partie du rayon de soleil (sv) réfléchi par "le réflecteur de parapet" (pr2) vers l'espace intérieur et qui permettent à l'autre partie de passer verticalement, et qui sont situés devant les fenêtres des 5-6 étages dans les parties les plus basses du bâtiment, et

• La seconde série fonctionnant pour la réflexion pour les 5-6 étages aux parties supérieures du bâtiment comprend;

◦ "le réflecteur solaire actif de toit n° 2" (arsr2) qui est placé sur une contre-fiche sur le toit,

◦ "le réflecteur solaire stationnaire de toit n° 2" (srsr2) qui se trouve juste en dessous du "le réflecteur solaire actif de toit n° 2" (arsr2) et qui est positionné dans sa projection à un angle horizontal de 45 degrés ou à un angle plus proche et qui est fait de miroir,

◦ "le réflecteur solaire de l'avant-toit stationnaire n° 2" (sesr2) qui est positionné sur l'avant-toit au niveau horizontal ou quasi-horizontale du "le réflecteur solaire du toit stationnaire n° 2" (srsr2) et qui est fait de miroir,

◦ les réflecteurs d'étage (sr) qui réfléchissent une partie du rayon de soleil (sv) réfléchi par "réflecteur solaire de l'avant-toit stationnaire n° 2" (srsr2) vers l'espace intérieur et permettent à l'autre partie de passer verticalement, et qui sont situés devant les fenêtres des 5-6 étages dans les parties supérieures du bâtiment.

**6.** Système pour le chauffage et l'éclairage indirects des espaces intérieurs via réflexion des rayons de soleil à travers les portes et les fenêtres de toutes les façades d'un bâtiment de 15 - 18 étages, et qui est utilisé pour chauffer l'eau domestique en réfléchissant lesdits rayons vers le plancher, dans lequel il comprend

• Système selon la revendication 1 pour la réflexion des rayons du soleil dans les espaces intérieurs des 5-6 étages supérieurs du bâtiment;
• Pour la réflexion des rayons du soleil dans les espaces intérieurs des 5-6 étages intermédiaires du bâtiment;

◦ "le réflecteur solaire actif à distance n° 1" (uasr1) qui est placé à distance du bâtiment, qui suit le soleil en se déplaçant sur deux axes horizontal et vertical, et qui réfléchit verticalement le rayon de soleil entrant,
◦ "le réflecteur à distance n° 1" (ur1) qui est situé dans la projection du "réflecteur solaire actif à distance n° 1" (uasr1), qui réfléchit le rayon de soleil verticalement via "le réflecteur solaire actif à distance n° 1" (uasr1) horizontalement ou selon un angle par rapport à l'horizon, et qui est situé à distance du bâtiment au niveau du parapet,
◦ "le réflecteur de parapet n° 1" (pr1) qui est placé au niveau du parapet de l'étage au-dessus du groupe de 5-6 étages dans la partie intermédiaire du bâtiment afin de réfléchir verticalement le rayon de soleil réfléchi via "le réflecteur à distance n° 1" (ur1) horizontalement ou selon un angle par rapport à l'horizon,
◦ les réflecteurs d'étage (sr) qui réfléchissent une partie du rayon de soleil (sv) réfléchi par "le réflecteur de parapet n° 1" (pr1) vers l'espace intérieur et qui permettent à l'autre partie de passer verticalement, et qui sont situés devant les fenêtres des 5-6 étages dans les parties intermédiaires du bâtiment,

• Pour la réflexion des rayons du soleil dans les espaces intérieurs des 5-6 étages les plus basses du bâtiment;

◦ "le réflecteur solaire actif à distance n° 2" (uasr2) qui est placé à distance du bâtiment, qui suit le soleil en se déplaçant sur deux axes horizontal et vertical, et qui réfléchit verticalement le rayon de soleil entrant,
◦ "le réflecteur à distance n° 2" (ur2) qui est situé dans la projection du "réflecteur solaire actif à distance n° 2" (uasr2), qui réfléchit le rayon de soleil verticalement via "le réflecteur solaire actif à distance n° 2" (uasr2) horizontalement ou selon un angle par rapport à l'horizon, et qui est situé à distance du bâtiment au niveau du parapet,
◦ "le réflecteur de parapet n° 2" (pr2) qui est placé au niveau du parapet de l'étage au-dessus du groupe de 5-6 étages dans la partie la plus basse du bâtiment afin de réfléchir verticalement le rayon de soleil réfléchi via "le réflecteur à distance n° 2" (ur2) horizontalement ou selon un angle par rapport à l'horizon,
◦ les réflecteurs d'étage (sr) qui réfléchissent une partie du rayon de soleil (sv) réfléchi par "le réflecteur de parapet n° 2" (pr2) vers l'espace intérieur et qui permettent à l'autre partie de passer verticalement, et qui sont situés devant les fenêtres des 5-6 étages dans les parties les plus basses du bâtiment.

**7.** Système pour le chauffage et l'éclairage indirects des espaces intérieurs via réflexion des rayons de soleil à travers les portes et les fenêtres de toutes les façades du bâtiment, et qui est utilisé pour chauffer l'eau domestique en réfléchissant lesdits rayons vers le plancher, **caractérisé en ce qu'**il comprend;

• les réflecteurs solaires de l'avant-toit conique stationnaire (ksesr) qui sont positionnés sur l'avant-toit du bâtiment au niveau supérieur des fenêtres et qui réfléchissent verticalement le rayon de soleil qui leur parvient de différentes directions verticalement,
• les réflecteurs d'étage (sr) qui sont positionnés devant les fenêtres et sous le réflecteur solaire de l'avant-toit conique stationnaire (ksesr) horizontalement à différents angles et qui réfléchissent une partie du rayon de soleil vers l'espace intérieur et qui permettent à l'autre partie de passer verticalement, et dans lequel les réflecteurs solaires de l'avant-toit conique stationnaire (ksesr) comprennent;
• n parties (p1, p2, p3, p4.....pn) disposées à divers angles horizontaux en fonction des angles d'élévation d'incidence (alpha) des rayons du soleil, afin de réfléchir les rayons du soleil (s1, s2, s3, s4.....sn) arrivant à différents angles d'élévation (alpha1, alpha2, alpha3, alpha 4 ...... alpha n) vers des directions verticales;
• des panneaux (pn) en forme de demi-rondelles de peau d'orange, formés en combinant les parties (p1, p2, p3, p4.....pn) à leurs bords horizontaux de manière empilée sous divers angles; et sont formés comme une quart de sphère (quart de dôme) de manière à permettre aux rayons de soleil (s1......sn) avec différents angles d'azimut horizontaux d'arriver perpendiculairement aux panneaux (pn1......pn) et donc aux n parties (p1.......pn) formant les panneaux (pn).

**8.** Système selon la revendication 7, dans lequel les réflecteurs de l'avant-toit conique stationnaire (ksesr) sont formés comme;

EP 3 384 210 B1

- des doubles panneaux (pn) qui peuvent être disposés les uns sur les autres avec des espaces, ou
- "le réflecteur solaire de l'avant-toit conique stationnaire A" (ksesr-A) qui est obtenu en disposant des panneaux rectangulaires inclinés (pna, pnb, pnc, pnd, pne, pnb1, pnc1, pnd1, pne1), dont les axes convergent au point central (m), avec une différence d'élévation (h) entre eux et avec certaines distances entre eux dans une forme semblable à un quart de dôme, ou
- "le réflecteur solaire de l'avant-toit conique stationnaire B" (ksesr-B) qui est obtenu en disposant neuf panneaux trapézoïdaux inclinés, dont les axes convergent au point central (m), côte à côte comme un quart de dôme, ou
- "le réflecteur solaire de l'avant-toit conique stationnaire C" (ksesr-C) qui est obtenu en plaçant un panneau trapézoïdal incliné, dont les axes convergent au point central (m), entre deux panneaux rectangulaires inclinés, dont les axes convergent également au point central (m); qui comprend des panneaux (pn1, pn2, pn3, pn4, pn5, pn6, pn7, pn8, pn9) et qui est similaire à un quart de dôme, ou
- "le réflecteur solaire de l'avant-toit conique stationnaire B-C" (ksesr-B-C) qui est obtenu en plaçant "un réflecteur solaire de l'avant-toit conique stationnaire C" (ksesr-C), dont les axes convergent au point central (m), sur "un réflecteur solaire de l'avant-toit conique stationnaire B" (ksesr-B), dont les axes convergent également au point central (m), avec une certaine différence d'altitude (h) et avec un certain espace (ar) entre eux, ou
- "le réflecteur solaire de l'avant-toit conique stationnaire D" (ksesr-D) qui est obtenu en agrandissant des panneaux rectangulaires pour les transformer en trapèzes et en disposant un panneau supérieur partiellement au-dessus d'un panneau inférieur.

9. Système selon l'une quelconque des revendications précédentes, dans lequel les réflecteurs d'étage (sr) sont **des réflecteurs (srt) disposés pour réfléchir le rayon de soleil vers** le **plafond de l'espace intérieur ou des réflecteurs (srz) disposés pour réfléchir le rayon de soleil vers le plancher de l'espace intérieur.**

10. Système selon l'une quelconque des revendications précédentes, dans lequel, les réflecteurs solaires de l'avant-toit conique stationnaire (ksesr), les réflecteurs solaires de l'avant-toit actif (aesr), les réflecteurs solaires de l'avant-toit stationnaire (sesr), "les réflecteurs solaires actifs de toit n° 1, 2 et 3" (arsr1, arsr2, arsr3), "les réflecteurs solaires stationnaire de toits n° 1, 2 et 3" (srsr1) ou "les réflecteurs de parapet n° 1 et 2" (pr1 et pr2) sont faits d'un matériau translucide multicouche à une seule couche ou miroir, ou **d'un matériau translucide à mono ou multicouches, dans lequel un miroir ou une batterie solaire photovoltaïque peut être placé à l'arrière comme couche supplémentaire, ou des matériaux translucides qui sont tous adjacents les uns aux autres ou qui sont placés avec des espaces entre eux; ou dans lequel lesdits réflecteurs comprennent une ou plusieurs couches, ou comprennent au moins deux couches, la couche la plus arrière étant un miroir ou une batterie solaire photovoltaïque, ou des nombreux matériaux translucides et réfléchissants qui sont côte à côte et/ou l'un sous l'autre sans être monolithiques.**

11. Système selon l'une quelconque des revendications précédentes, dans lequel il comprend un chauffe-eau (SI) situé sous les réflecteurs d'étage (sr) et sur le sol.

12. Système selon l'une quelconque des revendications précédentes, par des temps où il n'y a pas de rayons de soleil,

- 
- pendant la période comprise entre l'heure où le soleil se couche le soir et celle où il se lève le matin, quand aucun rayon de soleil n'arrive sur la terre,
- par des temps orageux et des vents extrêmes,
- lorsqu'il n'est pas souhaitable que les rayons de soleil pénètrent dans les espaces intérieurs, pour élever les réflecteurs des étages (sr) au-dessus pour qu'ils ne soient pas vus devant la fenêtre lorsqu'on regarde à l'extérieur depuis l'espace intérieur ou pour réfléchir les rayons de soleil sur le plancher de l'espace intérieur, et pour disposer lesdits réflecteurs (sr) en les plaçant sur le verre de la fenêtre;
- il comprend des "vis sans fin" (sv) qui sont disposées verticalement des deux côtés des réflecteurs d'étage (sr) à une certaine distance de la façade du bâtiment et qui sont reliés à ladite façade de telle sorte qu'ils effectuent la rotation et les actions de transport à certains points,
- comprend également des éléments de déplacement manuels ou motorisés (mm) qui permettent le déplacement et qui sont reliés aux extrémités des vis (sv) par les parties supérieures ou inférieures des vis sans fin (sv), séparément ou à partir d'un seul centre;
- il porte le réflecteur d'étage (sr) qui se trouve à un angle de 45 degrés et dans une position permettant de réfléchir le rayon de soleil dans l'espace intérieur, en accrochant ledit réflecteur à la vis sans fin (sv) aux points d'articulation (sra) aux deux extrémités du bord horizontal inférieur,
- il a, sur le bord supérieur, le réflecteur d'étage (sr) relié à deux "tiges diagonales" (dc) car il est joint à un certain point (sro) des deux bords latéraux,
• il a, les autres extrémités de ces "tiges diagonales" (dc) reliées à la "vis sans fin" (sv) de façon articulée aux "points supérieurs de la tige diagonale" (dcu),
• et il a donc "le réflecteur d'étage" (sr) relié à la vis sans fin (sv) en quatre points.

13. Système selon la revendication 12, dans lequel il y a des "pièces de connexion coulissantes en V" (V kbp), reliées de manière articulée aux "points de bord inférieur du réflecteur d'étage" (sra), et des "pièces de connexion coulissantes en V" (V kbp), reliées de façon articulée aux "points supérieurs de la tige diagonale" (dcu) de la tige diagonale; qui se déplacent de haut en bas sur "les vis sans fin" (sv) montées verticalement à une certaine distance de la façade du bâtiment, et qui se déplacent également de haut en bas dans les "profils verticaux" (D pro) montés verticalement sur la façade du bâtiment, sur les côtés des réflecteurs des étages.

14. Système selon la revendication 13, dans lequel des "pièces de connexion coulissantes en V" (V kbp), reliées de manière articulée aux "points de bord inférieur du réflecteur d'étage" (sra), et aux "points supérieurs de la tige diagonale" (dcu), sont disposés dans les "profils D" (D pro) avec un profil V dont les extrémités pénètrent dans les fentes des "profils D" de manière à supporter la charge du vent latéral qui peut venir de n'importe quelle direction, afin de protéger les "vis sans fin" (sv) et de maintenir leur position verticale.

15. Système selon la revendication 12, 13 ou 14 dans lequel les éléments motorisés permettant le mouvement (mm) sont commandés à distance par radiofréquence (RF), Bluetooth ou WI-FI.

FIGURE 1

FIGURE 2

FIGURE 3

FIGURE 4

late morning -mid
afternoon
afternoon

s(αd)          s(αd)          s3        s2(α2)
                              (α3)
                                              s1(α1)

p3                                        evening (morning)

k2      58°

γ=170°          k

p2

k1      68°

k

p1      γ=170°                pna

78°

h

f

② SECTION B-B

pnd                4
3              pnd              pne

2 pnc

pnb                            sb (evening)
                               sb = sa

1

B                              B

PLAN

pna                            sg (afternoon)

①                             m    sg=so

pnb1                           sd (morning)

pnc1                           sd = ss

pnd1    pne1

FIGURE 5  (ksesr-A)

60

FIGURE 6

FIGURE 7

FIGURE 8

FIGURE 9

FIGURE 10

⑤ SECTION A - A

ROOF PLAN

FIGURE 11

FIGURE 12

SECTION

STOREY PLAN

ROOF PLAN

FIGURE 13

FIGURE 14

FIGURE 15

FIGURE 16

arsrs

s1

$\alpha 4 = 15°$

inclined roof

sesr2

sh

sv

sesr1

sv

srsr

+0.00

sv

sv

sr

sh

① SECTION

sd

H

H

sh

aesrs

m

sr

PLAN

m

aesrs

a

sd

x

a

sv

sh

sr

② SECTION H-H

FIGURE 17

FIGURE 18

FIGURE 19

aesro

sg

sg

ascro

sg

① 1

aesra

sb

sb

② 2

FIGURE 20

FIGURE 21

FIGURE 22

FIGURE 23

FIGURE 24

FIGURE 25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 251162 A

- US 1632254 A